# EUROPEAN PATENT APPLICATION

(11) **EP 1 324 242 A1**
(43) Date of publication of application: **02.07.2003**
(21) Application number: 01972618.1
(22) Date of filing: 28.09.2001
(51) Int. Cl.: G06F 17/60, G06F 17/50

(54) **COMMODITY DESIGN CREATING AND PROCESSING SYSTEM**

(30) Priority: 28.09.2000 JP 2000296951; 06.10.2000 JP 2000308365; 27.09.2001 JP 2001297976
(71) Applicant: Citizen Watch Co. Ltd., Tokyo 188-8511 (JP)
(72) Inventor: IKEDA, Kenji, C/O CITIZEN WATCH CO., LTD., Nishitokyo-shi, Tokyo 188-8511 (JP); KANO, Hayao, C/O CITIZEN WATCH CO., LTD., Nishitokyo-shi, Tokyo 188-8511 (JP); KUSHIDA, Hachiro, C/O CITIZEN WATCH CO., LTD., Nishitokyo-shi, Tokyo 188-8511 (JP); HANAI, Kenji, C/O CITIZEN WATCH CO., LTD., Nishitokyo-shi, Tokyo 188-8511 (JP); HORI, Akihiro, C/O CITIZEN WATCH CO., LTD., Nishitokyo-shi, Tokyo 188-8511 (JP); SAKITA, Eiichi, C/O CITIZEN WATCH CO., LTD., Nishitokyo-shi, Tokyo 188-8511 (JP); ISHIKAWA, Hiroyuki, C/O CITIZEN WATCH CO., LTD., Nishitokyo-shi, Tokyo 188-8511 (JP); SUGA, Kouichi, C/O CITIZEN WATCH CO., LTD., Nishitokyo-shi, Tokyo 188-8511 (JP); SANO, Mamoru, C/O CITIZEN WATCH CO., LTD., Nishitokyo-shi, Tokyo 188-8511 (JP); YAMAUCHI, Kaoru, C/O CITIZEN TRADING CO., LTD., Nakano-ku, Tokyo 164-8726 (JP); HARASAKI, Hiroyuki, C/O CITIZEN WATCH CO., LTD., Nishitokyo-shi, Tokyo 188-8511 (JP); HISADA, Shiro, C/O CITIZEN WATCH CO., LTD., Nishitokyo-shi, Tokyo 188-8511 (JP)
(74) Representative: Patentanwälte Ruff, Wilhelm, Beier, Dauster & Partner
(86) International application number: JP0108591
(87) International publication number: WO02027590

(57) **Abstract**

The present invention provides a design-for-product creating system and a design-for-product processing system. In the design-for-product creating system, a product vendor provides a user with a product design program, which enables the user to view virtual products that are graphics expressing designs created by the product vendor, and virtual part data representing virtual parts that constitute each virtual product. The user downloads the product design program and digital part data into his/her own computer, uniquely designs a product or part in a desired manner, and asks the product vendor over the Internet or the like to manufacture a product or part of the unique design. The product vendor in turn manufactures a product or part according to the desired unique design for a product or part provided by the user, and supplies the product or part of the unique design to the user. In the design-for-product processing system, the product vendor prompts the user to determine whether he/she will place an order for a product or part of the unique design created using the design-for-product creating system, whether he/she will have the product or part of the unique design sold on commission by the product vendor, or whether he/she will have the product or part of the unique design auctioned by the product vendor. The user can select at least one of the options.

## Description

### Technical Field

The present invention relates to a design-for-product creating and processing system. More particularly, the present invention is concerned with a system (referred to as a design-for-product creating system) having a plurality of users connected to a product (for example, watch) vendor over an information communicating means, for example, the Internet. Herein, a user who wants to design uses a product design program and part design data, which are provided by the product vendor, to uniquely design a product (or uniquely design a part of the product). The user then asks the product vendor over the Internet to manufacture a product of the unique design.

Moreover, the present invention is concerned with a system (referred to as a design-for-product processing system) in which under predetermined conditions, on which a user who wants to design and a product vendor have agreed, the user can select whether he/she will place an order for a product (or a part) of a unique design created by the user, which is actually manufactured by the product vendor, whether he/she will have the product of the unique design sold on commission by the product vendor, or whether he/she will have the product of the unique design auctioned by the product vendor.

### Background Art

The present applicant has already proposed a design-for-product creating system and put it to practical use (for example, a National Application under PCT No. JP97-03625 filed on October 8th, 1997). In the design-for-product creating system, a product vendor provides a user, who wants to design, with a group of virtual parts that are computer graphics and a program that permits the user to combine virtual parts. The user uses his/her own computer to select desired virtual parts, combine the virtual parts, and thus uniquely design a product, for example, a wristwatch in line with his/her likes. The user then has a product of the unique design manufactured by the product vendor.

The above system satisfies the user by the fact that the user, alone in the world, owns a product of his/her intended unique design or allows the user to utilize the product of the unique design as a present. The system has therefore become popular. Manufacture and sale based on the system has the advantage over mass-production and sale.

However, in the foregoing conventional system, although a user can select virtual parts and integrates a two-dimensional graphic the user has drawn with virtual parts, the user cannot modify the shapes of virtual parts provided by a product vendor in line with his/her likes. This is because the proposed system displays virtual parts on the screen of a computer in the form of two-dimensional graphics, but cannot display the virtual parts three-dimensionally.

Moreover, the proposed system permits users to select and integrate virtual parts. However, when a user wants to design a product to be worn on a human body, that is, a wristwatch, a bracelet, or a necklace, the user can merely see a screen image but cannot grasp how well the product fits the user when it is actually worn. For example, if the product is a wristwatch, the user will not have a feeling of wearing the wristwatch on his/her wrist, for example, will not have a feeling that the wristwatch is too large or small, too tight or loose, or too heavy or too light.

Furthermore, although the conventional design-for-product creating system permits users to purchase a product of a unique design created by the user himself/herself, the product of the unique design is not sold to a third person other than the user. However, many users who have uniquely designed products have demanded that a product vendor should implement a system which enables as many people as possible to purchase the products of the unique designs. Moreover, consignment sale currently performed on the Internet is intended to sell existing products. However, there is no system that enables consignment sale or auction of a product or part of a user-created unique design that is presented as a graphic.

### Disclosure of Invention

Accordingly, the first object of the present invention is to enable a user who wants to design to change by himself/herself the shape of a certain virtual part in line with the user's likes. More particularly, the first object of the present invention is to provide a design-for-product creating and processing system that permits a user to use his/her own computer to design or change the shape of the certain virtual part with the help of a three-dimensional part design program and digital part data which are supplied from a product vendor.

The second object of the present invention is to provide a design-for-product creating and processing system that allows a product vendor to sell on commission a product or part of a unique design created by a user to other users under predetermined conditions, or allows the product vendor to auction the product or part of the unique design. In the subsequent description, the term "product" signifies a finished article, and the term "part" signifies a part of the finished article.

In order to accomplish the above objects, the design-for-product creating and processing system consists of a design-for-product creating system in which the first aspect of the present invention is implemented, and a design-for-product processing system in which the second aspect of the present invention is implemented.

In the design-for-product creating system in which the first aspect of the present invention is implemented, a product vendor provides a user with a product design program, which enables users to view virtual products that are graphics expressing designs created by the product vendor, and virtual part data that specifies a virtual part of each virtual product. The user downloads the product design program and digital part data into his/her own computer, creates a desired unique design for a product, and asks the product vendor over the Internet to manufacture a product of the unique design. The product vendor in turn manufactures a product according to the desired unique design provided by the user, and supplies the product to the user.

In this case, the product design program includes a three-dimensional part design program that permits a user to three-dimensionally change the shape of a product into a desired shape. The virtual part data specifies at least one virtual part whose shape can be changed by a user. The user can three-dimensionally change at least part of the shape of the part into a desired shape with the help of the three-dimensional part design program and the virtual part data.

Moreover, in a design-for-product processing system in which the second aspect of the present invention is implemented, a product vendor prompts a user who wants to design to determine whether the user places an order for a product or part of a unique design the user has produced with the help of the design-for-product creating system, or whether the user has the product or part of the unique design sold on commission or auctioned by the product vendor. The user who wants to design can select any of the options.

The product vendor can encourage users other than the user who wants to design to place an order for the product or part of the unique design, which the product vendor sells on commission, over the Internet.

Furthermore, the product vendor can encourage users other than the user who wants to design to bid for the product or part of the unique design, which the product vendor auctions, over the Internet.

Incidentally, the term "product vendor" signifies not only one product vendor but also a plurality of product vendors. For example, a trading firm A may release software to consumers, and a maker B may manufacture products. In this case, both the trading firm A and maker B refer to the "product vendor." Otherwise, if the trading firm A entrusts provision of virtual part data to an agency C, the agency C is included in the product vendor. Moreover, the maker B may include a plurality of makers.

Moreover, the term "user" signifies not only one user but also a plurality of users. For example, a user A may ask an agent B to create a unique design for a product, and may purchase a product manufactured based on the unique design created by the agent B. In this case, both the user A and agent B refer to the "user."

Moreover, the term "product" signifies any product as long as a consumer can select parts as the components of the product. For example, the product includes a suit, a necktie or any other accessory, an ornament such as a necklace or a ring, a motorcar, a bicycle, and furniture. Otherwise, consumers may be permitted to uniquely design the plan of a house or the interior thereof. Otherwise, consumers may be permitted to uniquely design audio equipment including stereophonic equipment and an amplifier. According to the present embodiment, the product refers to a wristwatch as described below.

Furthermore, the term "information communicating means" includes various types of existing means that enable communication of information to consumers. Specifically, the information communicating means includes advertisement using a newspaper or a magazine, advertisement using the interior of a train or bus, broadcast of a commercial on television or radio, manual transfer of information by mail or telephone, and the Internet.

### Brief Description of the Drawings

Fig. 1 shows the configuration of a design-for-product creating system in accordance with the first aspect of the present invention;
Fig. 2 shows the configuration of a server shown in Fig. 1;
Fig. 3 shows the organization of a product manufacturing division shown in Fig. 1;
Fig. 4 shows the structure of a three-dimensional part design program;
Fig. 5 is a flowchart describing an example of actions of a user to be performed for designing;
Fig. 6 is a flowchart describing an example of actions of a user to be performed for parts selection and combination;
Fig. 7 is a flowchart describing an example of actions of a watch vendor to be performed for manufacturing;
Fig. 8 is a flowchart (part 1) describing actions of a user to be performed for watchcase designing;
Fig. 9 is a flowchart (part 2) describing actions of a user to be performed for watchcase designing;
Fig. 10A and Fig. 10B are explanatory diagrams concerning basic watchcase data;
Fig. 11 shows an example of basic watchcase data;
Fig. 12A and Fig. 12B are explanatory diagrams showing drawing enabled and disabled areas that are rendered based on basic watchcase data;
Fig. 13A and Fig. 13B are explanatory diagrams concerning dimensions with which a minimum drawing interface is defined;
Fig. 14 shows the detailed organization of a CAD/CAM manufacturing department shown in Fig. 3;
Fig. 15A and Fig. 15B are explanatory diagrams concerning an example of a shape changed by a user;
Fig. 16 is an explanatory diagram concerning a process followed after a user has changed the shape of legs of a watchcase;
Fig. 17 shows a structure that includes a rotational bezel whose shape has been changed by a user;
Fig. 18 is a flowchart (part 1) describing a sequence of manipulating three-dimensional wrist data according to a three-dimensional wrist modeling program;
Fig. 19 is a flowchart (part 2) describing the sequence of manipulating three-dimensional wrist data according to the three-dimensional wrist modeling program;
Fig. 20 is a flowchart (part 1) describing a sequence of band length adjustment;
Fig. 21 is a flowchart (part 2) describing the sequence of band length adjustment;
Fig. 22 is a flowchart describing a sequence of wristwatch weight indication;
Fig. 23 shows machines required for inscribing a wristwatch;
Fig. 24 is a flowchart describing an example of actions of a user to be performed for inscription setting;
Fig. 25 shows a main menu listing primary options available for drawing a wristwatch graphic;
Fig. 26 shows a screen image presenting a wristwatch graphic which a user wants to design;
Fig. 27 shows a wrist size designation menu;
Fig. 28 shows a screen image presenting a user's wrist graphic;
Fig. 29 shows a watchcase designing menu listing programs that assist in designing a watchcase of a wristwatch;
Fig. 30 shows a screen image displayed according to a selected three-dimensional design program;
Fig. 31 shows a screen image presenting a watchcase graphic of a user-created design;
Fig. 32 shows a screen image presenting the watchcase graphic shown in Fig. 31 together with a wrist graphic;
Fig. 33 shows a screen image displayed when an inscription is formed on the top of a watchcase;
Fig. 34 shows a screen image displayed when an inscription is formed on the top of a watchcase;
Fig. 35 shows a parts selection and combination menu listing programs;
Fig. 36 shows a screen image listing parts other than a watchcase while presenting a watchcase graphic;
Fig. 37 shows a screen image presenting a watchcase graphic combined with a selected dial graphic;
Fig. 38 shows a screen image presenting a completed wristwatch graphic combined with a wrist graphic;
Fig. 39 shows a band length adjustment menu;
Fig. 40 shows a screen image presenting a band length adjustment menu together with a wristwatch graphic and a wrist graphic;
Fig. 41 shows a screen image presenting a band length adjustment menu together with a wristwatch graphic having the number of pieces adjusted;
Fig. 42 shows a wristwatch weight calculation menu;
Fig. 43 shows a wristwatch ordering menu;
Fig. 44 shows a chat room menu screen image listing names permitted to exchange information;
Fig. 45 shows a screen image displayed after a name is designated by selecting an option listed in the menu shown in Fig. 44;
Fig. 46 shows the configuration of a design-for-product processing system in accordance with the second aspect of the present invention;
Fig. 47 is a flowchart describing a basic sequence to be performed by the design-for-product processing system;
Fig. 48 shows the software configuration of a server installed in a watch vendor;
Fig. 49 is an explanatory diagram showing structures of consignment sale and auction-related data;
Fig. 50 is a flowchart describing actions of a designer to be performed for consignment sale;
Fig. 51 is a flowchart describing actions of a designer to be performed for auction;
Fig. 52 is a flowchart (part 1) describing actions of a buyer to be performed for consignment sale;
Fig. 53 is a flowchart (part 2) describing actions of a buyer to be performed for consignment sale;
Fig. 54 is a flowchart (part 3) describing actions of a buyer to be performed for consignment sale;
Fig. 55 is an explanatory diagram concerning order, reservation, and bid data;
Fig. 56 is a flowchart (part 1) describing actions of a buyer to be performed for auction;
Fig. 57 is a flowchart (part 2) describing actions of a buyer to be performed for auction;
Fig. 58 is an explanatory diagram concerning bid data;
Fig. 59 is a flowchart (part 1) describing a sequence to be performed for reservation;
Fig. 60 is a flowchart (part 2) describing a sequence to be performed for reservation;
Fig. 61 is a flowchart describing actions of a watch vendor to be performed for manufacture and sale of a product the watch vendor sells on commission;
Fig. 62 is a flowchart (part 1) describing actions of a watch vendor to be performed for manufacture and sale of a product the watch vendor auctions;
Fig. 63 is a flowchart (part 2) describing actions of a watch vendor to be performed for manufacture and sale of a product the watch vendor auctions;
Fig. 64 shows an order, consignment sale, or auction selection menu to be displayed on a user's personal computer;
Fig. 65 shows a purchase or auction selection menu to be displayed on a buyer's personal computer;
Fig. 66 shows a consignment sale designation menu to be displayed on a buyer's personal computer according to the present invention;
Fig. 67 shows an ordered quantity designation menu to be displayed when an option "Designating conditions for order" is clicked in the menu shown in Fig. 66;
Fig. 68 shows a screen image to be displayed when an option "Designating auction" is clicked in the menu shown in Fig. 65;
Fig. 69 shows an auctioned quantity designation menu to be displayed when an option "Designating conditions for auction" is clicked in the screen image shown in Fig. 68;
Fig. 70 shows a screen image enabling a designer to select part graphics needed to complete a wristwatch graphic;
Fig. 71 shows a practical example of a wristwatch part graphic selection screen image;
Fig. 72 shows another practical example of the wristwatch part graphic selection screen image;
Fig. 73A and Fig. 73B show still another practical example of the wristwatch part graphic selection screen image;
Fig. 74 shows still another practical example of the wristwatch part graphic selection screen image;
Fig. 75 shows a consignment sale screen image (part 1);
Fig. 76 shows a consignment sale screen image (part 2);
Fig. 77 shows an auction screen image;
Fig. 78 is an explanatory diagram concerning a manufacturing method according to which a watch vendor prints an image on a dial and inscribes a message;
Fig. 79 is an explanatory diagram (part 1) showing a process according to which a manufacturing department in the watch vendor bonds metallic time lettering;
Fig. 80 is an explanatory diagram (part 2) showing a process according to which the manufacturing department in the watch vendor bonds metallic time lettering;
Fig. 81 shows screen images enabling consignment sale or auction after creating a design is completed;
Fig. 82 shows a screen image enabling selection of a dial graphic alone;
Fig. 83 shows a screen image enabling selection of a wristwatch graphic and a dial graphic;
Fig. 84 shows a screen image enabling selection of a part that will be designed first;
Fig. 85 is a flowchart describing actions to be performed by a user (designer);
Fig. 86 shows a screen image enabling selection of part graphics;
Fig. 87 shows a screen image presenting part graphics that express parts to be sold on commission;
Fig. 88 shows a screen image enabling purchase of a part;
Fig. 89 shows a screen image presenting images to be inscribed on a dial and being displayed when a dial is designated in a part selection menu;
Fig. 90 is a flowchart describing actions to be performed by a buyer;
Fig. 91 shows a screen image presenting wristwatch graphics that express wristwatches to be sold on commission; and
Fig. 92 is a flowchart describing a sequence of determining a period during which a product or part graphic appears in a page or a screen image.

### Reference Numerals

- 1 to n:: user's personal computer
- N:: information communicating means
- S:: product (watch) vendor
- M:: ordered quantity
- N:: largest sales quantity per month
- n:: cumulative quantity ordered on that month
- P:: bid
- H:: highest bidding price

### Best Mode for Carrying Out the Invention

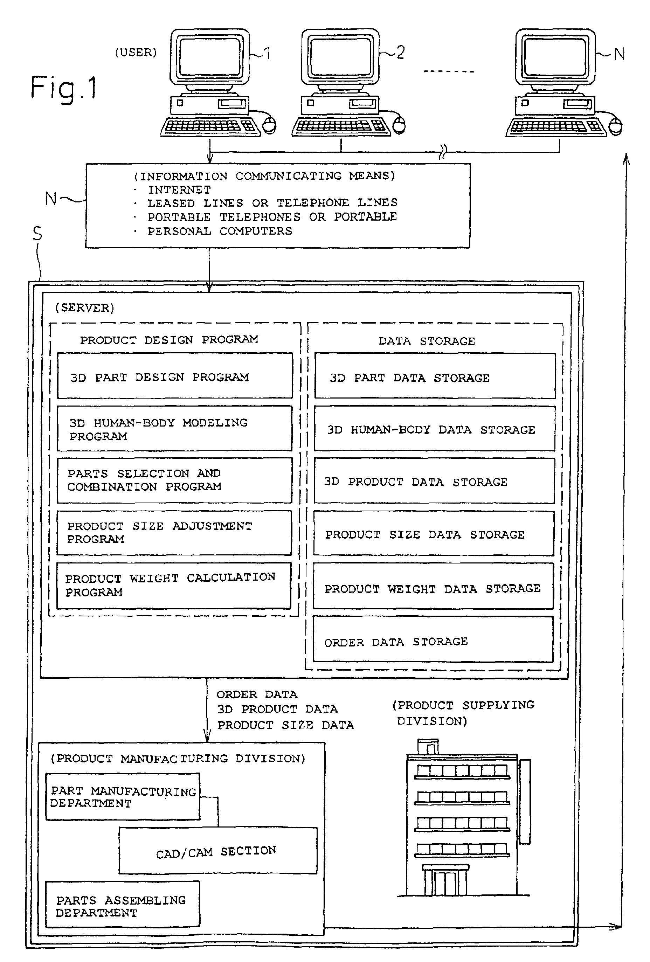

Fig. 1 shows the configuration of a design-for-product creating system in accordance with the first aspect of the present invention. Personal computers 1 to n owned by a plurality of users are connected to a server computer installed at a product (for example, watch) vendor S over an information communicating means N, that is, the Internet, leased lines, telephone lines, portable telephones, or portable personal computers.

As illustrated, the server has a product design program and a data storage device. The product design program includes a three-dimensional part design program, a three-dimensional human-body modeling program, a parts selection and combination program, a product size adjustment program, and a product weight calculation program. The data storage device includes a three-dimensional part data storage unit, a three-dimensional human-body data storage unit, a three-dimensional product data storage unit, a product size data storage unit, a product weight data storage unit, and an order data storage unit.

Moreover, a CAD/CAM system is installed at the product vendor and connected to the server. Moreover, a product manufacturing division for manufacturing a product in response to an order placed by a user is organized. Also organized is a product supplying division that delivers a manufactured product to the user.

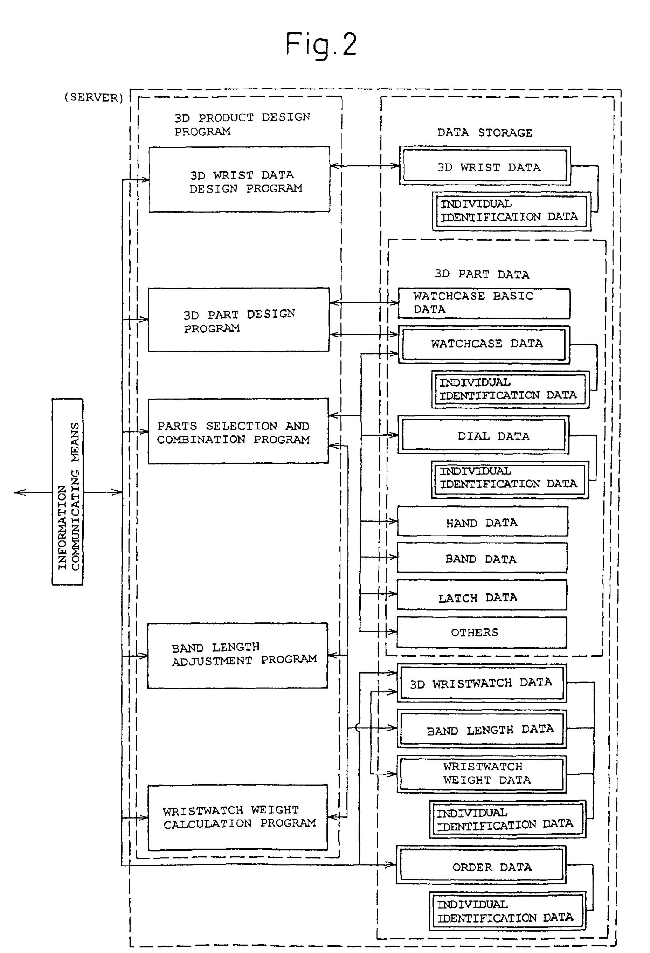

Fig. 2 shows the detailed configuration of the server shown in Fig. 1. The configuration is applicable to the case where the product is a wristwatch. As illustrated, the product design program includes a three-dimensional wrist data design program, a three-dimensional part design program, a parts selection and combination program, a band length adjustment program, and a wristwatch weight calculation program.

In the data storage device, three-dimensional wrist data, individual identification data appended to the three-dimensional wrist data, various three-dimensional part data items, three-dimensional wristwatch data, band length data, wristwatch weight data, and order data are stored.

Furthermore, the three-dimensional part data includes basic watchcase data, watchcase data, dial data, hand data, band data, latch data, and so on. The watchcase data and dial data each include individual identification data.

The three-dimensional wristwatch data, band length data, wristwatch weight data, and order data each include individual identification data.

As indicated with arrows, each program is associated with relevant data.

Now, the data items will be described below.

To begin with, the basic watchcase data is produced using the three-dimensional part design program stored in the server. If data is incompatible among a plurality of three-dimensional part design programs having different specifications and residing in the server, basic watchcase data items produced by the respective three-dimensional part design programs are stored in the server. In other words, if the three-dimensional part design programs A and B are available, a group A of basic watchcase data items A1, A2, etc., and An that are produced by the three-dimensional part design program A and a group of basic watchcase data items B1, B2, etc. produced by the three-dimensional part design program B are stored in the server. The basic watchcase data items belonging to the group A are different from one another in terms of the dimensions of a drawing enabled area and those of a drawing disabled area. If a larger number of three-dimensional part design programs is made available, groups of basic watchcase data items produced by the respective programs are stored in the server. Consequently, whichever the plurality of three-dimensional part design programs a user selects, three-dimensional part data capable of being manipulated by the selected three-dimensional part design program is stored in the server.

Next, the hand data, dial data, band data, latch data, and so on will be described below. The three-dimensional part data items represent three-dimensional part graphics whose three-dimensional shapes cannot be designed by users. The three-dimensional part data items are produced by the three-dimensional part design programs residing in the server. If data is incompatible among the plurality of three-dimensional part design programs having different specifications, three-dimensional part data items produced by the three-dimensional part design programs are stored in the server. Specifically, if the three-dimensional part design programs A and B are made available, a group A of three-dimensional part data items produced by the three-dimensional part design program A (hand data A, dial data A, band data A, and latch data A), and a group b of three-dimensional part data items produced by the three-dimensional part design program B (hand data B and others) are stored in the server. If a larger number of three-dimensional part design programs is made available, groups of three-dimensional part data items produced by the respective three-dimensional part design programs are stored. Consequently, whichever of the plurality of three-dimensional part design programs a user selects, three-dimensional data items capable of being manipulated by the selected three-dimensional part design program are stored in the server.

The three-dimensional part graphics whose three-dimensional shapes cannot be designed by users are preferably represented by a group of part data items that are different from one another in terms of specifications including a shape and a tone. Specifically, a group of dial data items A produced by the three-dimensional designing program A includes dial data items A1, A2, etc., and An representing different specifications, and stored in the server installed at the watch vendor. Likewise, a group of band data items A includes band data items A1, A2, etc., and An representing different specifications, and stored in the server installed at the watch vendor. Thus, the groups of three-dimensional part data items representing three-dimensional part graphics whose three-dimensional shapes cannot be designed by users are preferably stored so that a user can select a part graphic, of which specifications match the user's likes, from among a plurality of part graphics having different specifications. Consequently, a user can select a desired part graphic in the same manner irrespective of whichever of the plurality of three-dimensional part design programs is selected.

Assuming that a product to be designed is a wristwatch, miscellaneous data include data items representing minor part graphics that express minor parts of a wristwatch, such as, a crown, a pushbutton, a clasp, and a wrapping. Like the dial and band, a plurality of part graphics expressing different specifications may be made available for the minor parts. Users can have a user-tailored message inscribed on a dial, have a user-tailored illustration or pattern drawn on the dial, or have a photograph, which is read using a scanner, printed on the dial. In this case, the dial data is stored as user-specific data together with individual identification data in the server installed at the watch vendor.

Furthermore, the individual identification data is appended to user-specific data and serves as an identifier with which a user concerned is identified. For example, the individual identification data is utilized in order to retrieve data concerning a specified user from the server. The individual identification data specifies, for example, a user's name and a password.

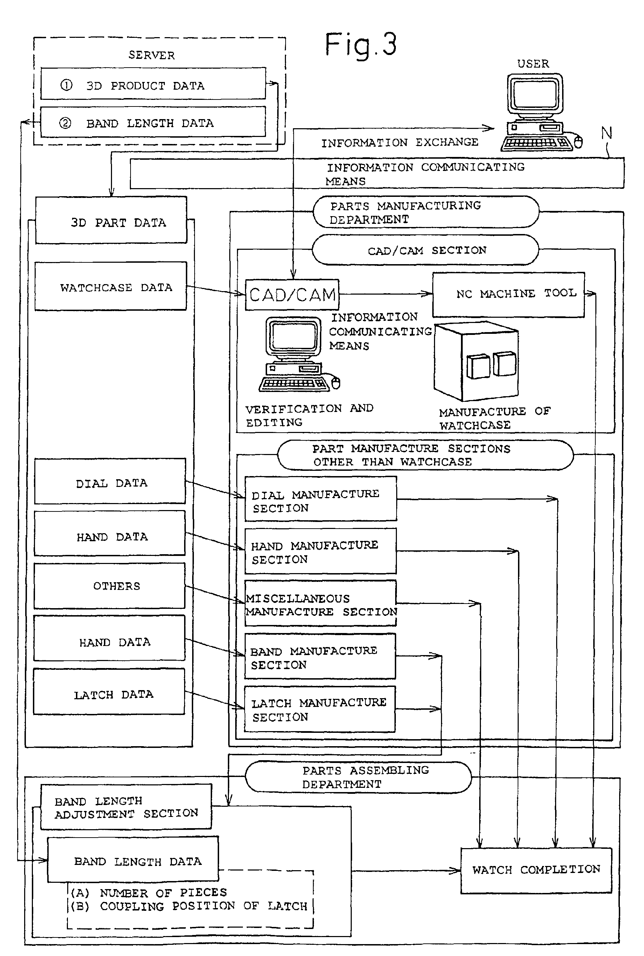

Fig. 3 shows the detailed organization of the product manufacturing division shown in Fig. 1. The product manufacturing division is broadly divided into a parts manufacturing department and a parts assembling department. The parts manufacturing department is divided into a CAD/CAM section and other part manufacture sections for manufacturing parts other than a watchcase. Moreover, the parts assembling department includes a band length adjustment section.

The parts manufacturing department receives three-dimensional part data items from the server, and manufactures parts according to the received data items. Moreover, band length data fetched from the server is transferred to the parts assembling department and used to adjust the length of a band.

A CAD/CAM system installed at the CAD/CAM section of the parts manufacturing department is connected to users' computers over the Internet or the like. The CAD/CAM system is also connected to the server so that the CAD/CAM system can fetch watchcase data that is three-dimensional part data. This is because a part whose shape can be changed by a user is only the watchcase in the present embodiment. Needless to say, if users are allowed to change the shapes of any parts other than the watchcase, the part data items are transferred to the CAD/CAM system.

The CAD/CAM system is connected to a numerical control (NC) machine tool over a communication line so that a watchcase will be machined to have a user-desired shape.

Moreover, a part manufacture section in charge of manufacturing any part other than a watchcase manufactures an associated part or supplies a stock article. In other words, a dial manufacture section manufactures a dial according to dial data, a hand manufacture section manufactures hands according to hand data, a band manufacture section manufactures a band according to band data, and a latch manufacture section manufactures a latch according to latch data. Furthermore, other manufacturing sections manufacture any other parts.

The parts assembling department adjusts the number of pieces and the position of a latch according to band length data and thus machines a band so that the band will have a user-desired length. Furthermore, a watchcase machined by the NC machine tool installed at the CAD/CAM section, parts manufactured at the part manufacture sections other than the section for manufacturing a watchcase, and a band whose length has been adjusted, are collected and assembled to complete a wristwatch for which a user has placed an order.

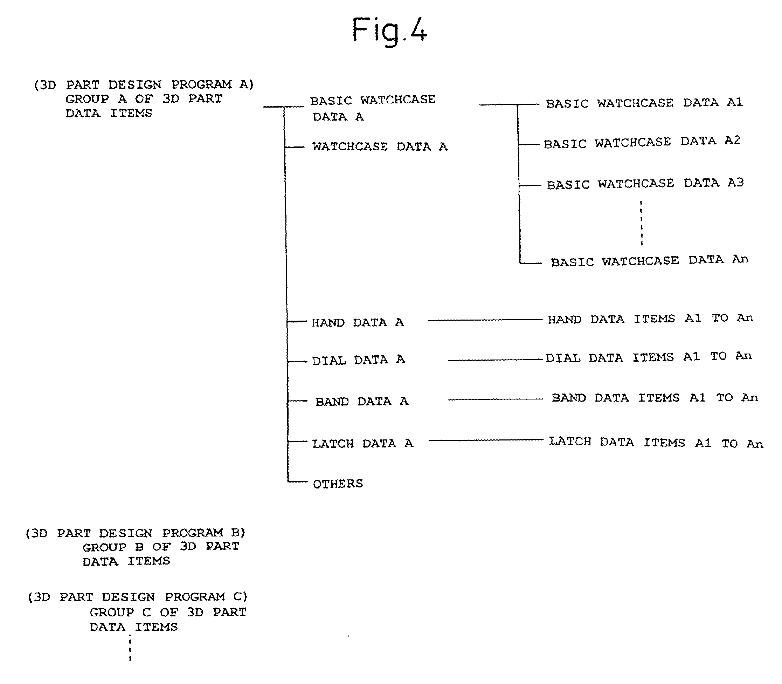

Fig. 4 shows the structure of a three-dimensional part design program. As illustrated, a plurality of three-dimensional part design programs A, B, and C exist, and a group of three-dimensional part data items is accessible to each three-dimensional part design program. For example, the group A of three-dimensional part data items includes basic watchcase data A, watchcase data A, hand data A, dial data A, band data A, latch data A, and miscellaneous data A.

The basic watchcase data A is composed of basic watchcase data items A1 to An, and the hand data A is composed of hand data items A1 to An. The dial data A is composed of dial data items A1 to An, the band data A is composed of band data items A1 to An, and the latch data A is composed of latch data items A1 to An.

As mentioned above, the three-dimensional part design programs having different specifications are installed in the server in the product vendor. The three-dimensional part design programs may be locally-procurable programs. For example, a plurality of three-dimensional part design programs sold by a plurality of makers and provided with different capabilities are installed in the server.

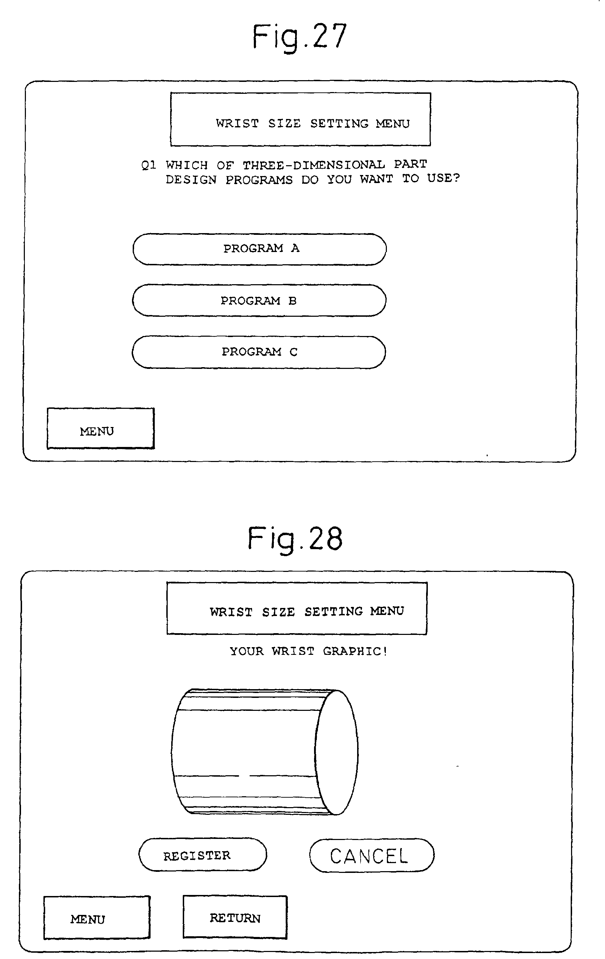

A plurality of users each can select any three-dimensional part design program, which is easy to use or can be used by each user, from a three-dimensional part design program selection screen image displayed on the display of an own personal computer (for example, one of the programs A, B, and C shown in Fig. 27).

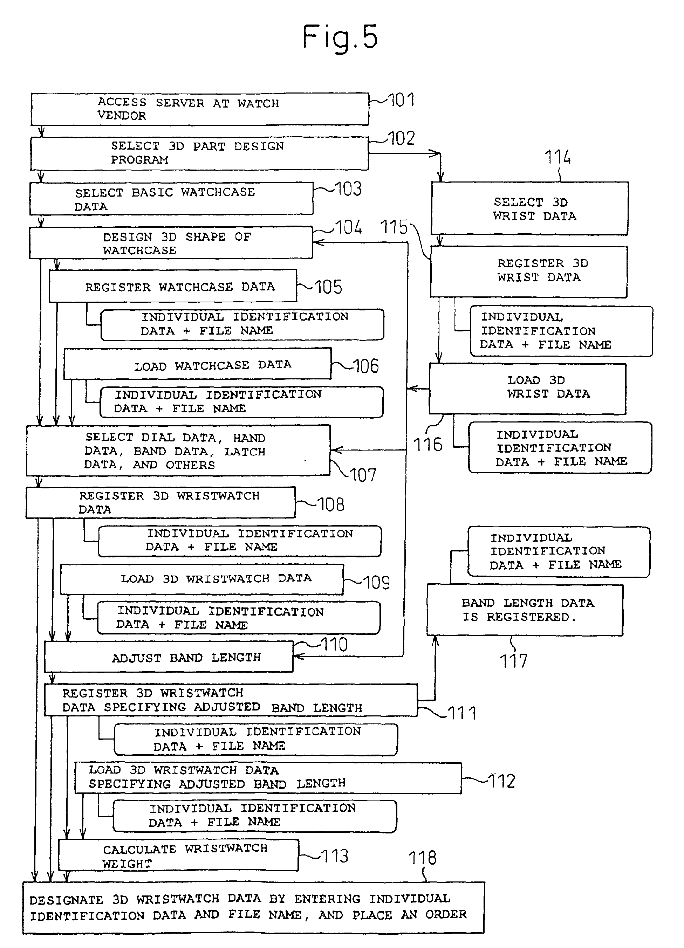

Fig. 5 is a flowchart describing an example of actions of a user to be performed for designing. A user uses his/her own personal computer to access the server at the watch vendor over, for example, the Internet that is an information communicating means. The user utilizes the three-dimensional part design program and various data items present in the server at the watch vendor with a link between his/her own personal computer and the server at the watch vendor established. The user then interactively designs a desired wristwatch while looking at data displayed on the display of the own personal computer. Otherwise, the user downloads the program and data into his/her own personal computer, and designs a wristwatch.

Practical procedures will be described in conjunction with the drawings later. Beforehand, a basic procedure will be described in conjunction with the flowchart of Fig. 5.

As mentioned above, a user accesses the server at the watch vendor over the Internet (101), and selects any of the three-dimensional part design programs provided by the watch vendor (102). The user then selects any basic watchcase data (103), and designs the three-dimensional shape of a watchcase the user desires (104). When the designing of the watchcase is completed, individual identification data and a file name are entered and registered (105).

Thereafter, the watchcase data is loaded (106), and dial data, hand data, band data, latch data, and miscellaneous data are selected (107). Finished three-dimensional wristwatch data is entered and registered in association with the individual identification data and file name (108).

Thereafter, the three-dimensional wristwatch data is loaded (109), and a band length represented by the data is adjusted (110). The three-dimensional wristwatch data specifying the adjusted band length is entered and registered in association with the individual identification data and file name (111). Furthermore, the band length data is entered and registered in association with the individual identification data and file name (117).

Thereafter, the three-dimensional wristwatch data specifying the adjusted band length is loaded (112), and a wristwatch weight specified in the data is calculated (113). Moreover, three-dimensional wrist data is selected (114), and then entered and registered in association with the individual identification data and file name (115). The registered three-dimensional wrist data is loaded during designing of a watchcase or designing of a band (116).

Based on the individual identification data and file name, the three-dimensional wristwatch data is designated and an order is placed with the watch vendor over the Internet (118).

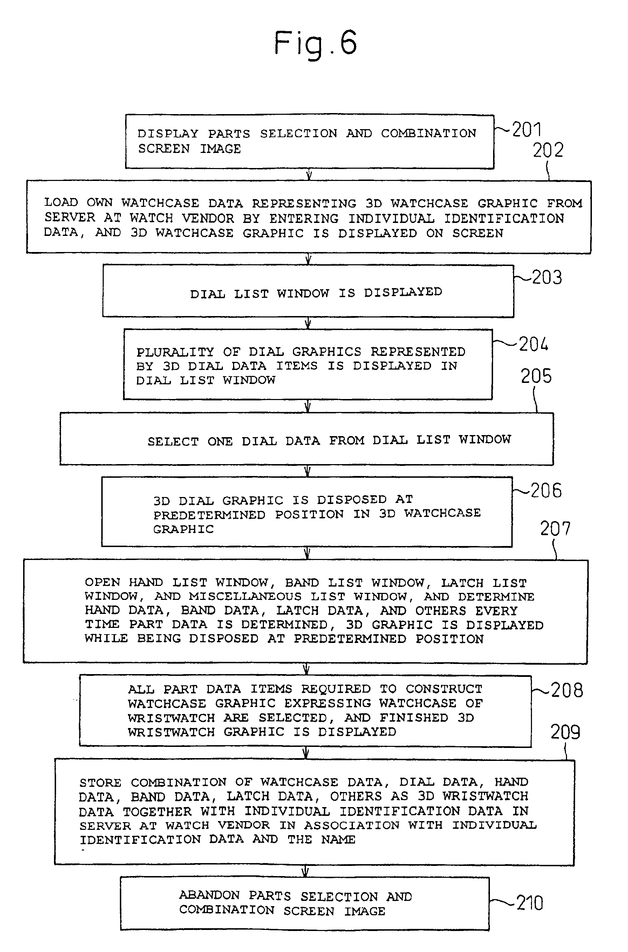

Fig. 6 is a flowchart describing an example of actions of a user to be performed for parts selection and combination. Respective practical procedures will be described later in conjunction with the drawings. Beforehand, a basic procedure will be described in conjunction with the flowchart of Fig. 6. Steps 203 to 208 to be described later are steps included in a parts selection and combination program (see Fig. 2).

A user displays a parts selection and combination screen image on his/her own personal computer (201). The user downloads his/her watchcase data representing a three-dimensional watchcase graphic from the server at the watch vendor by entering his/her individual identification data, and displays the graphic on the screen of the computer (202).

Thereafter, a dial list window is opened (203), and a plurality of three-dimensional disk data items is presented in the dial list window (204). One dial data is selected from the dial list window (205).

Thereafter, a three-dimensional dial graphic is disposed at a predetermined position in the three-dimensional watchcase graphic (206). Likewise, a hand list window, a band list window, a latch list window, and a miscellaneous list window are opened successively in order to determine hand data, band data, latch data, and miscellaneous data. Every time part data is determined, a three-dimensional graphic represented by the data is displayed while being disposed at a predetermined position (207).

Thereafter, all part data items required to construct a watchcase graphic expressing a watchcase of a wristwatch are selected, and a finished three-dimensional wristwatch graphic is displayed (208).

Thereafter, the combination of the watchcase data with the dial data, hand data, band data, latch data, and miscellaneous data is stored as three-dimensional wristwatch data in the server at the watch vendor together with the individual identification data while being assigned a file name (209).

The parts selection and combination screen image is then abandoned (210).

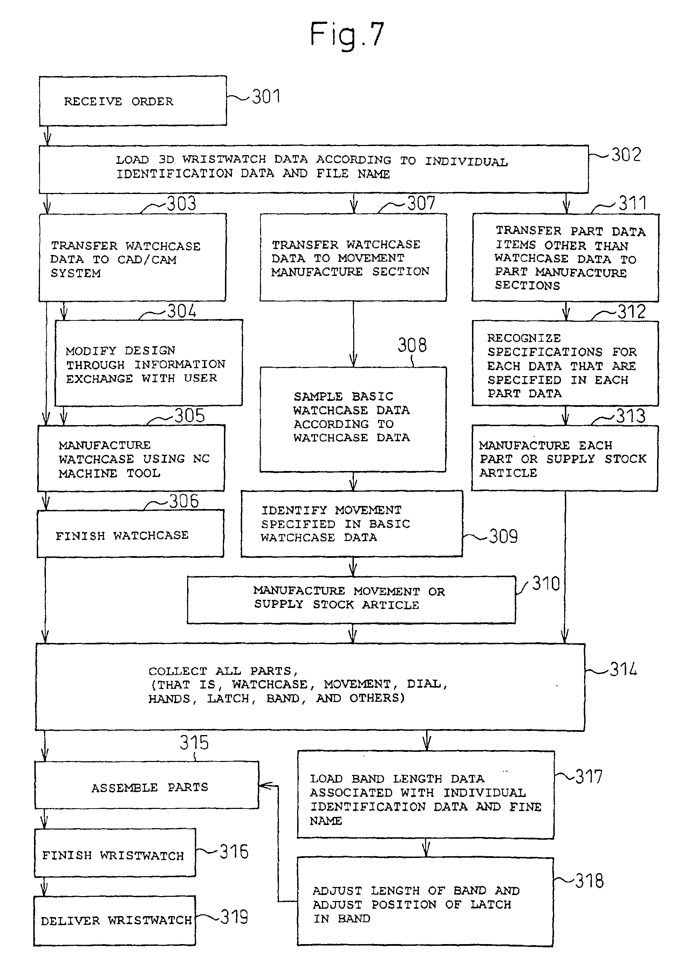

Fig. 7 is a flowchart describing an example of actions of the watch vendor to be performed for manufacturing. The system shown in Fig. 3 receives an order (301), and loads three-dimensional wristwatch data according to individual identification data and a file name (302).

First, the loaded watchcase data is transferred to the CAD/CAM system (303). If necessary, information is exchanged with a user (chat that will be described later) in order to modify a design (304). Thereafter, the numerical-control machine tool is operated in order to manufacture a watchcase (305). The watchcase is thus completed (306).

Thereafter, the watchcase data is transferred to a movement manufacture section (307). Basic watchcase data is sampled based on the watchcase data (308). A movement specified in the basic watchcase data is identified (309). Moreover, a movement is manufactured or a stock article is supplied (310).

Thereafter, part data items other than the watchcase data are transferred to the part manufacture sections (311). The specifications for each part specified in each part data are recognized (312), and each part is manufactured or a stock article is supplied (313).

Thereafter, all part, such as, the watchcase, movement, dial, hands, miscellaneous, band, and latch are collected (314).

All the parts are assembled (315), whereby a wristwatch is completed (316). Furthermore, band length data associated with the individual identification data and file name is loaded (317). The length of the band is then adjusted and the position of the latch in the band is adjusted (318).

A finished wristwatch is then delivered to the user (319).

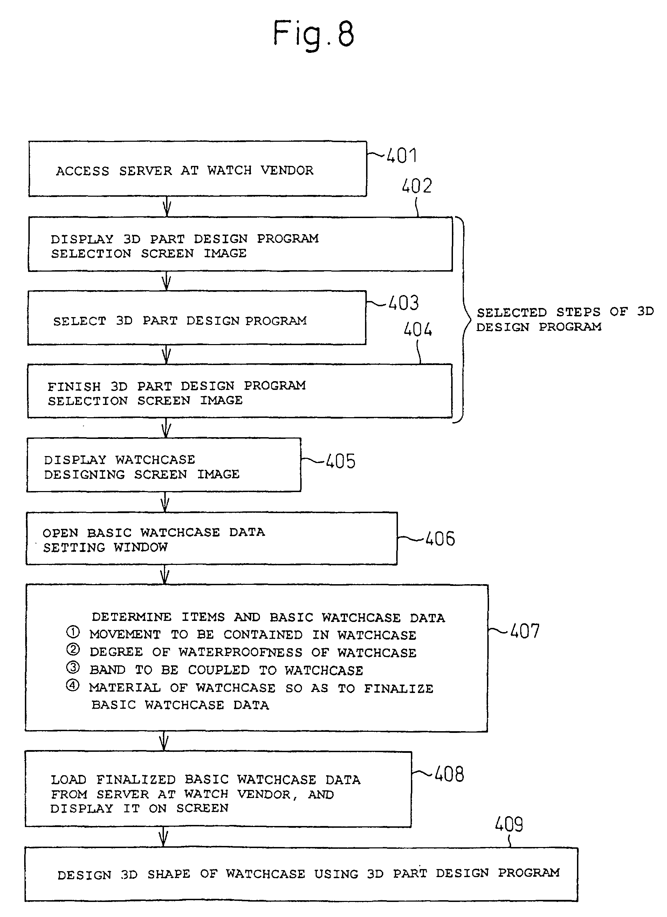

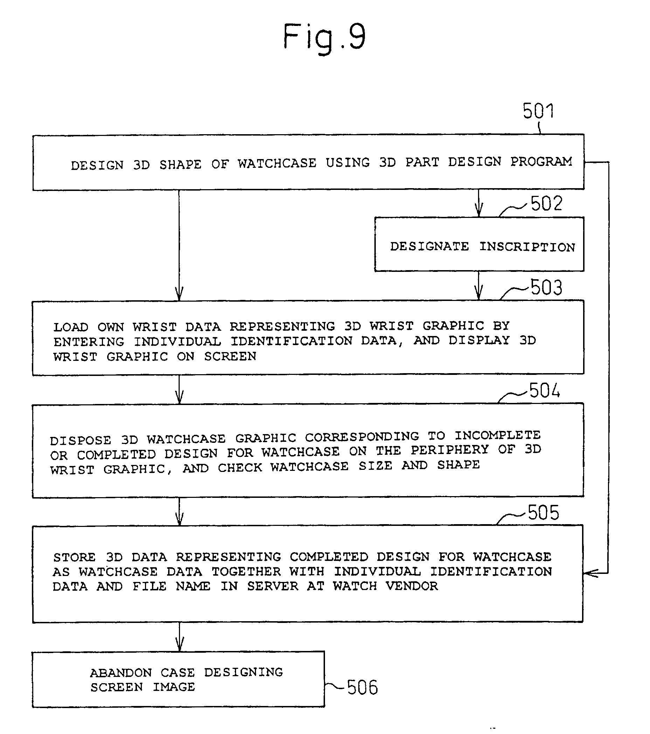

Fig. 8 is a flowchart (part 1) describing actions of a user to be performed for watchcase designing. Fig. 9 is a flowchart (part 2) describing actions of the user to be performed for watchcase designing. The actions the user performs for watchcase designing will be detailed later. A basic procedure will be described in conjunction with Fig. 8 and Fig. 9.

Referring to Fig. 8, first, a user accesses the server at the watch vendor (401). A three-dimensional part design program screen image is then displayed on the user's personal computer (402). A desired three-dimensional part design program is selected (403), and the three-dimensional part design program selection screen image is then abandoned (404).

Thereafter, a watchcase designing screen image is displayed (405), and a basic watchcase data setting window is opened (406).

Thereafter, a movement to be incorporated in the watchcase, a degree of waterproofness of the watchcase, a band to be coupled to the watchcase, and a material of the watchcase are determined. Thus, the basic watchcase data is finalized (407).

The finalized basic watchcase data is loaded from the server at the watch vendor and displayed on the screen (408). The three-dimensional part design program is activated in order to design the three-dimensional shape of the watchcase (409).

Referring to Fig. 9, first, the three-dimensional part design program is activated in order to design the three-dimensional shape of the watchcase (501). Incidentally, this step is identical to step 409. An inscription is then designated (502).

Thereafter, a three-dimensional wrist graphic represented by own wrist data is loaded from the server at the watch vendor by entering the individual identification data, and displayed on the screen (503).

Thereafter, a three-dimensional watchcase graphic exhibiting an incomplete or completed design for a watchcase is disposed near the periphery of a three-dimensional wrist graphic. Thus, the size or shape of the watchcase graphic is checked (504).

Thereafter, the three-dimensional watchcase data representing a completed design for a watchcase is stored as watchcase data in the server at the watch vendor in association with the individual identification data and file name (505).

The watchcase designing screen image is then abandoned (506).

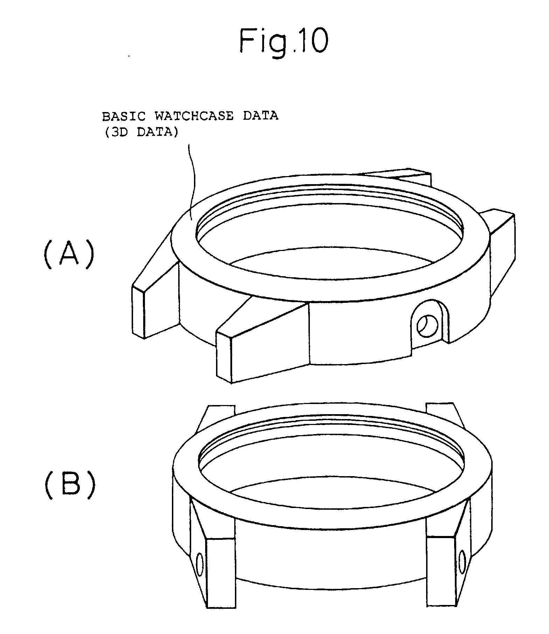

Fig. 10A and Fig. 10B are explanatory diagrams concerning the basic watchcase data. As shown in Fig. 1 and Fig. 2, the three-dimensional part design programs are stored in the server in order to enable users to change the shape of a part. Moreover, a plurality of three-dimensional part design programs, any of which a user can select, is made available. A plurality of basic watchcase data items produced by the three-dimensional part design programs is stored in the server as described later.

The basic watchcase data that is three-dimensional part data can be, as shown in Fig. 10A and Fig. 10B, freely turned, enlarged, or reduced on the screen.

In general, a design for a watchcase is restricted by a movement, waterproofness, a band, a material, or the like. Specifically, the size of an internal space of a watchcase is determined by the movement, and the dimensions concerning waterproofness of the watchcase are determined by the degree of waterproofness. Moreover, minimum dimensions required in order to maintain the strength of the watchcase are determined by a material.

Consequently, a "basic watchcase graphic" represented by basic watchcase data is dependent on the foregoing restrictions. Users are unable to draw a portion of the basic watchcase graphic expressing the inner surface of a watchcase. Consequently, the portion of the basic watchcase graphic expressing the inner surface of a watchcase is defined as a "drawing disabled area." A portion other than the portion of the basic watchcase graphic expressing the inner surface of a watchcase is defined as a "drawing enabled area" in which a user can draw.

The drawing enabled area is a portion of the basic watchcase graphic expressing the outer surface of a watchcase. A user draws something in the portion of the basic watchcase graphic as if to decorate part of a watchcase. As described later, a portion of the basic watchcase graphic expressing a certain range on the outer surface of a watchcase expressed as the drawing enabled area is defined as a "minimum drawing interface."

In this case, a user can freely change the shape of the drawing enabled area. However, if a too large three-dimensional shape is added to the basic watchcase graphic, it is hard to actually manufacture such a watchcase. Moreover, a metallic material that is made into a watchcase must be made available in various sizes. From this viewpoint, certain restrictions must be imposed on the drawing enabled area. Namely, a portion of the basic watchcase graphic covering the drawing enabled area is defined as a "maximum drawing interface."

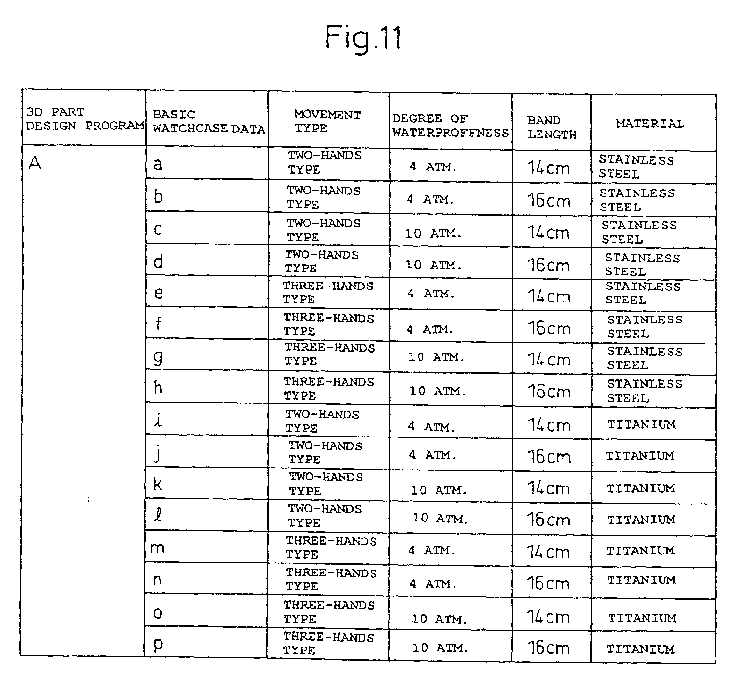

Fig. 11 shows an example of basic watchcase data. The three-dimensional part design program A corresponds to the one described in Fig. 4, and basic watchcase data items a to p correspond to those A1 to An in Fig. 4. Each basic watchcase data specifies a movement type, a degree of waterproofness, a band length, and a material. According to the present embodiment, basic watchcase data specifies a two-hands or three-hands type as a movement type, 4 or 10 atmospheres as a degree of waterproofness, 14 or 16 cm as a band length, and stainless steel or titanium (titan) as a watchcase material.

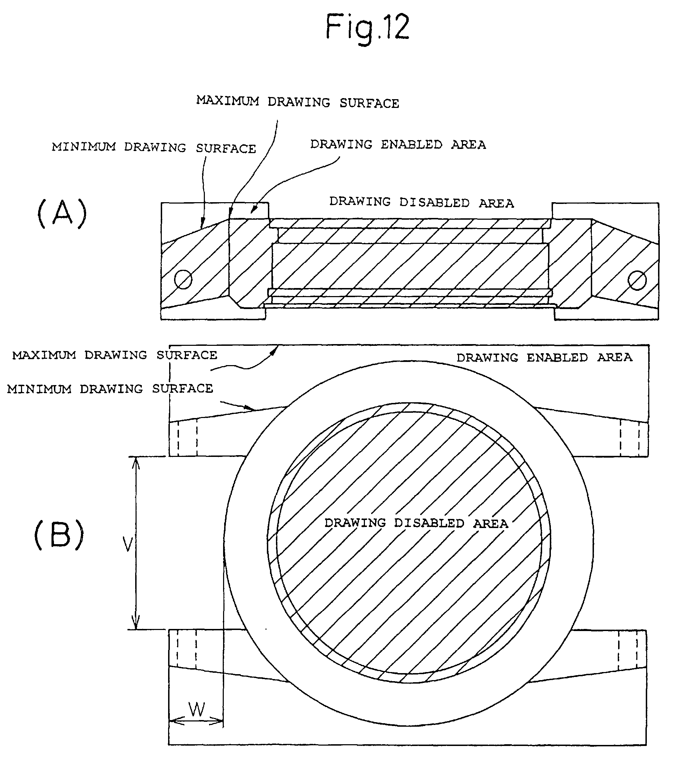

Fig. 12A and Fig. 12B are explanatory diagrams concerning the drawing enabled area and drawing disabled area which are specified in the basic watchcase data. Referring to Fig. 12A and Fig. 12B, the drawing disabled area is depicted as hatched parts, and the drawing enabled area is depicted as blank parts. As illustrated, the drawing enabled area includes the minimum drawing interface and the maximum drawing interface. A dimension V shown in Fig. 12B is determined with a band width designated by a user, and a dimension W is a dimension required to couple a user-selected band to a watchcase.

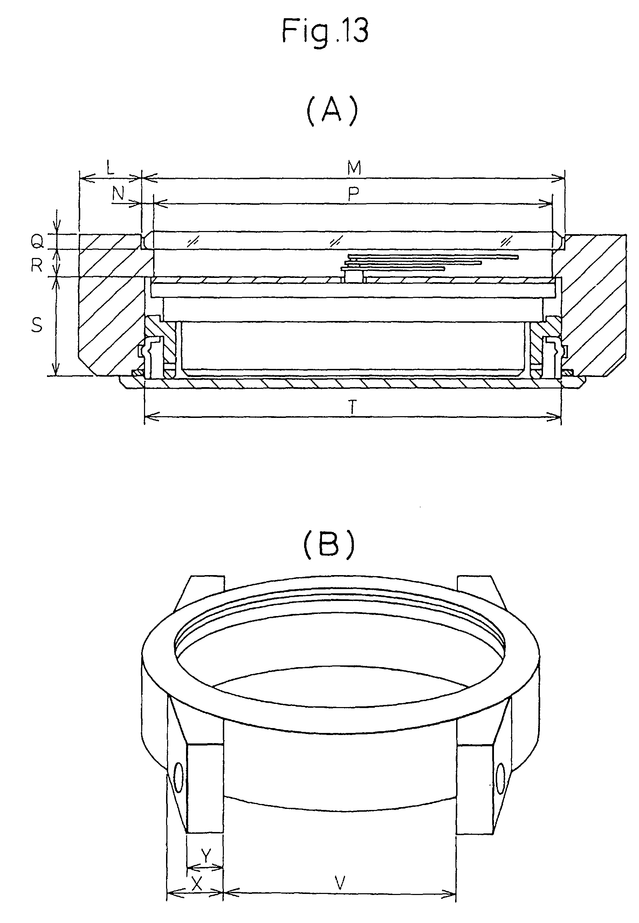

Fig. 13A and Fig. 13B are explanatory diagrams concerning dimensions required to define the minimum drawing interface. Referring to Fig. 13A, dimensions S and T are dimensions determining an internal space of a watchcase required for accommodating a movement. Dimensions P and R are minimum dimensions determining the minimum size of the internal space required for the movement to rotate. Dimensions N and Q are minimum dimensions required for keeping a windshield and watertight. A dimension M is a minimum dimension required for keeping a rear cover watertight. A dimension L is a minimum dimension of a watchcase thickness required for keeping the watchcase strong enough.

Referring to Fig. 13B, a dimension V is determined with a designated band width. Dimensions X and Y are dimensions required for keeping attachment legs strong enough.

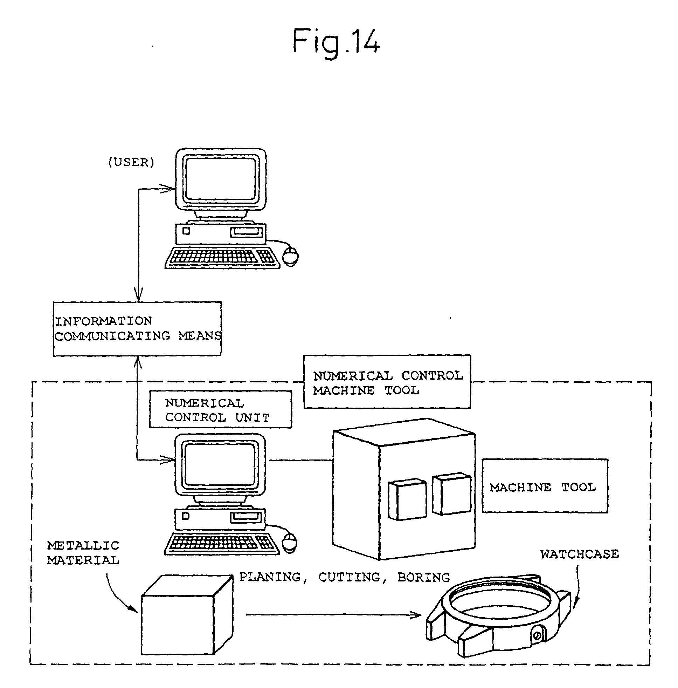

Fig. 14 shows the organization of the CAD/CAM section shown in Fig. 3. A user enters three-dimensional part design data, which represents a design for a watchcase, by connecting his/her personal computer via, for example, the Internet. The CAD/CAM system runs a CAD program to produce three-dimensional numerical data from the three-dimensional part design data. A CAM program is then run in order to convert the three-dimensional numerical data into numerical control data. The numerical control data is then transmitted to the numerical control machine tool over a communication line, for example, a LAN.

In the numerical control machine tool, a machine tool numerical control program is activated based on the numerical control data. Thus, a metallic material is planed, cut, bored, or, anyhow, machined in order to produce a watchcase. In this case, the CAD program, CAM program and numerical control program may be stored in different computers, or two of the CAD program, CAM program and numerical control program and the other program may be stored in different computers. In this case, needless to say, the computers must be connected to each other over a predetermined communication line so that they can transfer data to or from each other.

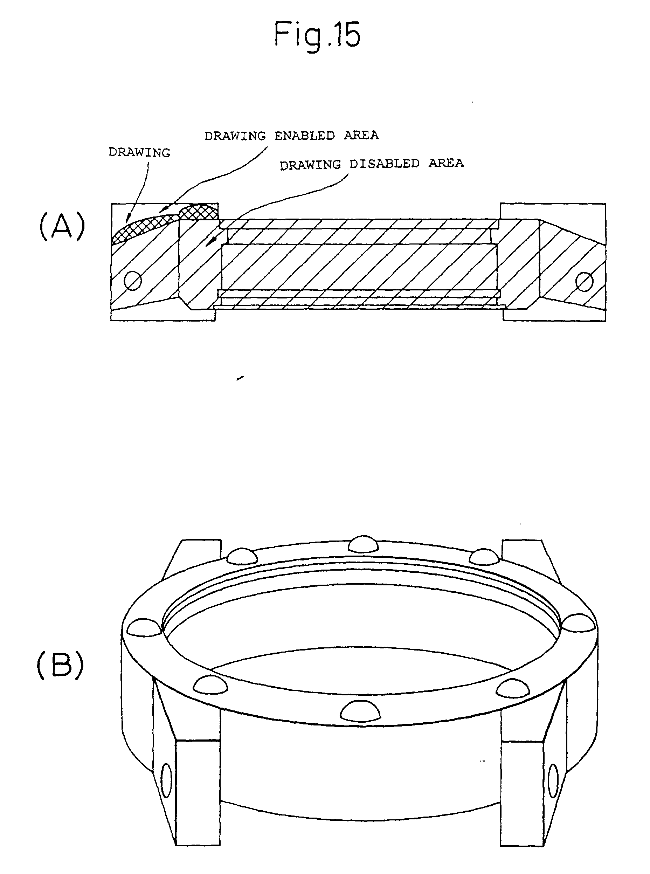

Fig. 15A and Fig. 15B are explanatory diagrams concerning a change in a shape to be made by a user. Referring to Fig. 15A, a user draws in the drawing enabled area so as to retouch the portions of a three-dimensional graphic expressing a watchcase body and watchcase legs which are depicted as hatched part of Fig. 15A. Consequently, as shown in Fig. 15B, the retouched portions of the three-dimensional graphic reflect changes in the shapes of the top of the watchcase body and the legs.

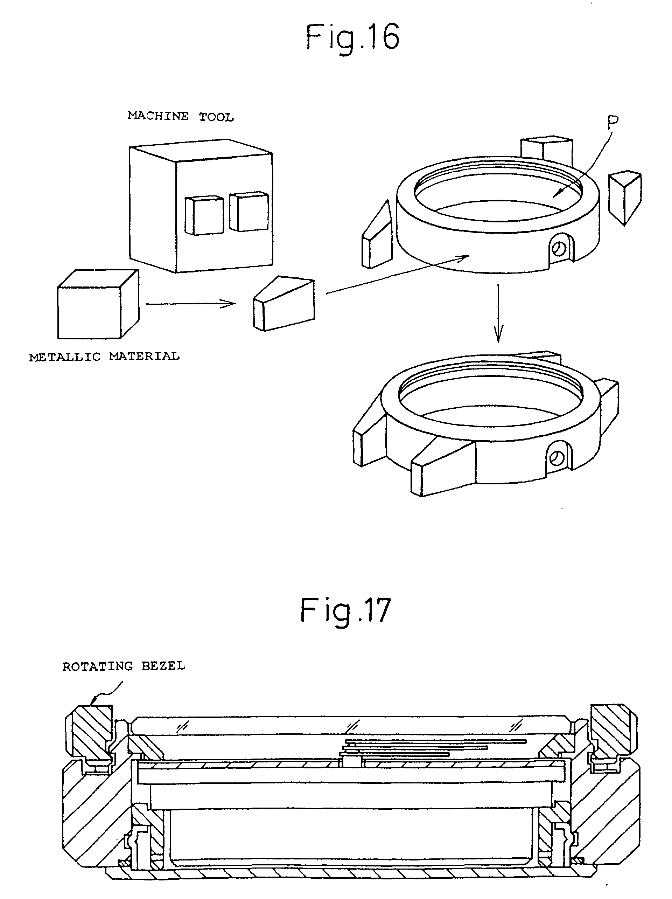

Fig. 16 is an explanatory diagram concerning a process to be followed after a user retouches the portions of a three-dimensional graphic expressing watchcase legs so as to change the shapes of the watchcase legs. In this case, metallic members are machined in order to produce watchcase legs having the changed shapes, and the watchcase legs are successively welded to a watchcase body P that is a mass-produced article having undergone pressing, planing, boring, and any other machining.

Fig. 17 shows a structure having a rotational bezel whose shape is changed by a user. At this time, not only the shape of the rotational bezel but also the shapes of a stationary bezel and a decorative ring can be changed. As shown in Fig. 2, the plurality of three-dimensional part design programs, any of which a user can select, is stored in the server. A plurality of part data items produced by the respective three-dimensional part design programs is also stored in the server. Specifically, dial data, hand data, band data, and latch data are stored, and weight data is appended to each part data. An average of the measured weights of manufactured articles of each part may be adopted as the weight data.

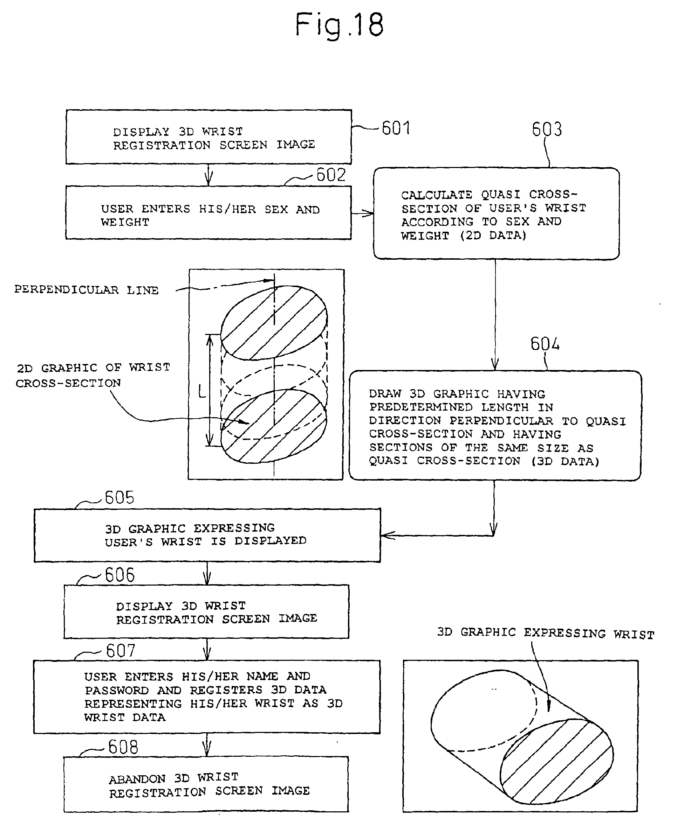

Fig. 18 is a flowchart (part 1) describing a three-dimensional wrist data manipulation sequence to be performed according to a three-dimensional wrist modeling program. This sequence is adopted on the assumption that a wrist has an invariable thickness.

First, a user receives a three-dimensional wrist modeling program and three-dimensional wrist data from the watch vendor, and displays a three-dimensional wrist registration screen image (601). The user then enters his/her sex and weight (602). When the user's sex and weight are entered, a quasi section of the user's wrist is calculated in order to produce two-dimensional data (603).

Thereafter, a three-dimensional graphic is drawn to have a predetermined length L in a direction perpendicular to the quasi section and contain sections of the same size as the quasi section, whereby three-dimensional data is produced (604). A three-dimensional graphic of the user's wrist is then displayed (605). A three-dimensional wrist registration screen image specific to the user is then displayed (606). The user enters his/her name and password, and registers the three-dimensional data representing the user's wrist as three-dimensional wrist data (607). The three-dimensional wrist registration screen image is then abandoned (608).

The watch vendor runs the user-designated three-dimensional part design program so as to dispose a three-dimensional graphic represented by the three-dimensional wrist data. Namely, a three-dimensional watchcase graphic, that is, an incomplete or completed design for a watchcase may be displayed while being superposed on the three-dimensional wrist graphic.

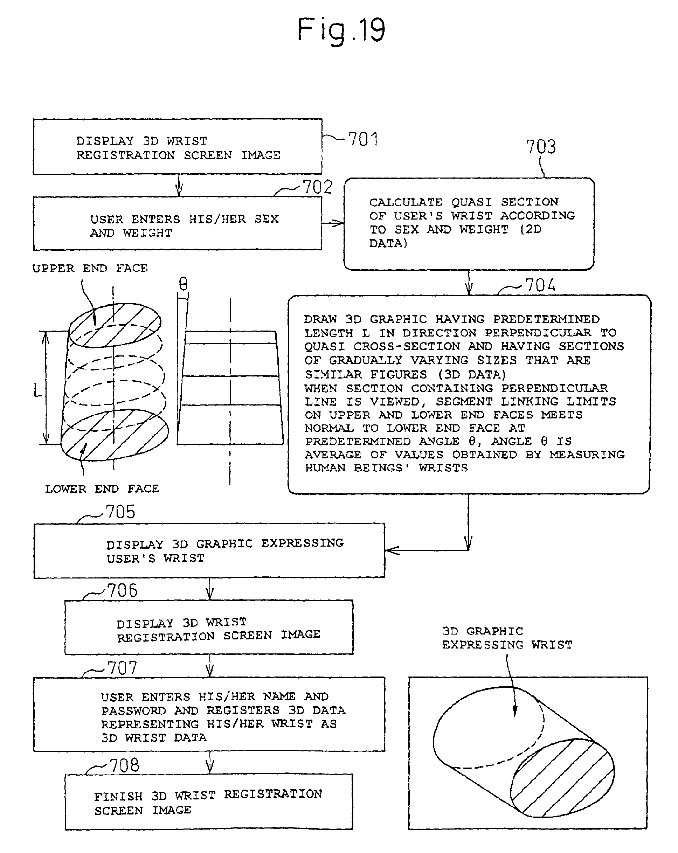

Fig. 19 is a flowchart (part 2) describing a three-dimensional wrist data manipulation sequence to be performed according to the three-dimensional wrist modeling program. This sequence is adopted on the assumption that a wrist has a varying thickness.

First, similarly to the sequence described in Fig. 18, a user receives the three-dimensional wrist modeling program and three-dimensional wrist data from the watch vendor, and displays the three-dimensional wrist registration screen image (701). The user then enters his/her sex and weight (702). When the user's sex and weight are entered, a quasi section of the user's wrist is calculated in order to produce two-dimensional data (703).

Thereafter, a three-dimensional graphic is drawn to have a predetermined length L in the direction perpendicular to the quasi section and have sections of gradually varying sizes that are similar figures (704). At this time, when a section containing the perpendicular line is viewed, a segment linking limits on both upper and lower bases of the section meets a normal to the lower base at a predetermined angle θ. The angle θ is an average value calculated by measuring wrists of human beings.

Thereafter, a three-dimensional graphic expressing the user's wrist is displayed (705). A three-dimensional wrist registration screen image specific to the user is displayed (706). The user enters his/her name and password, and registers the three-dimensional data representing his/her wrist as three-dimensional wrist data (707). The three-dimensional wrist registration screen image is then abandoned (708).

Similarly to the sequence described in Fig. 18, the watch vendor runs the user-designated three-dimensional part design program so as to dispose the three-dimensional graphic expressing the user's wrist. In this case, the three-dimensional watchcase graphic exhibiting an incomplete or completed design for a watchcase may be displayed while being superposed on the three-dimensional wrist graphic.

Moreover, in the sequences described in Fig. 18 and Fig. 19, the user selects a range, within which his/her weight falls, from a weight list displayed on the screen. Ranges of weight values are determined in units of, for example, 10 kg, and set to ranges of 31 to 40 kg, 41 to 50 kg, 51 to 60 kg, and 61 to 70 kg. The user selects any of the ranges.

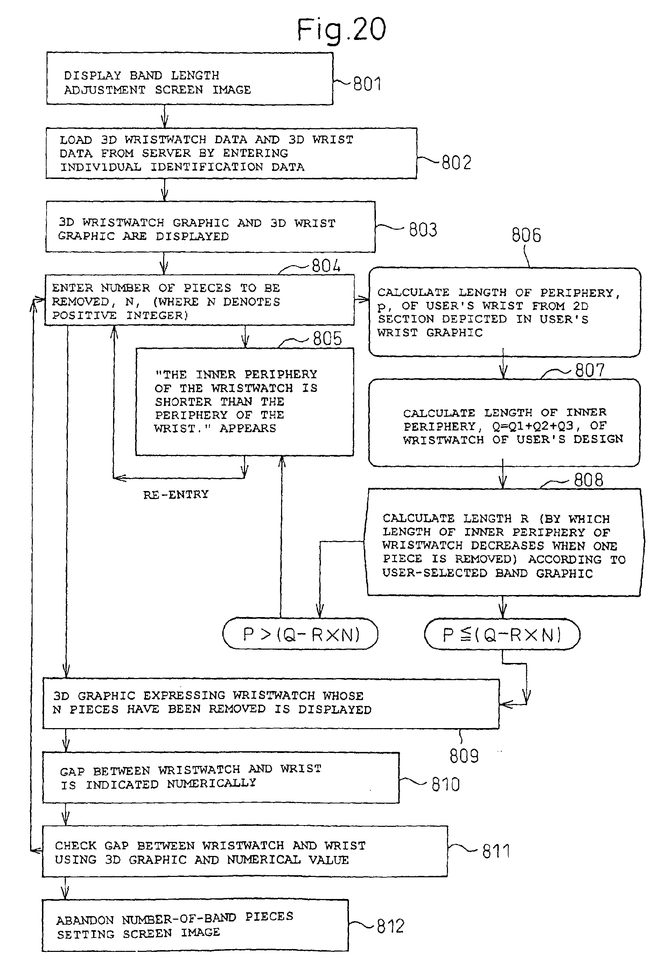

Fig. 20 is a flowchart (part 1) describing a band length adjustment sequence. A band length adjustment program is composed of a number-of-pieces setting program and a position setting program for setting a position on a band to which a latch is fixed.

First, a band length adjustment screen image is displayed (801). Thereafter, three-dimensional wristwatch data and three-dimensional wrist data are loaded from the server according to individual identification data (802). Consequently, a three-dimensional graphic expressing a wristwatch and a three-dimensional graphic expressing a wrist are displayed (803). The number of pieces to be removed (N shall be a positive integer) is entered (804). If the number of pieces to be removed is too large, a message "The inner periphery of the wristwatch is shorter than the periphery of the wrist." appears (805).

Thereafter, when the number of pieces to be removed N is entered, the length of the periphery P of the user's wrist is calculated from a two-dimensional section depicted in the user's wrist graphic (806). The length of the inner periphery Q of a wristwatch of a user's design is calculated (807). In relation to a user-selected band graphic, a length R by which the length of the inner periphery of the wristwatch decreases when one piece is removed is calculated. The length of the periphery P of the wrist is compared with the length of the inner periphery of the wristwatch with the number of pieces decreased (Q-R×N) (808).

If P>(Q-R×N), the length of the periphery P of the wrist is larger than the length of the inner periphery of the wristwatch. Control is returned to step S25. In contrast, if P≤(Q-R×N), the length of the periphery P of the wrist is smaller than the length of the inner periphery of the wristwatch. Control is therefore passed to step 809.

A three-dimensional graphic expressing a wristwatch where N pieces have been removed from the band is displayed (809). A gap between the wristwatch and wrist is indicated numerically (810). The gap between the wristwatch and wrist is recognized from the three-dimensional graphic and numerical value (811). Thus, the band length adjustment sequence is terminated. The three-dimensional wristwatch data having been manipulated in order to adjust a band length is stored in the server in association with the individual identification data and file name. Band length data that specifies the number of pieces to be removed is stored in the server in association with the individual identification data and file name. Finally, the number-of-pieces setting screen image is abandoned (812).

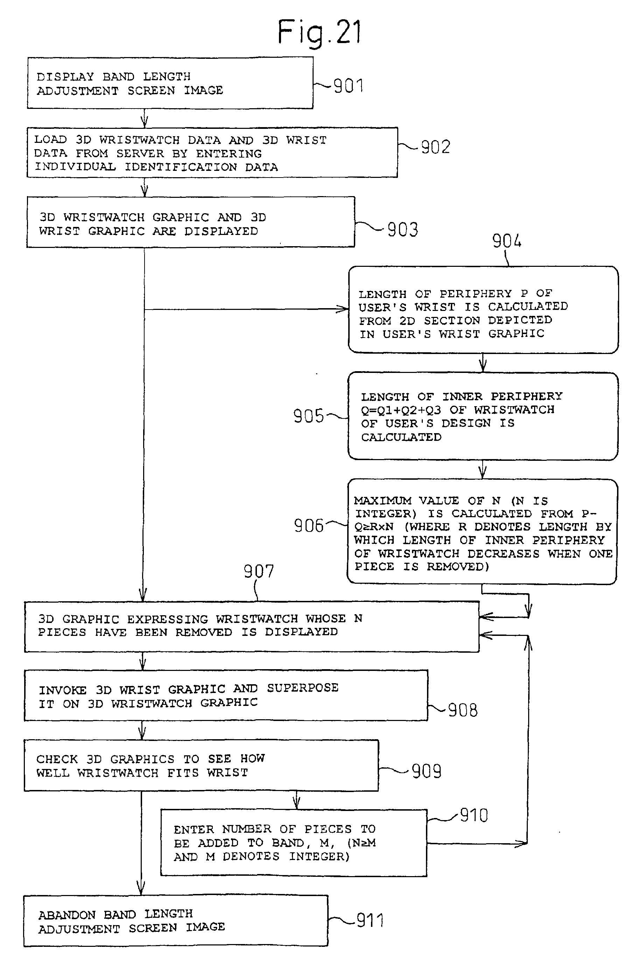

Fig. 21 is a flowchart (part 2) describing a band length adjustment sequence. First, a band length adjustment screen image is displayed (901). Thereafter, three-dimensional wristwatch data and three-dimensional wrist data are loaded from the server by entering individual identification data (902). Consequently, a three-dimensional graphic expressing a wristwatch and a three-dimensional graphic expressing a wrist are displayed (903). The length of the periphery P of the user's wrist is calculated from a two-dimensional section depicted in the user's wrist graphic (904). The length of the inner periphery Q of a wristwatch of a user's design is calculated (905).

Thereafter, assuming that a length by which the length of the inner periphery of the wristwatch decreases with removal of one piece is R and the number of pieces to be removed is N, (P-Q)≥(R×N) is established. Consequently, a maximum value of N is calculated (906).

Thereafter, a three-dimensional graphic expressing a wristwatch whose N pieces have been removed is displayed (907). The three-dimensional wrist graphic is then invoked, and the three-dimensional wristwatch graphic is superposed on the three-dimensional wrist graphic (908). The three-dimensional graphics are checked to see how well the wristwatch fits the wrist (909). Then, the number of pieces to be added to the band, M, is entered (910). In this case, N≥M (M denotes a positive integer) is established. Band length adjustment is then terminated. Three-dimensional wristwatch data having been manipulated in order to adjust a band length is then stored in the server in association with the individual identification data and file name. Band length data that specifies the number of removed pieces is stored in the server in association with the individual identification data and file name. The band length adjustment screen image is then abandoned (911).

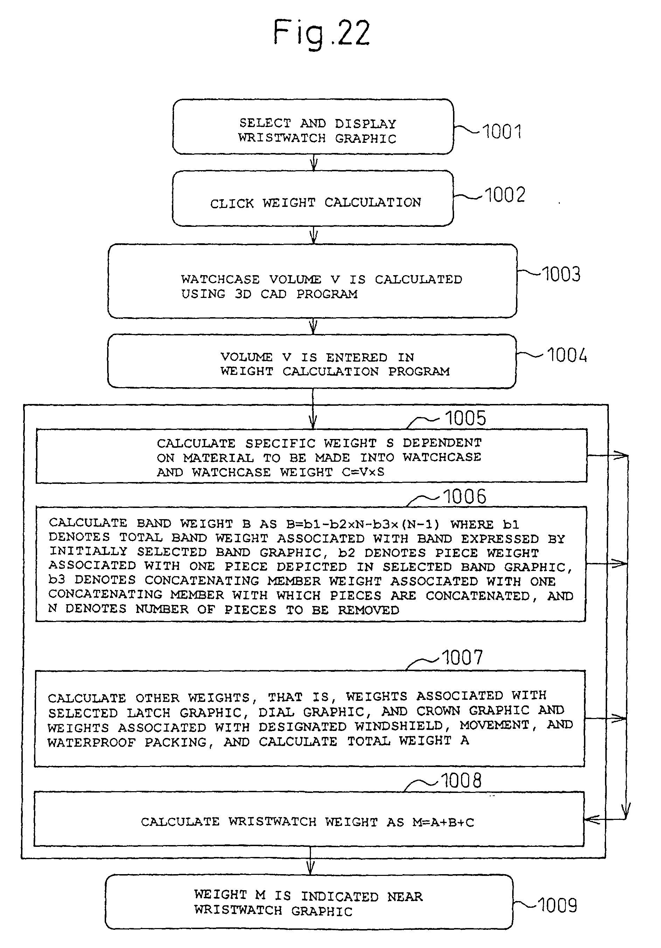

Fig. 22 is a flowchart describing a wristwatch weight indication sequence. First, a wristwatch graphic is selected and displayed (1001). Weight Calculation is then clicked (1002). A three-dimensional CAD program is then run in order to calculate a watchcase volume V (1003). The watchcase volume V is entered in a weight calculation program (1004).

A specific weight S dependent on a material to be made into the watchcase and a watchcase weight C=V·S are calculated (1005).

Thereafter, assume that a total band weight associated with a band expressed by an initially-selected band graphic is b1, a piece weight associated with one piece depicted in the selected band graphic is b2, a concatenating member weight associated with a concatenating member with which pieces are concatenated is b3, and the number of pieces to be removed is N. A band weight B is calculated as B=b1-b2×N-b3×(N-1) (1006).

The other weights, that is, weights associated with a selected latch graphic, dial graphic, and crown graphic, and weights associated with a designated windshield, movement, and waterproof packing are calculated, and the total weight A is calculated (1007).

A wristwatch weight M=A+B+C is then calculated (1008), and the calculated weight M is indicated near the wristwatch graphic (1009).

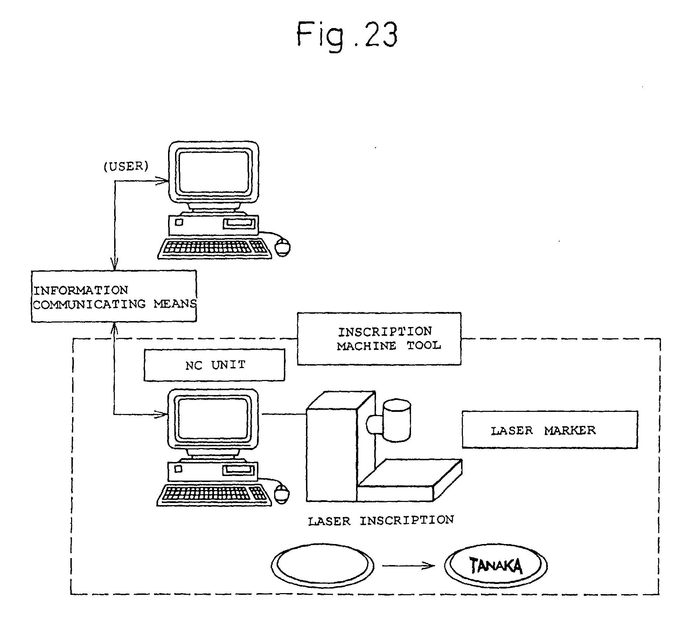

Fig. 23 shows a system for inscribing a wristwatch. The CAD/CAM system is connected to a laser marker, which is an inscribing machine, over the Internet, whereby a system is constructed. The system is used to inscribe, for example, the rear cover of a wristwatch. First, the CAD/CAM system runs the CAM program to convert two-dimensional numerical data concerning a watchcase, which is produced by the CAD program, into numerical control data. A numerical control unit runs a numerical control program (laser marker numerical control program) to control the work of the laser marker according to the numerical control data. Consequently, a predetermined inscription is formed on the rear cover.

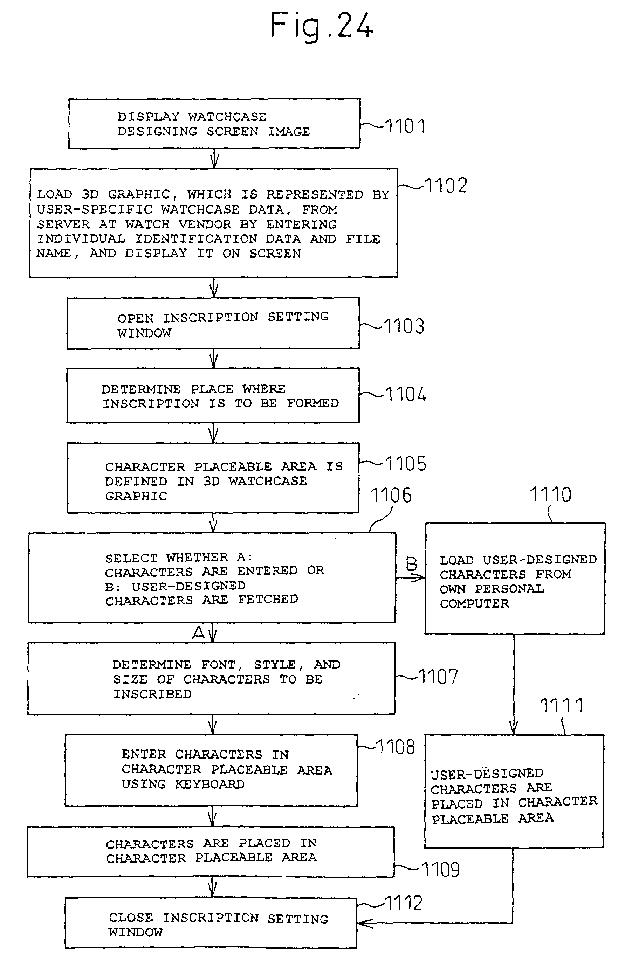

Fig. 24 is a flowchart describing actions of a user to be performed for inscription setting. First, a user displays a watchcase designing screen image (1101). The user then loads a three-dimensional graphic, which is represented by the user-specific watchcase data, from the server at the watch vendor by entering individual identification data and a file name, and displays the graphic on the screen (1102). If the watchcase designing screen image is displayed in order to design a watchcase, these steps are omitted.

Thereafter, an inscription setting window is opened (1103), and a place where an inscription is to be formed is determined (1104). Consequently, a character placeable area is defined in the three-dimensional watchcase graphic (1105).

The user then enters characters (A) or fetches the user-designed characters (B). In order to enter characters, a font, a style, and a size of characters to be inscribed are determined (1107), and characters are entered in the character placeable area using a keyboard (1108). Consequently, the characters are placed in the character placeable area (1109).

In order to fetch the user-designed characters at step 1106, the user-designed characters are loaded from the user's personal computer (1110). Consequently, the user-designed characters are placed in the character placeable area (1111). Finally, the inscription setting window is closed (1112).

The actions to be performed by a user will be described in conjunction with displayed screen images. The drawings to be referred to later show screen images sequentially displayed on the user's personal computer along with progress of a procedure.

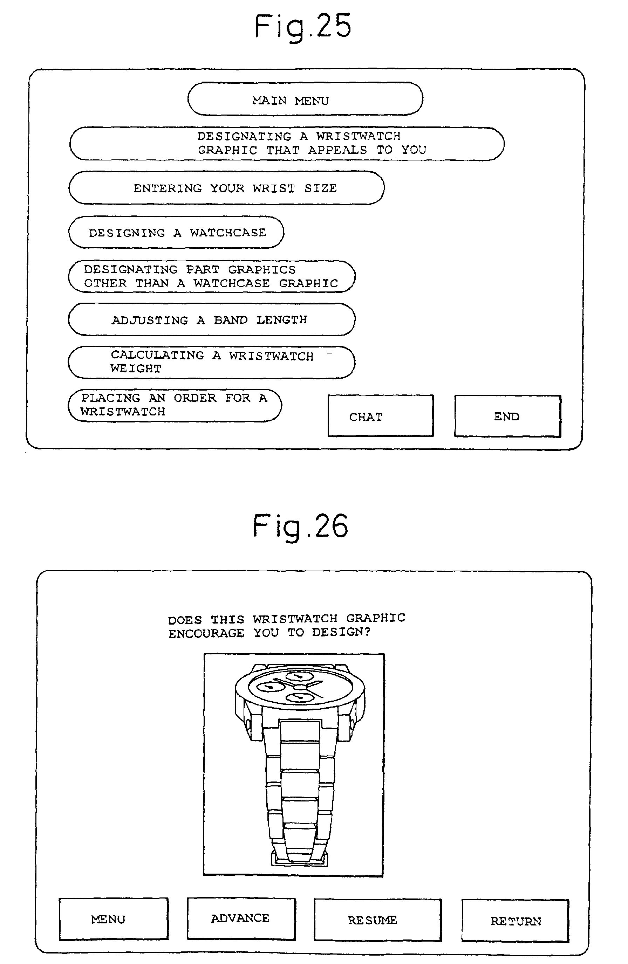

Fig. 25 shows a main menu enabling creation of a wristwatch graphic. As illustrated, the main menu lists such options as "Designating a wristwatch graphic that appeals to you," "Entering your wrist size," "Designing a watchcase," "Designating part graphics other than a watchcase graphic," "Adjusting a band length," "Calculating a wristwatch weight," and "Placing an order for the wristwatch."

For example, if "Designating a wristwatch graphic that appeals to you" is clicked, the next screen image is displayed. Options of "For men (larger)?" and "For women (smaller)?" are listed.

For example, when "For men" is selected, the next screen image appears. Options of wristwatch types, that is, "Sporting type," "Fashionable type," and "Businesslike type" are listed.

For example, if "Businesslike type" is selected, the next screen image appears. Options of movement types for a movement incorporated in a wristwatch, that is, "Two-hands type," "Three-hands type," and "Chronographic type" are listed.

For example, if "Three-hands type" is selected, options of degrees of waterproofness to be offered by a wristwatch, that is, "4 atm. waterproof," "10 atm. waterproof," and "20 atm. waterproof" are listed.

For example, if "10 atm. waterproof" is selected, the next screen image appears. Options of band types for a band of a wristwatch, that is, "Metallic band" and "Leather band" are listed.

For example, if "Metallic band" is selected, the next screen image appears. Options of materials to be made into a band, that is, "Stainless steel," "Titan," and "Titan alloy" are listed.

For example, if "Stainless steel" is selected, the next screen image appears. Options of band widths, that is, "16 mm," "18 mm," and "20 mm" are listed.

Fig. 26 shows a screen image presenting a wristwatch graphic that encourages a user to design. When the user has selected the above options, a user-desired wristwatch graphic (a wristwatch graphic encouraging the user to design) is displayed. If the user thinks that his/her intended design is reflected on the wristwatch graphic, the user clicks an Advance button.

In contrast, if the user-intended design is not reflected, a Resume button is clicked and the screen image shown in Fig. 25 is displayed again. If the user does not like part of the design, the user clicks a Return button. Consequently, the screen image is returned to an immediately preceding one, and selection is resumed.

Fig. 27 shows a wrist size setting menu. When the option "Designating your wrist size" is selected from the menu shown in Fig. 25, this menu appears. As described in conjunction with Fig. 4, Program A, Program B, and Program C are listed so that any of the programs a user wants to use can be selected. Depending on which of the programs is selected, a three-dimensional wrist graphic can be, as shown in Fig. 18, displayed with a wrist thickness held invariable, or a three-dimensional wrist graphic can be, as shown in Fig. 19, displayed with a wrist thickness varied gradually.

For example, when Program A is selected, the next screen image appears. Options for sex, that is, Male and Female are listed.

For example, if Male is selected, the next screen image appears. The user designates his/her weight. Namely, as described in Fig. 18 and Fig. 19, the user selects a range of weight values, within which his/her weight falls, from a weight list displayed on the screen. The ranges of weight values are defined in units of, for example, 10 kg, and set to the ranges of 31 to 40 kg, 41 to 50 kg, 51 to 60 kg, and 61 to 70 kg. The user selects any of the ranges.

Fig. 28 shows a screen image presenting a graphic that expresses a user's wrist. When a user has selected a range of weight values within which his/her weight falls, a wrist graphic is displayed through the sequence described in Fig. 18 or Fig. 19. The user clicks a Register button so as to register his/her wrist size. For registration, the user enters his/her name and password, a file name (for example, wrist A), and so on at his/her keyboard, and then clicks the Register button. Consequently, these data items are stored as individual identification data in the server at the watch vendor.

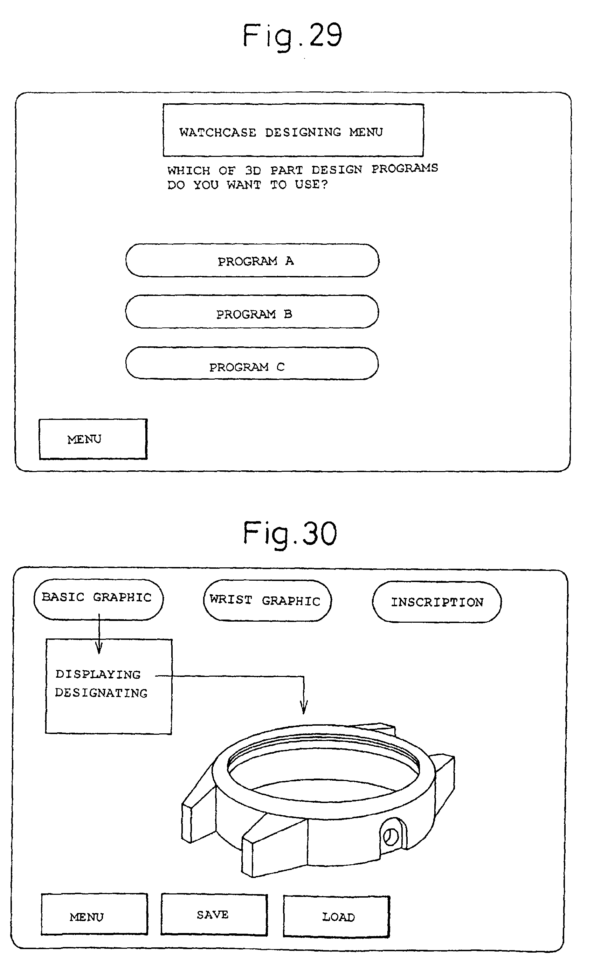

Fig. 29 shows a watchcase designing menu. Specifically, when the option "Designing a watchcase" is selected, this screen image appears. Options for Program A, Program B, and Program C are listed so that the user can select the three-dimensional part design program he/she wants to use.

Fig. 30 shows a menu displayed according to a selected three-dimensional part design program. Namely, for example, when the option Program A is selected in the screen image shown in Fig. 29, the selected three-dimensional part design program is activated. If Basic Graphic is clicked and Displaying is then selected, a watchcase graphic represented by basic watchcase data appears. The basic watchcase data specifies a movement, a degree of waterproofness, a band, and a material the user has designated in advance. The displayed watchcase graphic may be freely turned, or reduced or enlarged by dragging a point inside the border using a mouse.

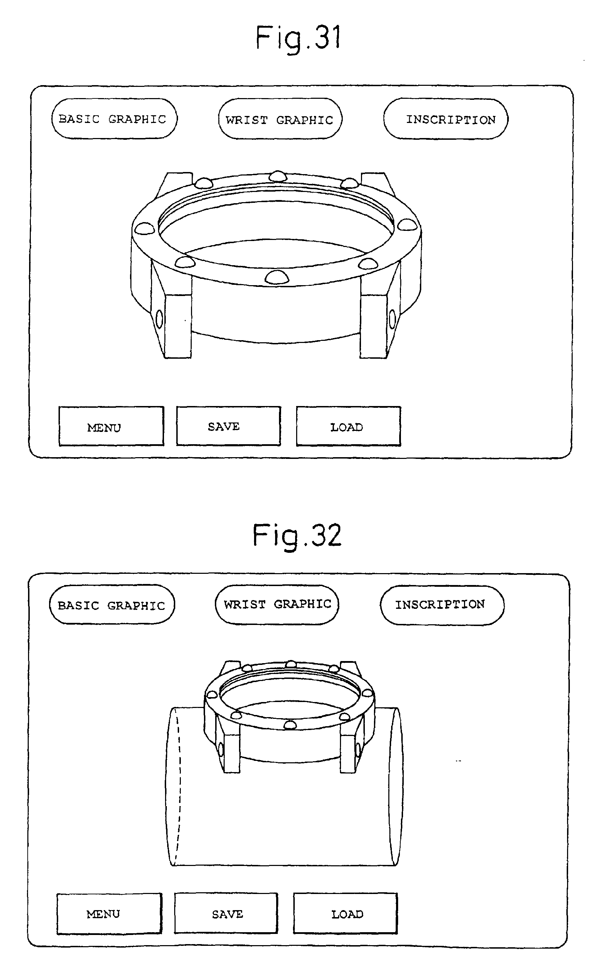

Fig. 31 shows a screen image presenting a watchcase graphic expressing a user's design. A user uniquely designs on the screen under the restrictions on watchcase designing described in conjunction with Fig. 12, Fig. 13, and Fig. 15. The graphic being retouched can be moved, turned, enlarged, or reduced by the user.

Thereafter, Wrist Graphic in the screen image shown in Fig. 31 is clicked, and Displaying is clicked. When the name and password that have been registered as individual identification data are entered, a screen image presenting a wrist graphic is displayed.

Fig. 32 shows a screen image presenting the watchcase graphic shown in Fig. 31 and integrated with a wrist graphic. As illustrated, the watchcase graphic and wrist graphic are moved and disposed as if the periphery of a wrist is in contact with the back of a watchcase. This screen image enables a user to recognize the size of a watchcase relative to his/her wrist or check how well the watchcase fits the wrist. Depending on the user's impression of the screen image, the user may modify the design for a watchcase.

However, if wrist data of a user has not been registered, the fact is indicated (for example, a message "Enter your wrist data." appears). The user then clicks Designating and enters his/her sex and weight for registration.

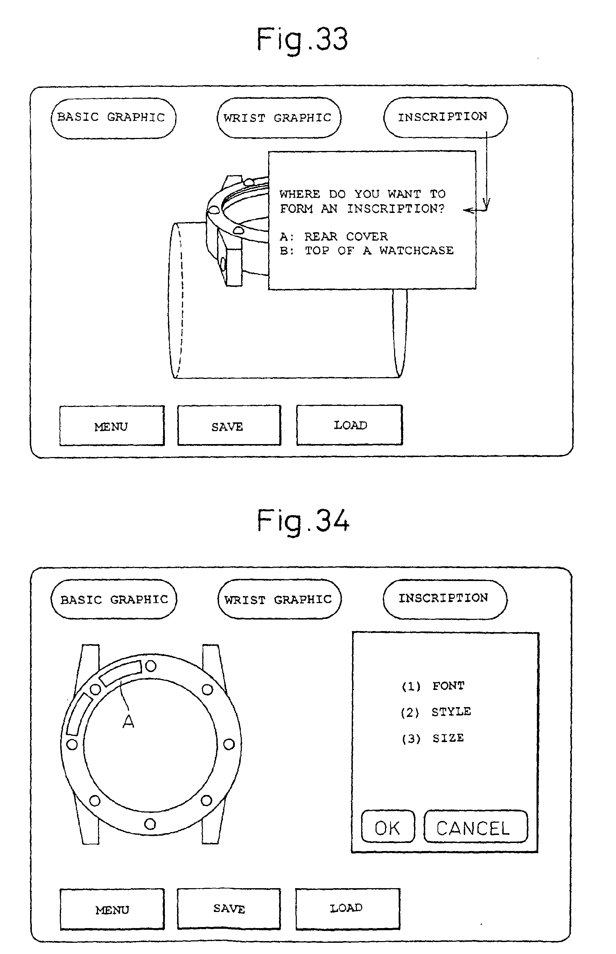

Fig. 33 shows a screen image to be displayed when Inscription is clicked in the screen image shown in Fig. 30. If Inscription is clicked, options of places where an inscription is formed, that is, Rear Cover and Top of a Watchcase are listed. If a stationary or rotational bezel is incorporated, Top of a Stationary Bezel or Top of a Rotational Bezel is listed. A user selects, for example, Rear Cover and enters characters to be inscribed in the screen image. Areas in which characters can be entered and which correspond to predetermined places on the rear cover of a watchcase are defined in the screen image with, for example, three rectangular frames. Furthermore, either of Gothic and Mincho is selected as a font for the characters to be inscribed. Moreover, a style and a size are designated for the characters to be inscribed.

Fig. 34 shows a screen image to be displayed in a case where characters are inscribed on the top of a watchcase. As illustrated, characters are to be inscribed in a narrow even area A on the top of a watchcase. The watchcase is of a user's design shown in Fig. 31.

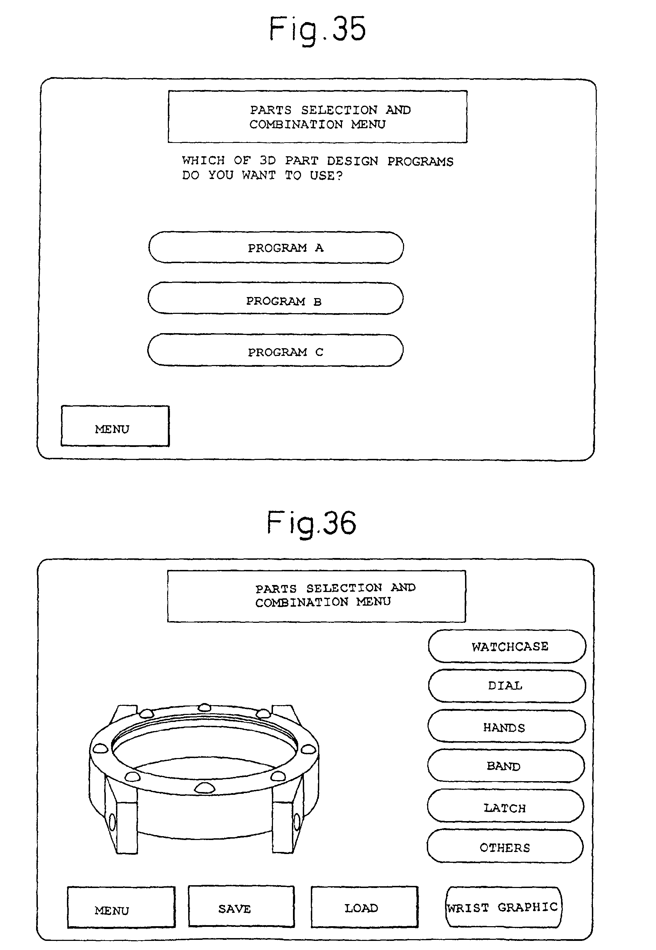

Fig. 35 shows a parts selection and combination menu. Specifically, if the option "Designating part graphics other than a watchcase graphic" is selected in the screen image shown in Fig. 25, this screen image appears. Program A, Program B, and Program C are listed so that a user can select a desired three-dimensional part design program.

Fig. 36 is a menu listing parts other than a watchcase and presenting a watchcase graphic that exhibits a user's design. Specifically, for example, if Program A is selected in the screen image shown in Fig. 35, a selected three-dimensional part design program is activated. As illustrated, such menu items as Watchcase, Dial, Hands, (movement), Band, Latch, Miscellaneous, and Wrist Graphic are listed. Furthermore, as a watchcase graphic appealing to a user has been determined through the aforesaid procedure, the watchcase graphic is displayed. As described below, the user determines the other part graphics in line with the watchcase graphic.

First, the user clicks Watchcase, and enters his/her name and password. File numbers of watchcase data are then listed. A predetermined file number is clicked. Consequently, a three-dimensional graphic exhibiting the user's design for a watchcase is displayed as illustrated.

Thereafter, if Dial is clicked, the next screen image appears. Options "Adopting your illustration for a dial" and "Selecting a dial graphic" are listed.

If "Selecting a dial graphic" is clicked, the next screen image appears. A plurality of dial graphics expressing different specifications is listed in the form of three-dimensional graphics. What are referred to as specifications describe a pictorial pattern on a dial, a tone, time lettering, presence or absence of a partition, the position of the partition, and so on.

A user selects one of dial graphics and clicks it. The next screen image than appears. The selected dial graphic is displayed while being enlarged. The dial graphic can be displayed while being turned, moved, enlarged, or reduced. Moreover, the dial graphic may be displayed three-dimensionally. If the dial graphic appeals to the user, the user clicks an OK button.

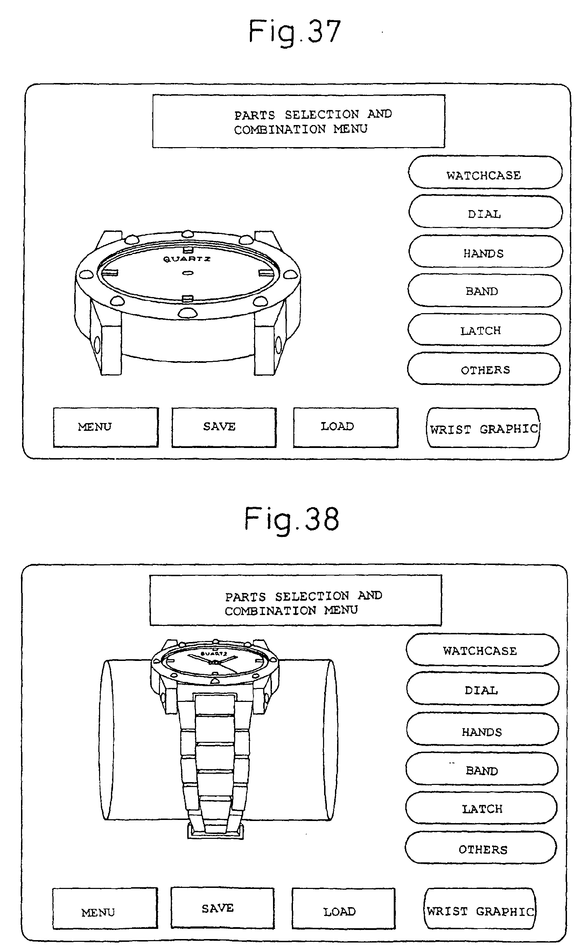

Fig. 37 shows a screen image presenting a watchcase graphic that has the selected dial graphic integrated therewith. After a dial graphic is selected according to the foregoing procedure, if the OK button is clicked, the dial graphic is integrated with the watchcase graphic. In this case, the watchcase graphic having the dial graphic integrated therewith can be freely turned, moved, enlarged, or reduced so that the integrated graphic can be observed from various view points. In order to check the specifications, Dial is clicked. Thus, the specifications for a dial can be re-determined according to the foregoing procedure.

For example, if Band is clicked in the menu screen image shown in Fig. 37, a plurality of band graphics is displayed in the form of a list. Similarly to the foregoing procedure of selecting a dial graphic, a band graphic is selected. If the OK button is clicked, the band graphic is displayed while being coupled to the watchcase graphic.

Fig. 38 is a screen image presenting a finished wristwatch graphic combined with a wrist graphic as if to show a finished wristwatch worn on a wrist. After a dial graphic and a band graphic are selected, a hand graphic and a latch graphic are selected in the same manner. Furthermore, after Wrist Graphic is clicked and a user's name and password are entered, when Displaying is clicked, a finished wristwatch graphic is displayed while being combined with a wrist graphic as if a finished wristwatch is shown while being worn on a wrist. In this case, the wrist graphic and wristwatch graphic may be displaced and disposed to appear as if the periphery of the wrist is in contact with the back of the watchcase and the wrist is encircled with the wristwatch (with a ring defined with the watchcase and a band). Consequently, the user can discern the wristwatch size relative to the wrist size or how well the wristwatch fits the wrist. Furthermore, the user may change selection of part graphics in consideration of the results of discernment.

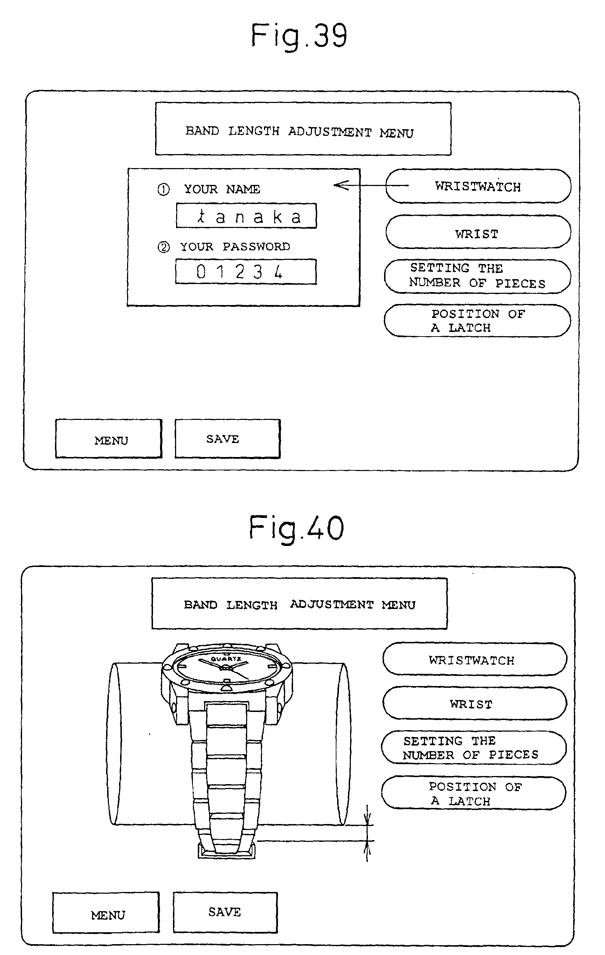

Fig. 39 shows a band length adjustment menu. Specifically, if the option "Adjusting a band length" is selected in the screen image shown in Fig. 25, this screen image appears. After Wristwatch is clicked, when a user's name and password are entered, a wristwatch graphic exhibiting the user's design and being created according to the foregoing procedure is displayed. If Wrist is clicked, after the user's name and password are entered, a wrist graphic created according to the foregoing procedure is displayed.

Fig. 40 shows a band length adjustment menu presenting both a wristwatch graphic and a wrist graphic. As illustrated, the wrist graphic is automatically displayed as if the periphery of a wrist is in contact with the back of a watchcase and the wrist is encircled with the ring of the wristwatch. At this time, the wristwatch graphic is disposed in the middle in the longitudinal direction of the wrist graphic.

Thereafter, if the user clicks "Setting the number of pieces," a message "Enter the number of pieces to be removed." appears so as to prompt the user to enter the number of pieces to be removed. The user enters the number of pieces to be removed as, for example, "2" or any other approximate value.

In this case, calculation is performed according to the sequence described in Fig. 20 and Fig. 21. If the number of pieces to be removed is too large, a message "The inner periphery of the wristwatch is shorter than the periphery of the wrist." appears. The user then clicks the Return button, and re-enters the number of pieces to be removed as, for example, "1."

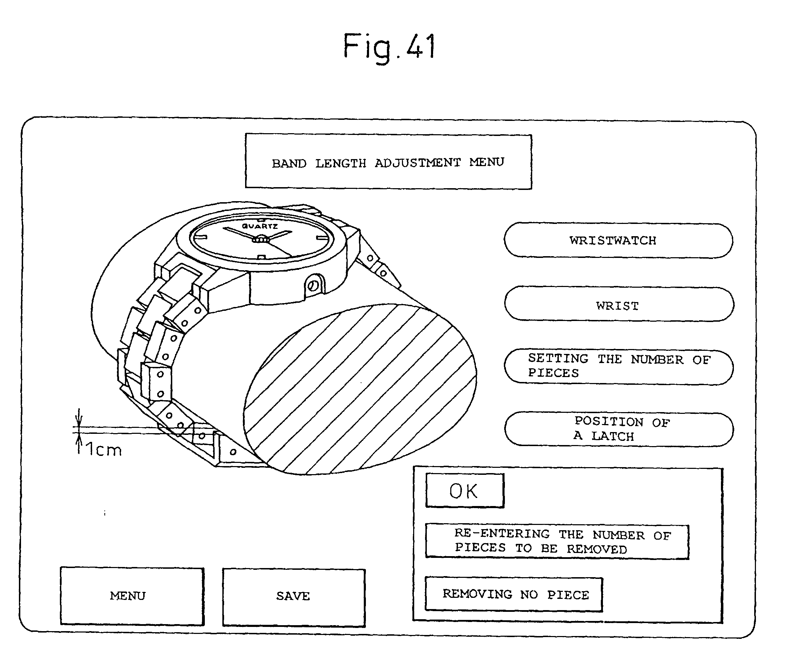

Fig. 41 shows a band length adjustment menu presenting a wristwatch graphic that reflects an adjusted number of pieces. As illustrated, for confirmation, a wristwatch graphic and a wrist graphic are displayed as if there is a gap (1 cm) between the anterior part of a wrist and the inner surface of the lower part of the ring of a wristwatch (the inner surface of a latch). Based on the numerical value (1 cm) and discernment of the three-dimensional graphics, an actual feeling (a tight or loose feeling) the user will have when he/she wears the wristwatch can be recognized. The three-dimensional graphics can be displayed while being turned, moved, enlarged, or reduced, and can be observed from various view points. If the three-dimensional wristwatch graphic appeals to the user, the user clicks the OK button. The user then enters his/her name and password so as to register the three-dimensional wristwatch graphic. In contrast, if the user is dissatisfied with the three-dimensional wristwatch graphic, the user clicks "Reentering the number of pieces" and re-enters the number of pieces according to the foregoing procedure. Incidentally, "Position of a latch" is clicked in order to perform fine adjustment of a band length by changing holes in a latch in addition to ordinary adjustment thereof by changing the number of pieces.

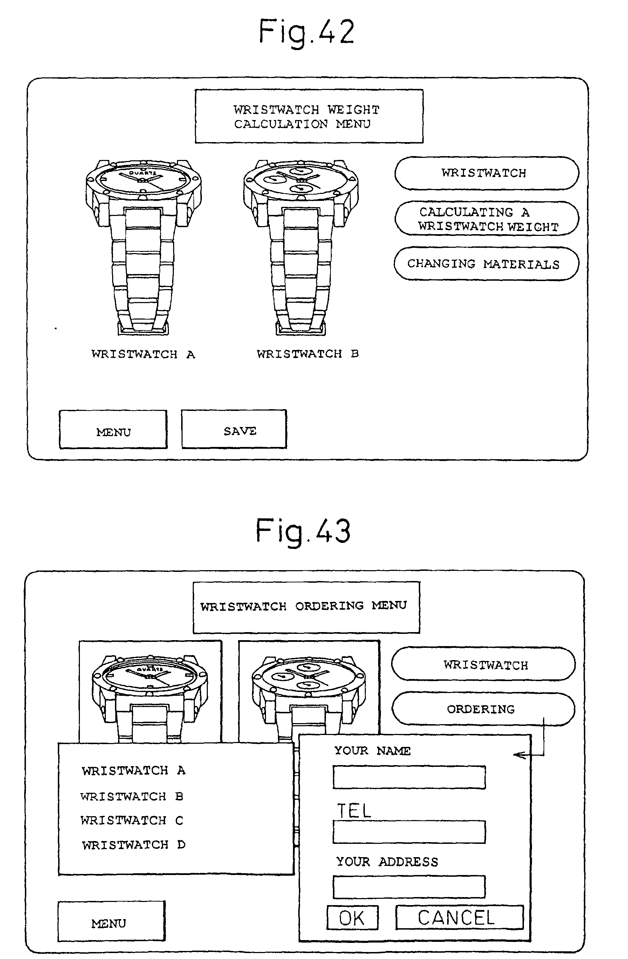

Fig. 42 shows a wristwatch weight calculation menu. Specifically, if the option "Calculating a wristwatch weight" is selected in the menu screen image shown in Fig. 25, this screen image appears. If Wristwatch is clicked, after a user's name and password are entered, a wristwatch graphic of the design completed according to the foregoing procedure is displayed. As illustrated, two wristwatch graphics of Wristwatch A and Wristwatch B expressing different dials are displayed.

Thereafter, if Weight Calculation is clicked, the next screen image appears. The wristwatch weights for Wristwatch A and Wristwatch B, for example, 150 g and 120 g are indicated. A wristwatch weight is calculated according to the sequence described in Fig. 22.

Thereafter, if Changing Materials is clicked, the next screen image appears. Options of Stainless Steel, Titan, and Titan Alloy are listed. Incidentally, a user may be informed of the fact that a titanium-made wristwatch is more expensive than a stainless steel-made wristwatch.

Fig. 43 shows a wristwatch ordering menu. Specifically, if the option "Placing an order for a wristwatch" is selected in the screen image shown in Fig. 25, this screen image appears. If Wristwatch is clicked, after a user's name and password are entered, the wristwatch graphics of Wristwatch A and Wristwatch B exhibiting the designs created according to the foregoing procedure are displayed. Thereafter, Ordering is clicked, and the user's name and password are entered. For example, Wristwatch A is selected, and 1 is entered as a quantity for Wristwatch A.

Thereafter, the user confirms his/her address and telephone number. If the user clicks the OK button, the next screen appears. Methods of payment are presented. The user selects any of the methods, that is, any of "Payment to an account at a post office," "Payment using a credit card," and "Payment in exchange for a product." If "Payment using a credit card" is selected, a credit card number, a credit card type, and a date of expiration are entered. After these items are entered, the user reviews the contents of entry. Finally, the user clicks the OK button.

If the OK button is clicked, a message given by the watch vendor, for example, "Thank you very much for buying a wristwatch." appears.

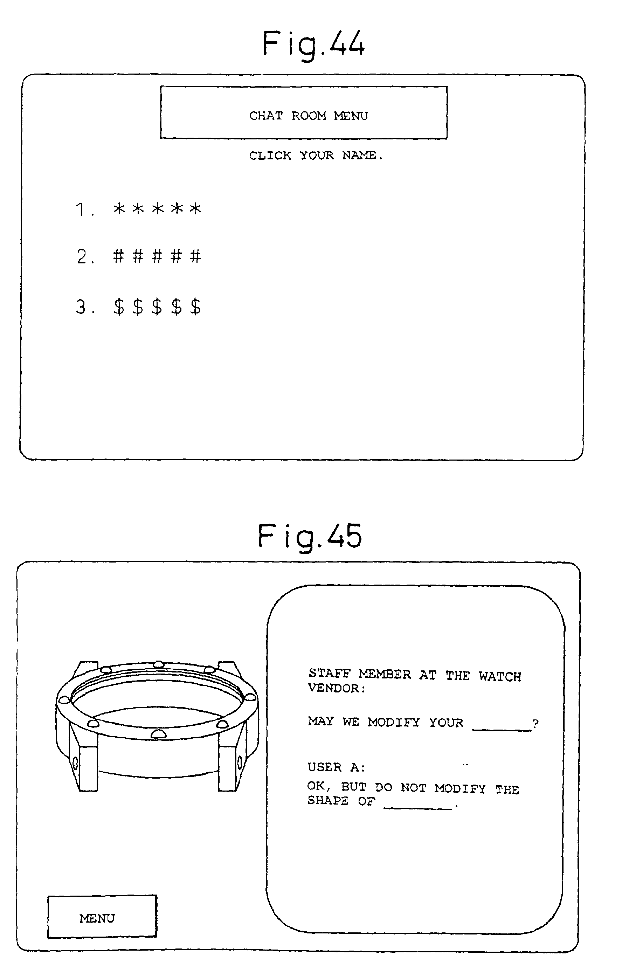

Fig. 44 shows a chat room menu enabling information exchange. Fig. 45 shows a screen image to be displayed after a user's name is entered in the screen image shown in Fig. 44. According to the present invention, the design-for-product creating system offers a (chat) feature enabling information exchange so that: if manufacturing a part according to a user's design poses a problem, the watch vendor can ask a user if they can modify the user's design. Specifically, the watch vendor informs the user of a time zone during which the watch vendor may transmit a message to the user by e-mail, and thus asks the user to access the chat room. Furthermore, the watch vendor not only delivers a finished article of a wristwatch to the user but also uses the chat room to receive the user's impression or opinion on the delivered article or to exchange information with a user.

For example, if watchcase data represents a user's drawing based on which machining is hard to do or it is hard to manufacture a product, the user's name is presented in the chat room indexed on the home page contained at the Web site of the watch vendor. An e-mail is sent to the user, whereby the user is informed of a date when the watch vendor can chat with the user (a date when a staff member of a designing section in the watch vendor can attend to the user). The user receives the e-mail and accesses the chat room indexed on the home page contained at the Web site of the watch vendor. The user then clicks his/her name, and a password entry screen image appears. The user then enters the password the user has used to design a wristwatch.

Owing to the above procedure, a chat screen image appears on the user's personal computer. Furthermore, a three-dimensional graphic represented by the watchcase data is displayed on the chat screen image. When the chat screen image appears, the staff member in charge of designing at the wristwatch vendor and the user talk about modification of the user's design while looking at the three-dimensional graphic represented by the watchcase data. Finally, both the staff member and user agree with each other on the contents of design modification. The staff member in charge of designing at the wristwatch vendor preserves the watchcase data, which represents the modified design, in a watchcase data file assigned to the user.

As described above, according to the first aspect of the present invention, the design-for-product creating system permits a user to change the shapes of a certain part according to the user's likes. More particularly, a user uses his/her personal computer to change or design the shape of the certain part with the help of a three-dimensional part design program and digital part data provided by a product vendor. Compared with a conventional system permitting a user to select any part graphic expressing a part and created by a product vendor, the design-for-product creating system can provide a custom-made product that more faithfully reflects a user's intention.

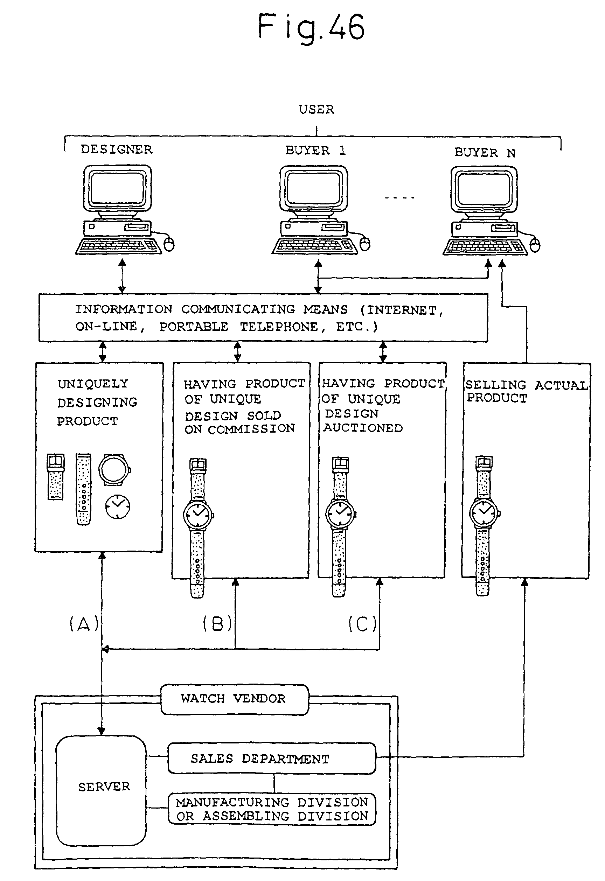

Fig. 46 shows the configuration of a design-for-product processing system in accordance with the second aspect of the present invention. As described above, a user who uniquely designs a product or a part using a graphic shall be called a "designer." A user who wants to purchase a product or part of a unique design that is sold on commission or a user who wants to participate in an auction shall be called a "buyer." Moreover, as illustrated, a plurality of users is connected to a product vendor (in this case, a watch vendor) over, for example, the Internet.

The system configuration can be adapted to a part of a user's unique design, though the system configuration adapted thereto is not illustrated for brevity's sake. In this case, the term "a product of a unique design" in (B) and (C) in Fig. 46 shall read as "a part of a unique design."

Referring to Fig. 46, arrows (A) indicate a link to be established through the design-for-product creating system or design-for-wristwatch creating system proposed by the same applicant. Briefly, according to the system, a user who wants to uniquely design a wristwatch is provided with a predetermined product design program and part design data by a watch vendor, and uniquely designs a wristwatch using the program and data. The user then transmits design data to the watch vendor over the Internet. The watch vendor in turn manufactures a wristwatch of the user-desired unique design, and delivers a finished particle to the user. In this case, the user refers to the above "designer."

To be more specific, the designer accesses a home page, which enables product designing and is contained in a Web site of the watch vendor, over the Internet. At this time, the designer uses his/her personal computer installed at home or at an office, a portable information terminal such as a mobile terminal or a notebook computer, or a portable telephone to access the home page over the Internet. The home page at the Web site of the watch vendor is described in order to permit the designer to interactively proceed with designing of a wristwatch with the help of a product design program stored in a recording medium incorporated in a server installed at the watch vendor. The designer uses a product design program residing in the server to freely and uniquely design a wristwatch.

For example, a plurality of part design data items (also referred to as virtual part data items) representing part graphics with which a wristwatch graphic is composed is stored in the server at the watch vendor. Herein, the part design data is electronic data including graphic data. The designer runs a product design program, looks at part graphics (which may be referred to as virtual parts) retrieved by way of the home page, and selects virtual parts that match his/her likes. The user then combines the plurality of selected virtual parts to complete a wristwatch graphic exhibiting a unique design for a wristwatch. The data representing the unique design for a wristwatch is stored in the server at the watch vendor.

In this case, a product design program may include a program that permits a designer to freely change the two-dimensional or three-dimensional shape of a virtual part. Otherwise, the product design program may include a program that permits the designer to download the two-dimensional or three-dimensional shape of a part of a unique design the designer has created using his/her personal computer. Furthermore, the product design program may include a program that downloads a computer graphic uniquely created by the designer or image data produced by a digital camera as part data representing a unique design. Furthermore, the product design program or at least part of virtual part data may be downloaded into the designer's personal computer.

The server adopts as a mailing means, which is one of information communicating means, a recording medium in which a product design program and a group of virtual part data items are stored, a magnetic recording medium, for example, a floppy disk, an optical recording medium such as a CD-RW, or a magneto-optical recording medium. The server then provides the designer with the product design program and the group of virtual part data items by utilizing the mailing means. In this case, the designer loads the recording medium in his/her own personal computer, and uses the product design program and virtual part data to complete a unique design for a product. The designer completes a unique design for a wristwatch using the recording medium provided by the watch vendor or any other recording medium, and then stores data representing the completed unique design for a wristwatch in the recording medium provided by the watch vendor or any other recording medium. The designer then mails the recording medium, in which the data representing the unique design for a wristwatch is stored, to the watch vendor.

Furthermore, if the designer is a retailer, a business office, or an agency, a terminal at the designer and the server at the watch vendor may be connected to each other on-line or using any information communicating means. Even in this case, similarly to when the terminal and server are connected to each other over the Internet, a product design program and virtual parts stored in the server can be utilized over, for example, a leased line.

Arrows (B) and (C) in Fig. 46 indicate links established through a design-for-product processing system in accordance with the present invention. Even this embodiment will be described on the assumption that a product is a wristwatch. The link (B) in Fig. 46 is established through a system for selling on commission a product (wristwatch) of a user's unique design or a part thereof. The link (C) therein is established through a system for auctioning a product (wristwatch) of a unique design or a part thereof.

To begin with, the consignment sale system through which the link (B) is established will be described below. As mentioned above, a designer issues a notice of consignment, which says that the designer will consign the sale of a product or part of his/her unique design to a watch vendor that is a product vendor, to the watch vendor over the Internet or on-line. In this case, the designer may issue the notice of consignment to the watch vendor by e-mail over the Internet. The designer may fill in a predetermined form indexed in a home page which is contained in a Web site of the watch vendor and which the designer accesses over the Internet, and may thus notify the watch vendor of consignment. When the notice of consignment is issued on-line, the designer may fill in a predetermined form at his/her personal computer and may thus notify the watch vendor of the consignment.

In response to the notice of consignment received from the designer, the server installed at the watch vendor indexes, in the predetermined home page, the product or part of the unique design that is provided as a virtual product or virtual part. An unspecified number of users can access the home page. The product or part of the unique design is sold on commission. As is apparent from a description to be made later, the watch vendor actually manufactures a product or part of a unique design created by a designer in compliance with an designer's order, and delivers the manufactured product or part to the designer. Alternatively, a product or part of a unique design created by the designer is sold on commission or auctioned in conformity with a notice of consignment sent from the designer. Therefore, in the foregoing stage, what is actually created is only a unique design for a product or part. A product or part of a unique design exists in the form of a product or part graphic in the watch vendor but does not exist as an actual product (wristwatch) or part.

Next, an auction system through which the link (C) is established will be described below. As mentioned above, a designer issues a notice of consignment, which says that the designer will consign the sale at an auction of a product or part of his/her unique design to a watch vendor that is a product vendor, to the watch vendor over the Internet or on-line. In response to the notice of consignment received from the designer, the server installed at the watch vendor indexes in the predetermined home page the product or part of the unique design, which is presented as a virtual product or part, in compliance with the notice of consignment. Incidentally, a unique design for a product or part handed to the server may be called a virtual product or part. An unspecified number of users can access the home page, and the virtual product or part consigned to be auctioned is auctioned.

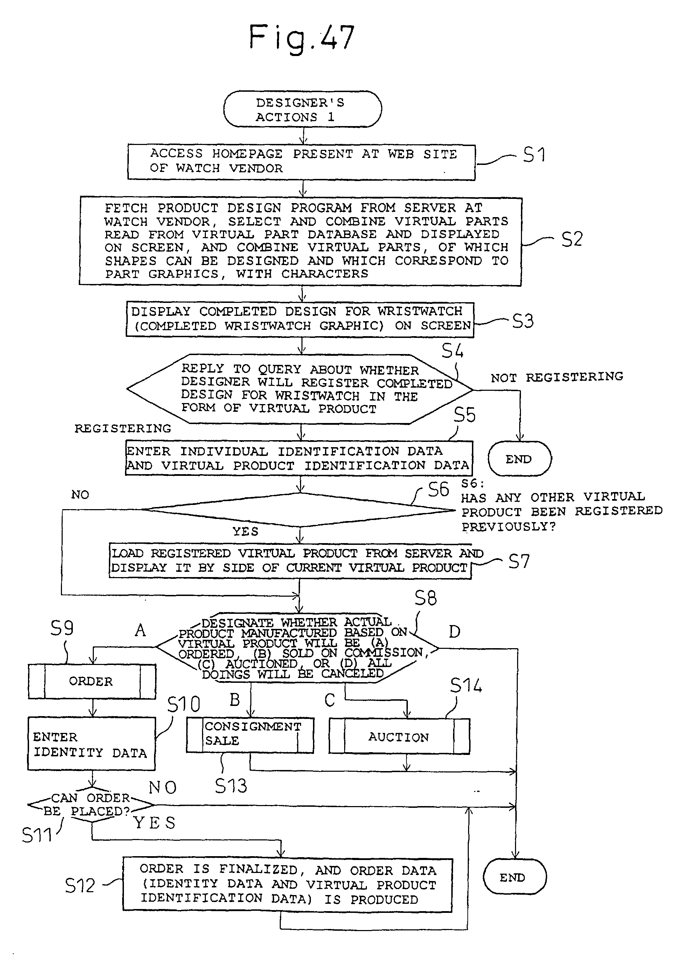

Fig. 47 is a basic flowchart describing a sequence to be performed by the design-for-product processing system in accordance with the present invention. Referring to Fig. 46, a procedure to be followed by a designer will be described below. A description will be made on the assumption that a product is a wristwatch.

First, in order to establish the link (A) shown in Fig. 46, a designer accesses a home page present at a Web site of a watch vendor over the Internet (S1). Thereafter, the designer fetches a product design program that resides in a server installed at the watch vendor and also reads a virtual part database. The designer selects virtual parts, which match his/her design for a wristwatch, from the pluralities of virtual parts displayed on a display screen, and combines the selected virtual parts. Thus, the designer creates a unique design for a wristwatch by combining part graphics that are virtual parts whose shapes can be designed and characters (S2). A completed design for a wristwatch is displayed on the designer's personal computer. Furthermore, the watch vendor queries the designer if the designer wants to register the completed design for a wristwatch in the form of a virtual product. The designer judges whether he/she will register the completed design for a wristwatch, and then replies to the watch vendor (S4).

If the designer wants to register the completed design for a wristwatch, the designer enters his/her individual identification data and virtual product identification data (S5). The designer then judges whether he/she has already registered another virtual product (S6). If the designer has already registered another virtual product, the designer loads the registered product from the server at the watch vendor and displays it by the side of the current virtual product (S7).

Thereafter, the designer judges (A) whether he/she will have a product or part of the user's unique design, which exists as a virtual product or part, actually manufactured by the watch vendor, and then place an order with the watch vendor for the product or part of the unique design. Otherwise, the designer judges (B) whether he/she will have the product or part of the unique design sold on commission by the watch vendor. Otherwise, the designer judges (C) whether he/she will have the product or part of the unique design auctioned by the watch vendor. Otherwise, the designer judges (D) whether he/she will cancel all the operations (S8).

If the designer places an order, the designer follows a certain procedure to place an order with the watch vendor by displaying successive screen images (S9). The designer enters his/her identity data (S10), and judges whether an order can be placed with the conditions for order satisfied and sufficient data entered (S11). If the order is finalized, order data (identity data and virtual product identification data) is produced (S12).

If the designer wants to have an actual product manufactured based on a virtual product or part sold on commission by the watch vendor, the designer sends a notice of consignment to the watch vendor (S13). If the designer wants to have the actual product or part manufactured based on the virtual product or part auctioned by the watch vendor, the designer notifies the watch vendor of his/her intention (S14). These procedures will be described later.

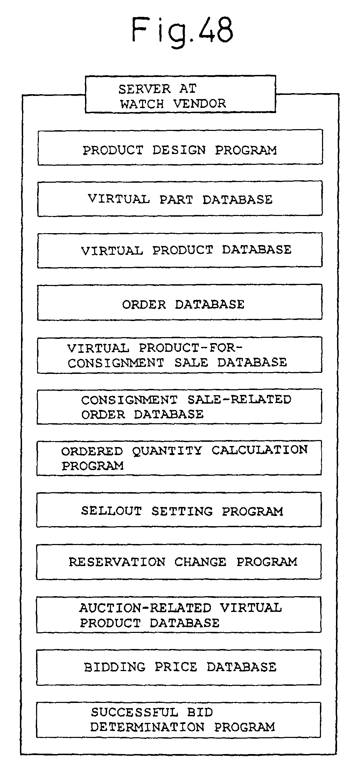

Fig. 48 shows the software configuration of the server installed at the watch vendor. As illustrated, a product design program, a virtual part database, a virtual product database, an order database, a virtual product-for-consignment sale database (including a virtual part-for-consignment sale database), a consignment sale-related order database, a ordered quantity calculation program, a sellout setting program, a reservation change program, a virtual product-for-auction database (including a virtual part-for-auction database), a bidding price database, and a successful bid determination program resides in the server. The product design program and virtual part database are used at step S2 described in Fig. 47. The virtual product database is used to register (S5) or load (S7) a virtual product as described in Fig. 47. The order database is used to store order data at step S12 at which the designer produces order data as described in Fig. 47.

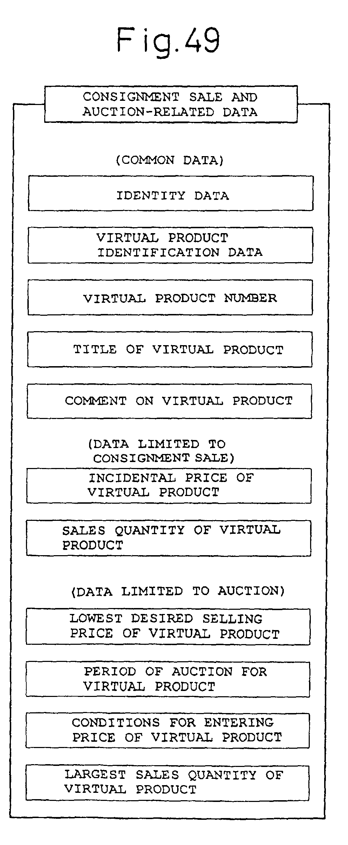

Fig. 49 is an explanatory diagram showing the data structure for consignment and auction-related data. Identity data with which the identity of a designer is proved, virtual product (part) identification data with which a virtual product (part) is identified and supplementary virtual-product (part) information which describes the contents of the virtual product (part) and provides relevant information, are specified as common data.

Referring to Fig. 4, a virtual product (part) number is specified as an example of the virtual product (part) identification data, and a title of a virtual product (part) is specified as an example of the supplementary virtual-product (part) information. Furthermore, a comment on a virtual product (part) is specified as another example of the supplementary virtual-product (part) information.

As the supplementary virtual-product (part) information, either of the title of a virtual product (part) and the comment on a virtual product (part) may be specified. Furthermore, introductory remarks on a designer or a photograph of the designer's face may be adopted as the supplementary virtual-product (part) information. The identity data, identification data, and supplementary information are required for auction as described later.

Moreover, as data limited to consignment sale, a incidental price of a virtual product (part) and a sales quantity of a virtual product (part) are specified. As data limited to auction, the lowest possible selling price of a virtual product (part), a period of auction for a virtual product (part), conditions for price entry for a virtual product (part), the largest sales quantity of a virtual product (part) are specified. Herein, the incidental price of a virtual product (part) signifies an amount of money which a designer adds to a set price of an actual product manufactured based on a virtual product. As for the set price, a product vendor should preferably determine this for an actual product in advance. The sum of the set price and incidental price is equal to the selling price of the actual product. A designer can arbitrarily determine the incidental price by estimating the value of the designer-created unique design for a product.

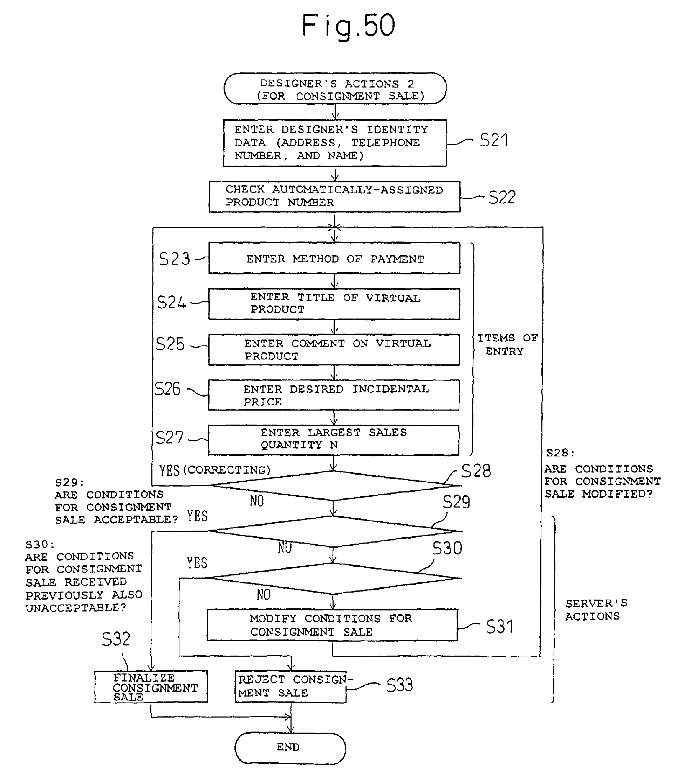

Fig. 50 is a flowchart describing actions of a designer to be performed for consignment sale. First, a designer enters identify data that specifies his/her address, telephone number, and name (S21). The designer then checks an automatically-assigned product number (or part number) (S22). The designer also enters a method of payment (S23), a title of a virtual product (part) (S24), and a comment on a virtual product (part) (S25). Furthermore, the designer enters a desired incidental price (S26) and the largest sales quantity N (S27). Thereafter, the designer checks the conditions for consignment sale (the conditions under which the watch vendor is requested to sell a product on commission) to see if the conditions should be modified (S28).

The server in turn judges whether the conditions for consignment sale entered by the designer are acceptable (S29). If the conditions for consignment sale are unacceptable, it is judged whether the conditions for consignment sale received previously are also unacceptable (S30). If the conditions for consignment sale received previously are not unacceptable, the server modifies the conditions for consignment sale (S31). If it is judged at step S29 that the conditions for consignment sale are acceptable, consignment sale is finalized (S32). If it is judged at step S30 that the conditions for consignment sale received previously are also unacceptable, consignment sale is rejected (S33). Data the server requires for consignment sale should specify, as listed in Fig. 49, identity data, virtual product (part) identification data, a virtual product (part) number, a title of a virtual product (part), a comment on a virtual product (part), an incidental price of a virtual product (part), and a sales quantity of a virtual product (part). These data items are recorded in the consignment sale-related virtual product (part) database shown in Fig. 48.

The criterion for judgment made at step S29 is such that if identity data, virtual product (part) identification data, and a method of payment are entered, the conditions for consignment sale are acceptable. Even if an incidental price of a virtual product (part) is not entered, the conditions for consignment sale may be acceptable.

Moreover, at step S22, a virtual product (part) number is automatically assigned as virtual product (part) identification data. Alternatively, a designer may be prompted to enter, for example, a password as the identification data. Otherwise, the designer may adopt a title of a virtual product (part) as identification data. The same applies to data entry to be performed for auction.

If it is found at step S23 that an actual product manufactured based on a virtual product (part) created by the designer has been sold on commission, the product vendor sells the actual product at a selling price, and pays an incidental price to the designer according to a method of payment.

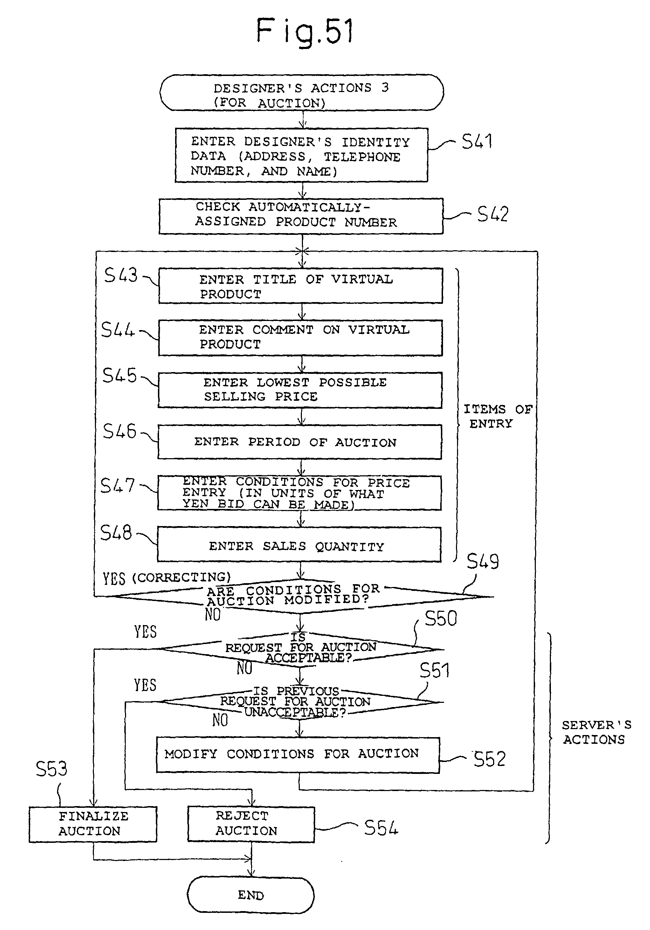

Fig. 51 is a flowchart describing actions of a designer to be performed for an auction. First, a designer enters identity data specifying his/her address, telephone number, and name (S41). Thereafter, the designer checks an automatically-assigned product (part) number (S42). Furthermore, the designer enters a title of a virtual product (part) (S43), a comment on a virtual product (part) (S44), and a desired incidental price (S45). Furthermore, the designer enters the period of the auction (S46), and the conditions for price entry (in units of how many yen a bid can be offered) (S47). The designer then enters a sales quantity (S48). Furthermore, the designer checks the conditions for auction the designer has entered to see if the conditions for auction should be modified (S49).

The server in turn judges whether the designer's request for auction is acceptable (S50). If the designer's request for auction is unacceptable, it is judged whether the previous request for auction is also unacceptable (S51). If the previous request for auction is not unacceptable, the conditions for auction are modified (S52). If it is judged at step S50 that the request for auction is acceptable, an auction is finalized (S53). If it is judged at step S51 that the previous request for auction is also unacceptable, the auction is rejected (S54). The data the server requires for an auction specifies, as listed in Fig. 49, identity data, virtual product (part) identification data, a virtual product (part) number, a title of a virtual product (part), a comment on a virtual product (part), a desired selling price of a virtual product (part), a period of auction for a virtual product (part), the conditions for price entry for a virtual product (part), and the largest sales quantity of a virtual product (part). These data items are recorded in the auction-related virtual product database shown in Fig. 48.

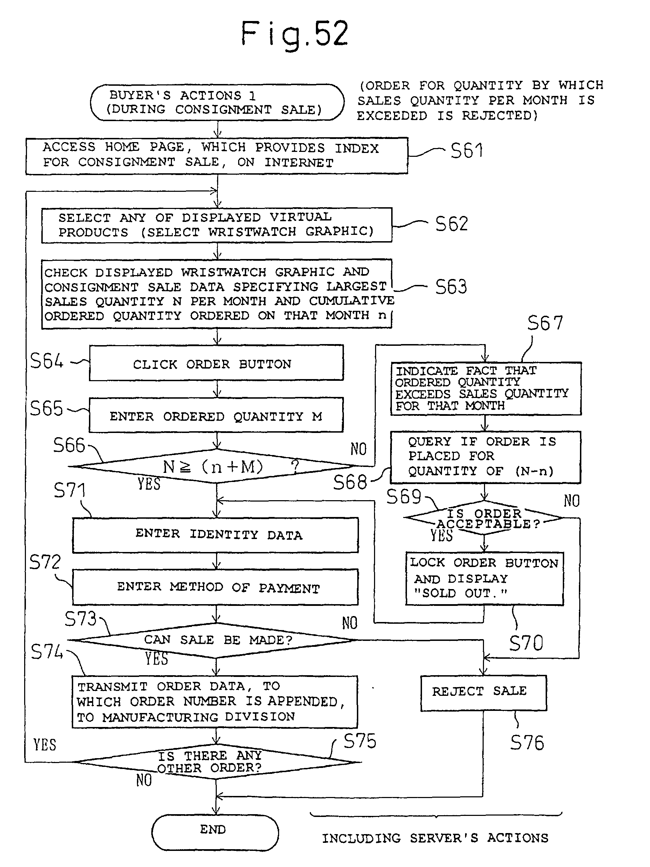

Fig. 52 is a flowchart describing actions of a buyer to be performed during consignment sale (part 1). As described previously, the term "buyer" refers to a user who wants to purchase a product or part of a unique design that is sold on commission, or a user who wants to participate in an auction. The flowchart is concerned with a case where, as the quantity ordered by a buyer exceeds the largest sales quantity for that month, the watch vendor rejects when an order for the quantity by which the largest sales quantity for that month is exceeded.

First, the buyer accesses a home page present at a Web site of a watch vendor over the Internet, and clicks an option Consignment Sale (S61). The buyer then selects a desired virtual product (that is, a wristwatch) (otherwise, a virtual part that is part of a virtual product that is a wristwatch graphic) from among virtual products (parts) that are product graphics displayed and downloaded from the server (S62). Thereafter, the buyer checks the displayed wristwatch graphic and consignment sale data (S63). The consignment sale data specifies the largest sales quantity N per month, and the cumulative quantity ordered in that month that is calculated by summing up ordered quantities according to an ordered quantity calculation program. Thereafter, the buyer clicks an Order button (S64) and enters an ordered quantity M (S65). The sellout setting program compares the largest sales quantity N with the sum of the cumulative ordered quantity on that month n and the ordered quantity M, that is, (n+M) to see which of them is larger (S66). If N>(n+M), an order can be placed and reservation data is produced. If N≥(n+M), an order can be placed or a reservation can be made and sellout is indicated.

As a result of comparison performed by the sellout setting program, if the sum of the cumulative ordered quantity on that month n and the ordered quantity M exceeds the largest sales quantity N, a message saying the fact is displayed (S67). The buyer is queried if he/she decreases the ordered quantity M and orders a quantity (N-n) alone (S68). If the buyer agrees to this proposal (S69), the Order button is locked and the sellout setting program displays the message "Sold Out" (S70). Thereafter, the buyer enters his/her identity data (S71) and a method of payment (S72). Produced order data is recorded in the order database.

The server judges whether a sale can be made (S73). If a sale can be made, order data to which an order number is appended is read from the order database and transmitted to a wristwatch manufacturing division (S74). It is then checked if the buyer has placed another order (S75). If the buyer has placed another order, control is returned to step S62. A virtual product (or part) is selected. If the buyer has placed no order, a consignment sale sequence is terminated. If a sale cannot be made, the watch vendor rejects the sale (S76).

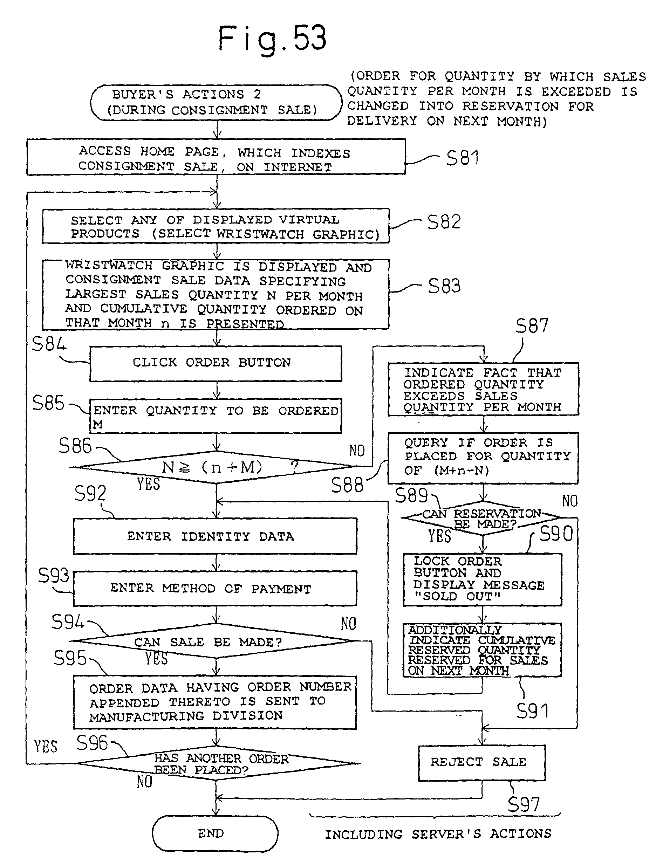

Fig. 53 is a flowchart describing actions of a buyer to be performed during consignment sale (part 2). The flowchart is concerned with a case where if a quantity ordered by a buyer exceeds the largest sales quantity for that month, a watch vendor changes an order for an exceeding quantity into a reservation for a sale on the next month. In this case, the watch vendor may determine the largest sales quantity according to productive capacity.

First, a buyer accesses a home page present at a Web site of a watch vendor over the Internet and clicks an option Consignment Sale (S81). The buyer then selects a desired virtual product (part) from among virtual products (parts) presented by a server (S82). The buyer then checks a displayed wristwatch graphic and presented consignment sale data (S83). The consignment sale data specifies the largest sales quantity N per month and a cumulative quantity n ordered in that month. The buyer clicks the Order button (S84), and enters a quantity to be ordered M (S85). The largest sales quantity N is compared with the sum of the cumulative quantity ordered on that month n and the ordered quantity M, that is, (n+M) (S86).

If the result of comparison demonstrates that the sum of the cumulative quantity ordered on that month n and the ordered quantity M exceeds the largest sales quantity N, the reservation change program displays a message saying the fact (S87). The reservation change program queries the buyer whether he/she wishes to reserve a quantity of (M+n-N) (S88). If the buyer agrees on the proposal (S89), the Order button is locked and switched to a Reserve button (S90). Furthermore, a cumulative reserved ordered quantity calculation program additionally indicates a cumulative quantity reserved for a sale in the next month (S91). Thereafter, the buyer enters his/her identity data (S92) and a method of payment (S93), whereby reservation data is produced. The reservation data may be recorded in a reserved order database different from the order database. The server judges whether a sale can be made (S94). If a sale can be made, order data with an order number appended thereto is transmitted to the wristwatch manufacturing division (S95). It is then checked whether the buyer has placed another order (S96). If the buyer has placed another order, control is returned to step S82. A virtual product (part) is selected. If the buyer has not placed another order, the consignment sale sequence is terminated. If it is judged at step S94 that a sale cannot be made, the watch vendor rejects the sale (S97).

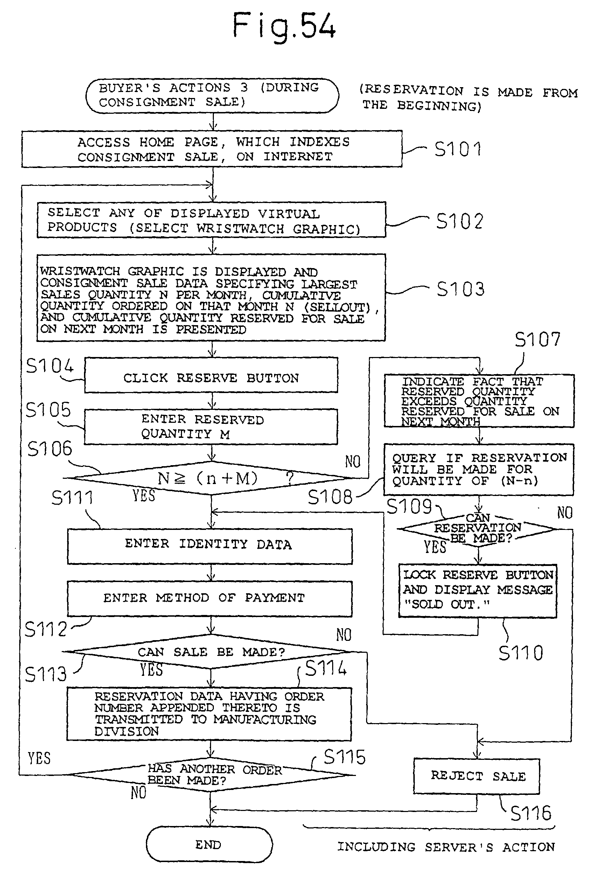

Fig. 54 is a flowchart describing actions of a buyer to be performed during consignment sale (part 3). The flowchart is concerned with a case where a reservation for a quantity ordered by a buyer is made from the beginning.

First, a buyer accesses a home page present at a Web site of a watch vendor on the Internet and clicks an option Consignment Sale (S101). The buyer selects a desired virtual product (or a part) that is a desired wristwatch graphic from among virtual products (parts) presented by the server (S102). The buyer then checks a displayed wristwatch graphic (or part graphic) and presented consignment sale data (S103). The consignment sale data specifies the largest sales quantity N per month, a cumulative quantity ordered on that month N (sellout), and a cumulative quantity reserved for a sale on the next month n. The buyer then clicks a Reserve button (S104) and enters a quantity to be reserved M (S105). The reservation sellout setting program compares the largest sales quantity N with the sum of the cumulative quantity reserved on that month n and the reserved quantity M, that is, (n+M) (S106). If N>(n+M), an order can be placed. Reservation data is therefore produced. If N≥(n+M), an order may be placed or a reservation is made and a message "Sold Out" is displayed.

If the result of comparison demonstrates that the sum of the cumulative quantity reserved for a sale on the next month n and the reserved quantity M exceeds the largest sales quantity on that month N, the server displays a message indicating the fact (S107). The server then queries the buyer whether the buyer will make a reservation for a quantity of (N-n) (S108). If the buyer agrees on the proposal (S109), the reservation sellout setting program is activated in order to lock the Reserve button and display the message "Sold Out" (S110). The buyer then enters his/her identity data (S111) and a method of payment (S112). The above description is concerned with a case where a reservation is made for a sale on the next month. Alternatively, the watch vendor can set any future time at which a sale of a reserved quantity will be made. Namely, a reservation may be made for a sale in the next week, for a sale a half year later, or for a sale in the next year. Furthermore, the server judges whether a sale can be made (S113). If a sale can be made, reservation data with an order number appended thereto is transmitted to a wristwatch manufacturing division (S114). The server then checks if the buyer has placed another order (S115). If the buyer has placed another order, control is returned to step S102. A virtual product (part) is then selected. If the buyer has not placed another order, the consignment sale sequence is terminated. If it is judged at step S113 that a sale cannot be made, the watch vendor rejects the sale (S116). Likewise, if a reserved quantity is sold out, a reservation for the next sale may be received.

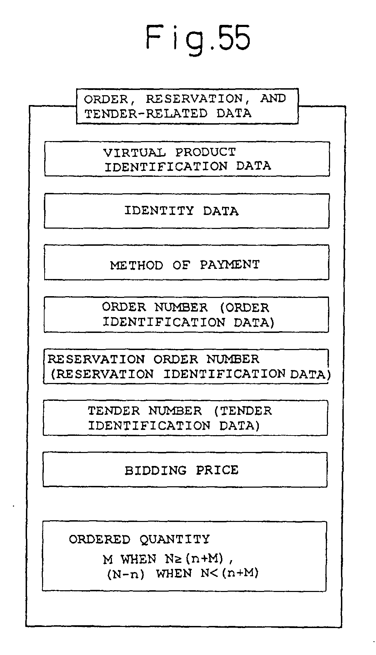

Fig. 55 is an explanatory diagram concerning order, reservation, and tender-related data. As illustrated, the order, reservation, and tender-related data specifies virtual product (part) identification data, identity data, a method of payment, an order number (identification data), a reservation order number (reservation identification data), a tender number (tender identification data), a bidding price, and an ordered quantity (M when N≥(n+M) or (N-n) when N<(n+M)). These data items are recorded as order data, reservation data, or tender data in the order database, reservation database, or tender database residing in the server when the server judges at a specific step in the foregoing consignment sale sequence that a consignment sale can be made.

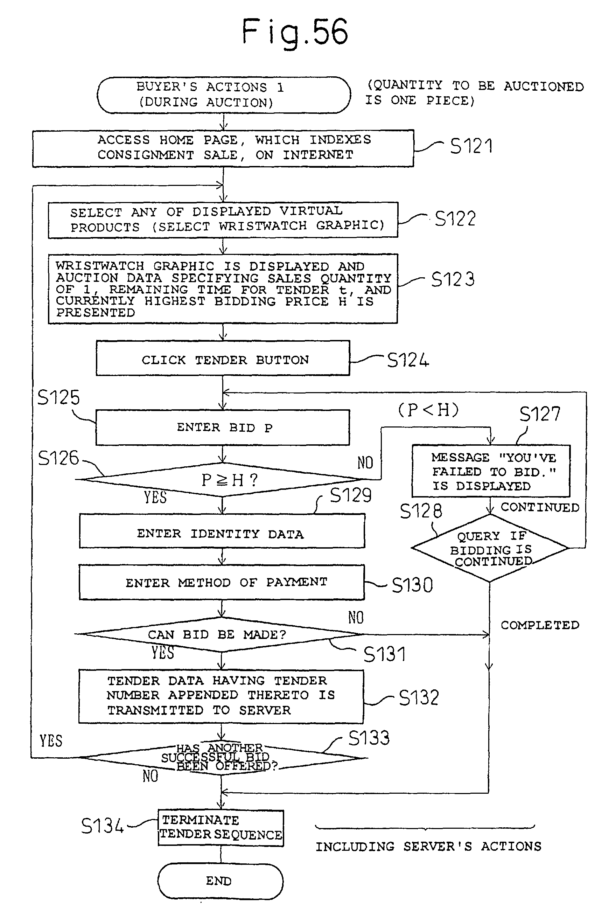

Fig. 56 is a flowchart describing actions of a buyer to be performed during an auction (part 1). This procedure is concerned with a case where a quantity to be auctioned is one piece. First, a buyer accesses a home page present at a Web site of a watch vendor on the Internet and clicks an option of Auction (S121). The buyer then selects a desired virtual product, which is a desired wristwatch (or a part) graphic, from among presented virtual products (parts) (S122). Thereafter, the buyer checks a displayed wristwatch graphic and presented auction data (S123). The auction data specifies a quantity to be sold of 1, a remaining time for tender t, (a time determined based on a period of auction a designer has designated according to a successful bid determination program), and the currently highest bidding price H. The buyer then clicks a Tender button (S124) and enters a bid P (S125). The server compares the bid P with the currently highest bidding price H. If the bid P is lower than the currently highest bidding price H (updated by the successful bid determination program), a message "You've failed to tender." appears (S127). The server then queries the buyer whether he/she will continue bidding, and judges whether the buyer wants to continue or complete bidding (S128). If the buyer wants to continue bidding, control is returned to step S125. If the buyer wants to complete bidding, the tender procedure is terminated.

If the bid P is higher than the currently highest bidding price H, the buyer enters his/her identity data (S129) and a method of payment (S130). The server judges whether a tender can be made (S131). If a tender can be made, a tender number is assigned and tender data is recorded in a tender database (S132). The server checks if the buyer has offered another successful bid (S133). If the buyer has offered another successful bid, control is returned to step S122. If the buyer has not offered any other successful bid, the tender procedure is terminated (S134). The successful bid determination program updates the highest bidding price H (namely, an auction screen image is read into the buyer's personal computer at predetermined intervals or when the highest bidding price H has changed). When t becomes equal to 0, the successful bid determination program locks the Tender button, and samples the highest bidding price H and associated buyer's identity data. The watch vendor then manufactures a wristwatch and sells it to the buyer.

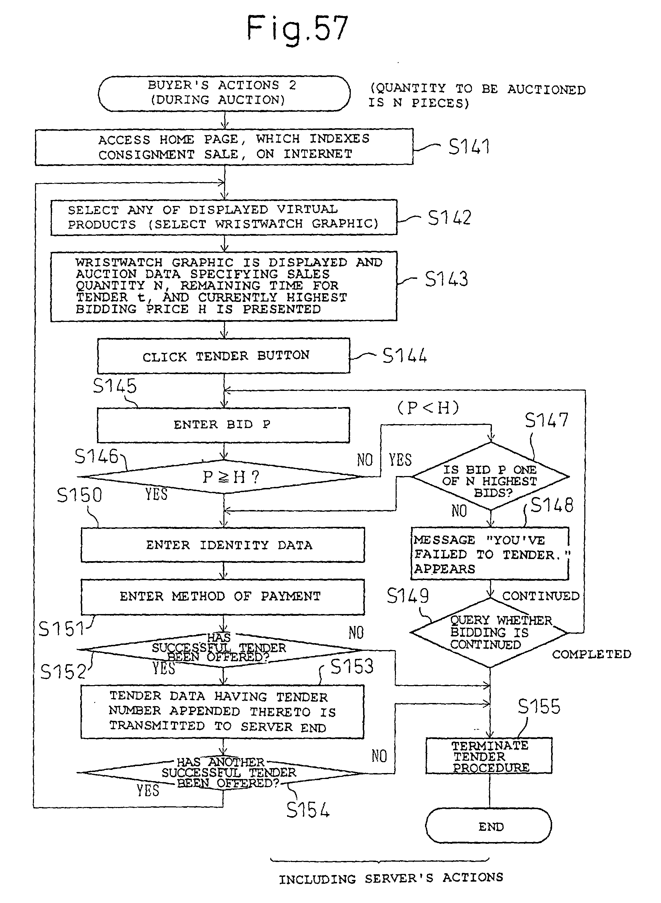

Fig. 57 is a flowchart describing actions of a buyer to be performed during an auction (part 2). This procedure is concerned with a case whether a quantity to be auctions is N pieces. First, a buyer accesses a home page present at a Web site of a watch vendor on the Internet and clicks an option Auction (S141). The buyer selects a desired virtual product, which is a desired wristwatch graphic (or part graphic), from among displayed virtual products (or parts) (S142). The buyer then checks a displayed wristwatch graphic and presented auction data (S143). The auction data specifies a quantity to be sold N, a remaining time for tender t, and the currently highest bidding price H. Thereafter, the buyer clicks a Tender button (S144) and enters a bid P (S145).

The server compares the bid P with the currently highest bidding price H. If the bid P is lower than the currently highest bidding price H, the server judges whether the bid P is one of the N highest bids (S147). If the bid P is not one of the N highest bids, a message "You've failed to bid." appears (S148). The server queries the buyer whether he/she will continue bidding. The server judges whether the buyer wants to continue or complete bidding (S149). If the buyer wants to continue bidding, control is returned to step S145. If the buyer wants to complete bidding, the tender procedure is terminated.

If the bid P is higher than the currently highest bidding price H, the buyer enters his/her identity data (S150) and a method of payment (S152). If the bid has been successfully made, a tender number is assigned and tender data is transmitted to the server (S153). The server checks if the buyer has offered another successful bid (S154). If the buyer has offered another successful bid, control is returned to step S142. If the buyer has not offered any successful bid, the tender procedure is terminated (S155). When t becomes equal to 0, the successful bid determination program samples the N highest bids.

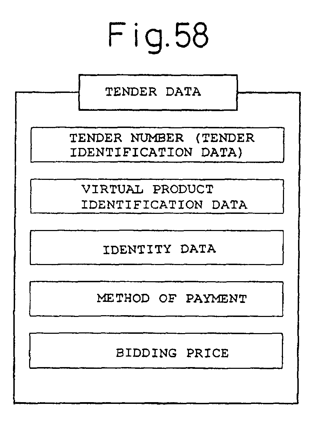

Fig. 58 is an explanatory diagram showing the structure of tender data. As illustrated, the tender data specifies a tender number (tender identification data), virtual product (or part) identification data, identity data, a method of payment, and a bidding price.

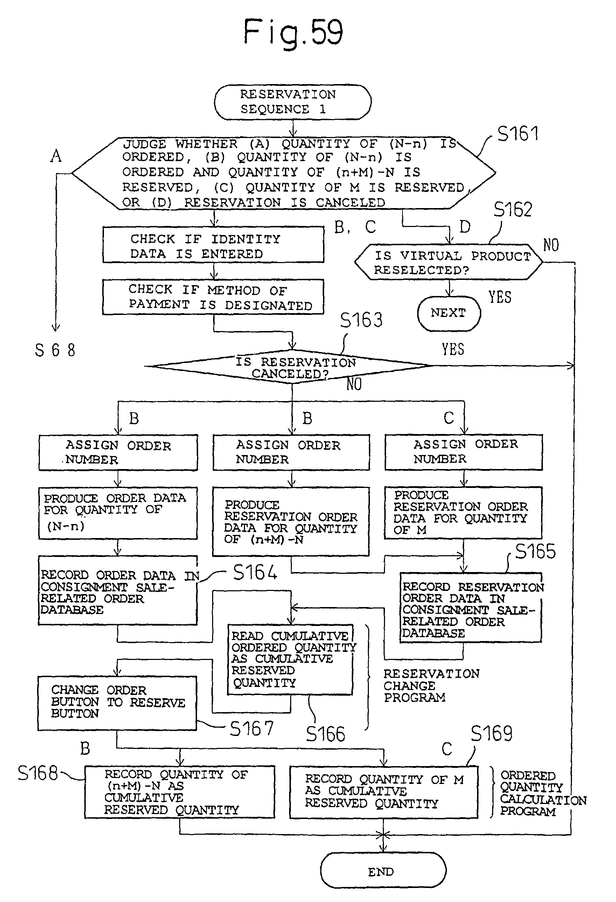

Fig. 59 is a flowchart describing a reservation sequence (part 1). A watch vendor judges whether (A) a buyer has ordered a quantity of (N-n), (B) a buyer has ordered a quantity of (N-n) and reserved a quantity of ((n+M)-N), (C) a buyer has reserved a quantity of M, or (D) a buyer has canceled a reservation (S161). In case of (A), step S68 described in Fig. 52 and subsequent steps are carried out. In case of (B) or (C), step S88 described in Fig. 53 and subsequent steps are carried out. In case of (D), it is judged whether the buyer reselects a virtual product (or part) (S162).

It is then checked if identity data and a method of payment have been entered, and if a reservation has been canceled (S163). If no reservation is canceled, a sequence to be performed in case of (B) or (C) is carried out. Specifically, according to a sequence (B) written on the left side of Fig. 59, once an order number is assigned, order data for a quantity of (N-n) is produced and recorded in the consignment sale-related order database (S164). According to the sequence (B) written in the center of Fig. 59, once an order number is assigned, reservation order data for a quantity of ((n+M)-N) is produced and recorded in the consignment sale-related order database (S165). According to the sequence (C), once an order number is assigned, reservation order data for a quantity of M is produced and recorded in the consignment sale-related order database (165).

Thereafter, the reservation change program is activated. A cumulative ordered quantity is read as a cumulative reserved quantity (S166), and an Order button is changed to a Reserve button (S167). Furthermore, the ordered quantity calculation program is activated. A quantity of ((n+M)-N) is recorded as a cumulative reserved quantity (S168), and a quantity of M is recorded as a cumulative reserved quantity (S169).

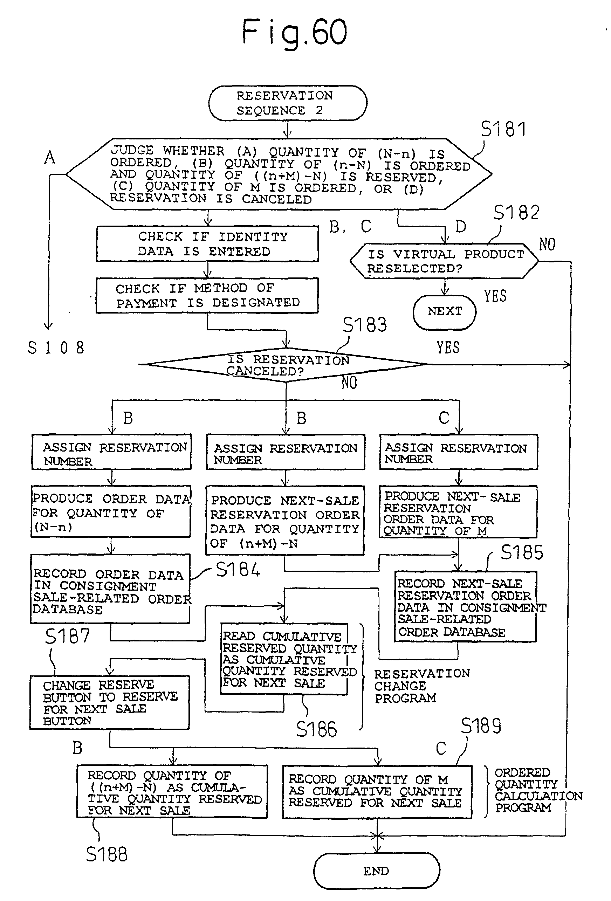

Fig. 60 is a flowchart describing a reservation sequence (part 2). A watch vendor judges whether (A) a buyer has ordered a quantity of (N-n), (B) a buyer has ordered a quantity of (N-n) and reserved a quantity of ((n+M)-N) for the next sale, (C) a buyer has reserved a quantity of M for the next sale, or (D) a buyer has canceled a reservation (S181). In case of (A), step S108 described in Fig. 54 and subsequent steps are carried out. In case of (B) or (C), step S88 described in Fig. 53 and subsequent steps are carried out. In case of (D), it is judged whether the buyer reselects a virtual product (S182).

It is then checked if identity data has been entered and a method of payment has been designated. It is also checked if a reservation has been canceled (S183). If no reservation has been canceled, a sequence B or C is carried out. Specifically, according to a sequence B shown on the left side of Fig. 60, once a reservation number is assigned, order data for a quantity of (N-n) is produced and recorded in the consignment sale-related order database (S184). According to a sequence B written in the center of Fig. 60, once a reservation number is assigned, next-sale reservation order data for a quantity of ((n+M)-N) is produced and recorded in the consignment sale-related order database (S185). According to a sequence C, once a reservation number is assigned, next-sale reservation order data for a quantity of M is produced and recorded in the consignment sale-related order database (S185).

Thereafter, the reservation change program is activated. A cumulative reserved quantity is read as a cumulative quantity reserved for the next sale (S186). A Reserve button is changed to a Reserve for Next Sale button (S187). Furthermore, the ordered quantity calculation program is activated. The quantity of ((n+M)-N) is recorded as a cumulative quantity reserved for the next sale (S188). The quantity of M is recorded as a cumulative quantity reserved for the next sale (S189).

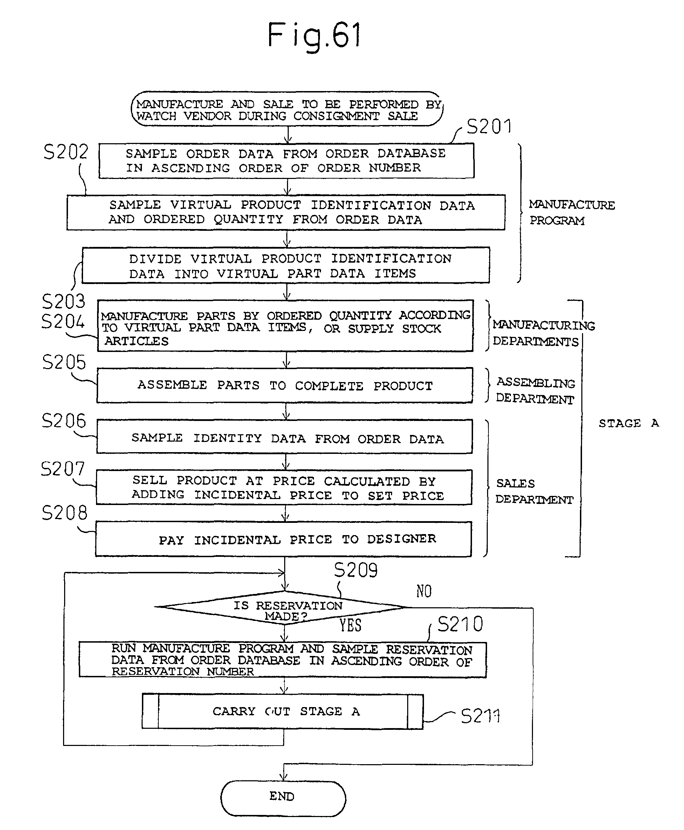

Fig. 61 is a flowchart describing actions of a watch vendor to be performed for manufacture and sale during consignment sale. A predetermined manufacture program is run in order to sample order data recorded in the order database shown in Fig. 55 (S201). Virtual product identification data and an ordered quantity are sampled from the order data (S202), and the virtual product identification data is divided into virtual part data items (S203). A product (wristwatch) manufacturing division manufactures parts by an ordered quantity according to the virtual part data items or supplies stock articles (S204). An assembling department assembles the parts to complete a wristwatch (S205). A sales department samples identity data associated with the order data (S206), and sells the product to a buyer at a price calculated by adding an incidental price to a set price (S207). The incidental price is then paid to a designer, who has created the unique design, over the link (A) shown in Fig. 46 (S208). The manufacture and sale is then suspended.

If a reservation is made (S209), the manufacturing program is run in order to sample reservation data recorded in the order database in ascending order of a reservation number. Virtual product identification data and an ordered quantity are sampled from the reservation data. The virtual product identification data is divided into virtual part data items (S210). The aforesaid steps S204 to S208 (stage A) are carried out and terminated (S211). Furthermore, virtual product identification data and an ordered quantity are sampled from next-sale reservation data. The steps S210 and S211 are then repeated.

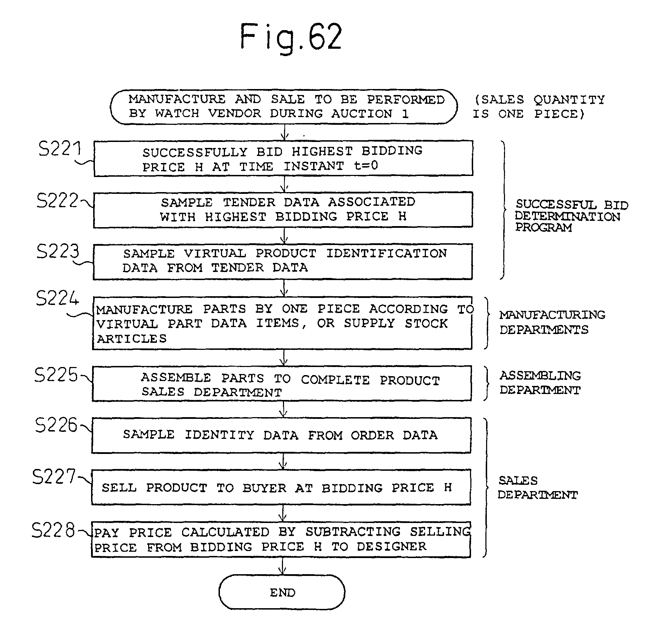

Fig. 62 is a flowchart describing actions of a watch vendor to be performed for manufacture and sale during auction (part 1). The auction sequence is concerned with a case where a sales quantity to be auctioned is one piece. The successful bid determination program is run. If the highest bidding price H is successfully bade for a virtual product at a certain time instant t=0 (S221), tender data associated with the highest bidding price H is sampled (S222). Virtual product identification data is then sampled from the tender data (S223). Thereafter, manufacturing departments manufacture parts for one piece according to the virtual part data items or supply stock articles (S224). An assembling department assembles the parts to complete a wristwatch (S225).

A sales department samples identity data associated with the order data (S226), and sells the wristwatch to a buyer at the bidding price H (S227). A price calculated by subtracting the selling price from the bidding price H is paid to a designer.

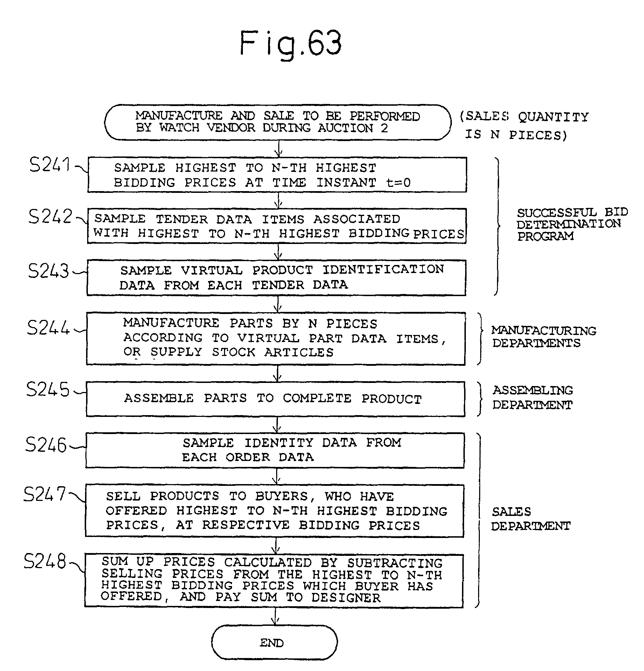

Fig. 63 is a flowchart describing actions of a watch vendor to be performed for manufacture and sale during an auction (part 2). The auction sequence is concerned with a case where a sales quantity to be auctioned is N pieces. The successful bid determination program is run. The highest to N-th highest bidding prices are sampled at a certain time instant (t=0) (S241). Tender data items associated with the highest to N-th highest bidding prices are sampled (S243), and virtual product identification data is sampled from each tender data (S243). Thereafter, manufacturing departments manufacture parts by N pieces according to virtual part data items or supply stock articles (S244). An assembling department assembles the parts to complete a wristwatch (S245).

Furthermore, a sales department samples identity data associated with each order data (S246), and sells wristwatches to buyers, who have offered the highest to N-th highest bidding prices, at the respective bidding prices (S247). Prices calculated by subtracting the selling prices from the highest to N-th highest bidding prices offered by the buyers are summed up and paid to a designer (S248).

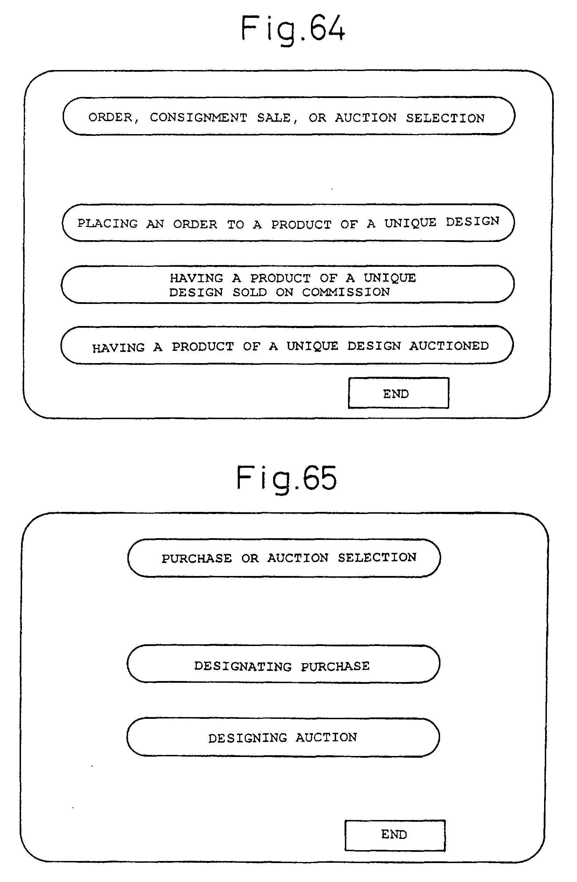

Fig. 64 shows an order, consignment sale, or auction selection menu to be displayed on a user's (designer's) personal computer. If an option "Placing an order for a product of a unique design" is clicked, screen images are switched successively in association with step S9 and subsequent steps described in Fig. 47. Accordingly, a product is uniquely designed. The same applicant has already applied for a patent on the details of the step of uniquely designing a product. Moreover, if an option "Having a product of a unique design sold on commission" is clicked, screen images associated with steps S21 to S28 described in Fig. 50 are displayed successively. If an option "Having a product of a unique design auctioned" is clicked, screen images associated with steps S41 to S49 described in Fig. 51 are displayed successively.

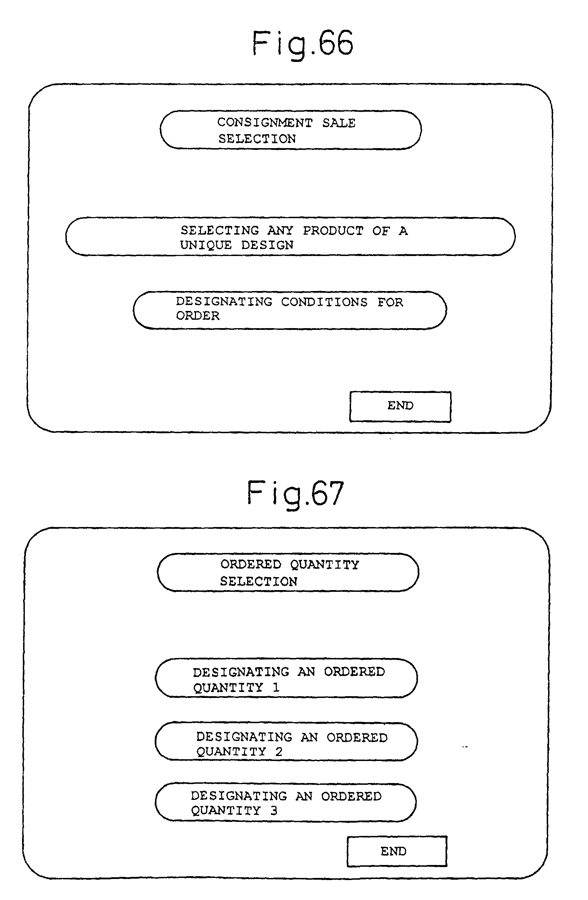

Fig. 65 shows a purchase or auction selection menu to be displayed on a user's (buyer's) personal computer. If an option "Designating purchase" is clicked, a consignment sale procedure screen image shown in Fig. 66 appears. If an option "Designating auction" is clicked, an auction procedure screen image appears.

Fig. 66 shows a consignment sale menu to be displayed on a user's (buyer's) personal computer. If "Designating purchase" is selected in the menu shown in Fig. 65, this screen image appears. If a buyer clicks an option "Selecting any product of a unique design," several products of designers' unique designs are presented. When the buyer selects a product of a unique design he/she wants to purchase, the previous screen image (Fig. 66) appears. The buyer clicks the option "Designating conditions for order."

Fig. 67 shows an ordered quantity selection menu to be displayed when the option "Designating conditions for order" is clicked in the screen image shown in Fig. 66. If an option "Designating an ordered quantity 1" is clicked, screen images are successively switched in association with the steps described in Fig. 52. A product is manufactured by an ordered quantity the buyer has acknowledged at step S68, and sold to the buyer. If an option "Designating an ordered quantity 2" is clicked, screen images are successively switched in association with the steps described in Fig. 53. A product is manufactured to an ordered quantity a buyer has acknowledged at step S89, and sold to the buyer. If an option "Designating an ordered quantity 3" is clicked, screen images are successively switched in association with the steps described in Fig. 54. A product is manufactured to an ordered quantity a buyer has acknowledged at step S89, and sold to the buyer.

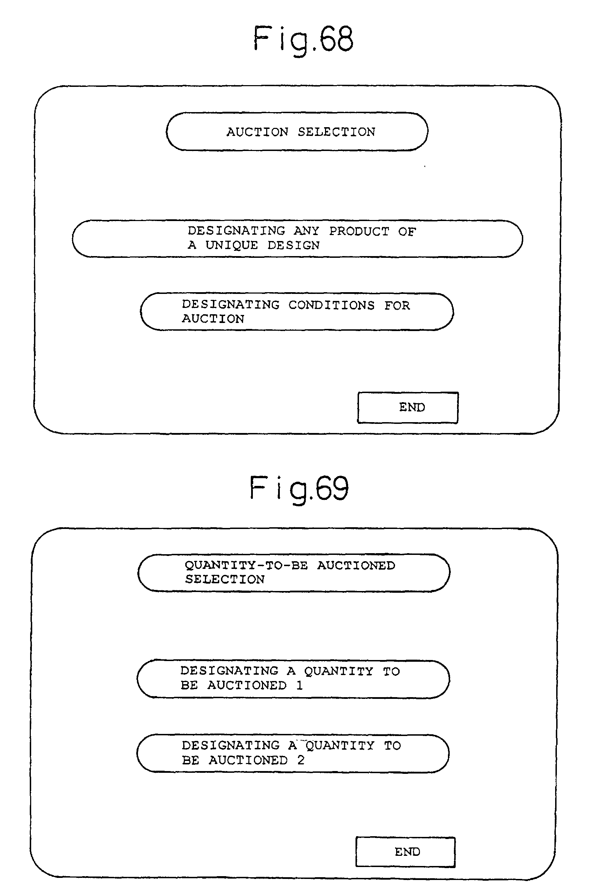

Fig. 68 shows a screen image to be displayed when the option "Designating auction" is clicked in the screen image shown in Fig. 65. If "Designating auction" is selected in the screen image shown in Fig. 65, the screen image is changed to the screen image shown in Fig. 68. If a buyer clicks an option "Selecting any product of a unique design," several products of unique designs created by designers are presented. If the buyer selects a desired product of a unique design for which he/she wants to bit at an auction, the previous screen image (Fig. 68) appears. The buyer then clicks the option "Designating conditions for auction."

Fig. 69 shows a quantity-to-be auctioned selection menu to be displayed when the option "Designating conditions for auction" is clicked in the screen image shown in Fig. 68. If an option "Designating a quantity to be auctioned 1" is clicked, screen images are successively switched in association with the steps described in Fig. 56 and followed when a quantity to be auctioned (that is, a sales quantity) is one piece. If an option "Designating a quantity to be auctioned 2" is clicked, screen images are successively switched in association with the steps described in Fig. 57 and followed when a quantity to be auctioned (that is, a sales quantity) is a plurality of pieces (N pieces).

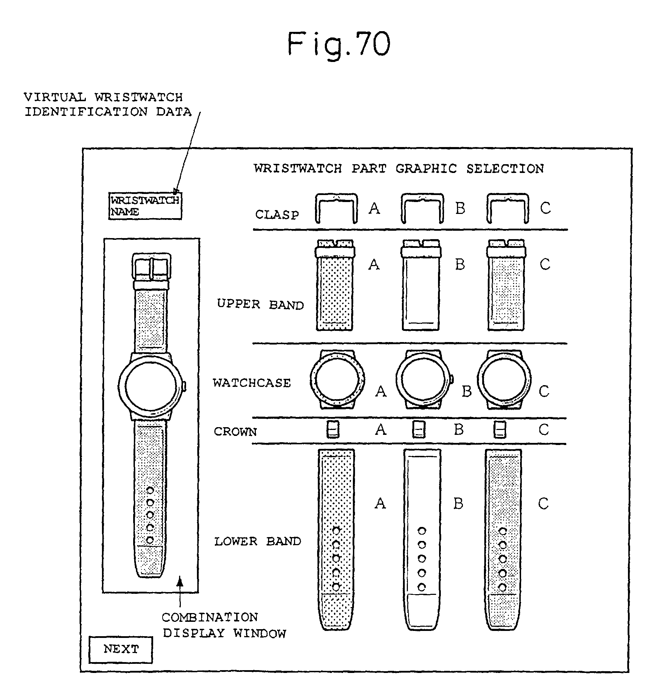

Fig. 70 shows a screen image permitting a designer to select part graphics constituting a wristwatch graphic. As illustrated, groups of virtual parts (A, B, and C) sent from the server are displayed. Each group of virtual parts includes part graphics constituting a wristwatch graphic (graphics expressing a clasp, bands, and a watchcase). One kind of virtual part includes a plurality of virtual parts having different specifications, for example, different tones, shapes, or materials. Virtual parts of each kind are juxtaposed as shown in Fig. 70. A designer clicks or selects one of, for example, clasp graphics A, B, and C. As for each of the other kinds of virtual parts, a desired one is clicked or selected. The virtual parts are recorded in the virtual part database residing in the server as shown in Fig. 3.

Furthermore, virtual parts selected by the designer are combined in place in order to create a wristwatch graphic. The wristwatch graphic is displayed in a combination display window. At the sight of the wristwatch graphic, the designer may change the combination of virtual parts. This maneuver is controlled by a wristwatch design program residing in the server. If the designer enters a wristwatch name at his/her keyboard, the wristwatch name is recorded as virtual wristwatch identification data in the virtual part database residing in the server.

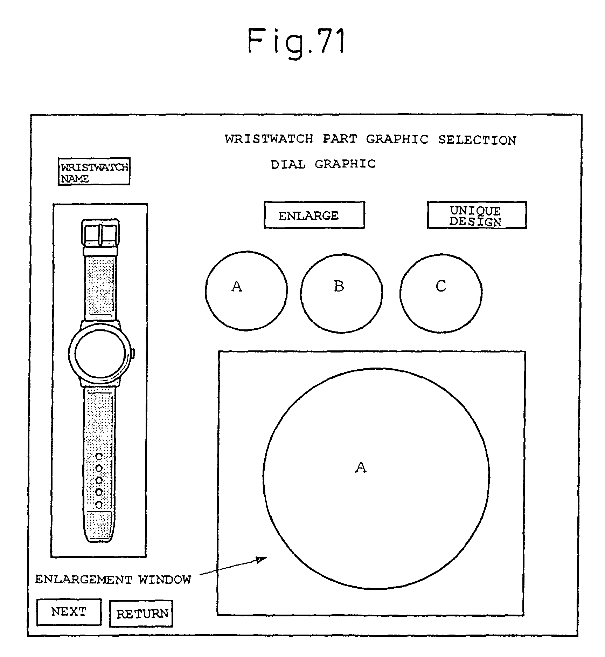

Fig. 71 shows a practical example of a wristwatch part graphic selection screen image. In this example, any of dial graphics is selected as a kind of virtual part. If any dial graphic is selected in the screen image shown in Fig. 70, a group of dial graphics (A, B, and C) is displayed. A designer clicks or selects a desired dial graphic. In order to display a selected dial graphic in enlargement, for example, a dial graphic A is clicked and an Enlarge button is clicked. The dial graphic A is then displayed in an enlargement window while being enlarged at a predetermined magnification. The designer may minutely review the dial graphic. The display in enlargement is controlled by a wristwatch design program residing in the server.

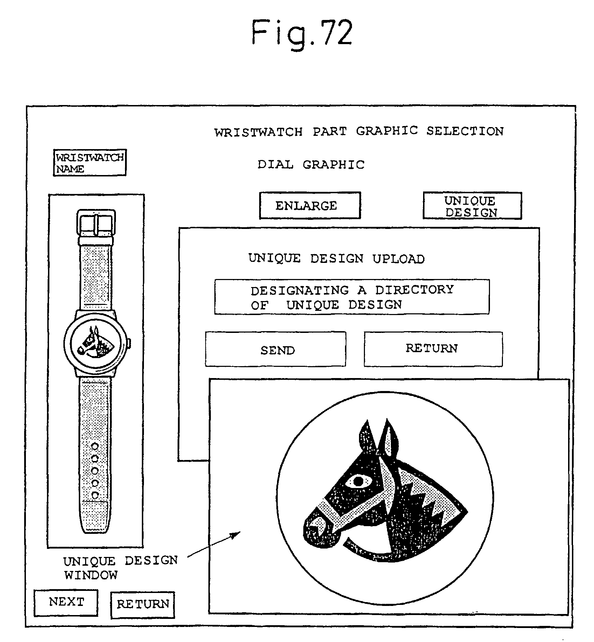

Fig. 72 shows another practical example of a wristwatch part graphic selection screen image. This example is concerned with a case where a part of a unique design created by a designer is adapted to a dial graphic. When a designer clicks a Unique Design button in the screen image, a part-of-unique design upload screen image is displayed. A directory to which graphic data to be uploaded (that is, virtual part data) is designated. Then, a hard disk in the designer's personal computer in which the graphic data is loaded or a recording medium connected to the personal computer is designated. Graphic data representing a part of a unique design represents an illustration created by the designer, an image produced by a digital camera, or an image fetched by an image scanner. If the designer clicks a Send button, the graphic data is transmitted to the server over the Internet. The uploaded graphic data is then displayed in a unique design window. Adaptation of a unique design to a dial graphic is controlled by the wristwatch design program.

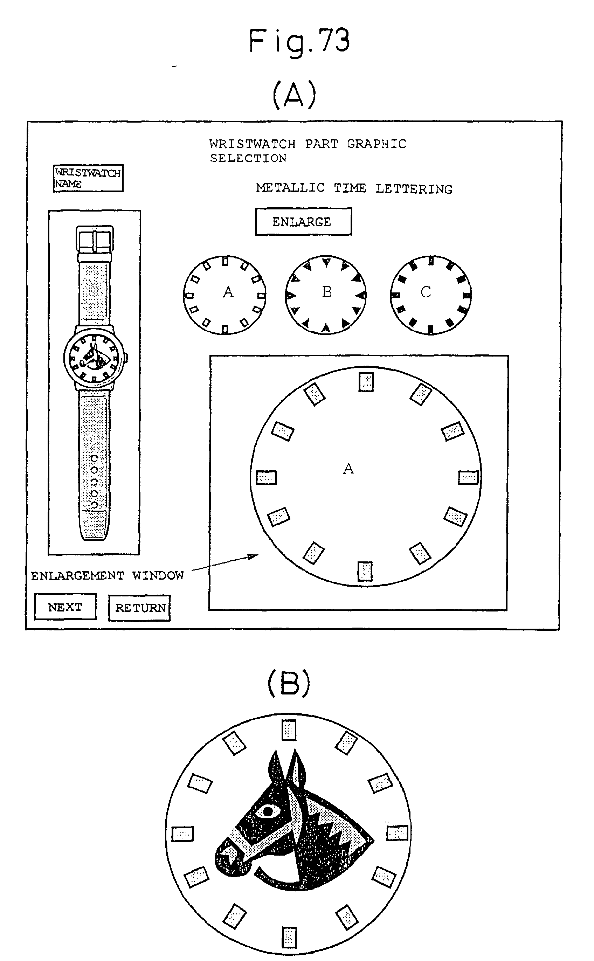

Fig. 73A and Fig. 73B show still another example of a wristwatch part graphic selection screen image. This example is concerned with a case where desired time lettering (metallic time lettering) is selected from among a group of different kinds of time lettering. If Time Lettering is selected in the screen image shown in Fig. 70, a plurality of kinds of time lettering is displayed together with a dial graphic. As mentioned previously, desired time lettering, for example, time lettering A is selected and displayed in enlargement. In this case, the time lettering is superposed on the dial graphic and disposed in a watchcase graphic. In this case, the time lettering alone may be displayed in enlargement or may be displayed in enlargement while being superposed on the dial graphic.

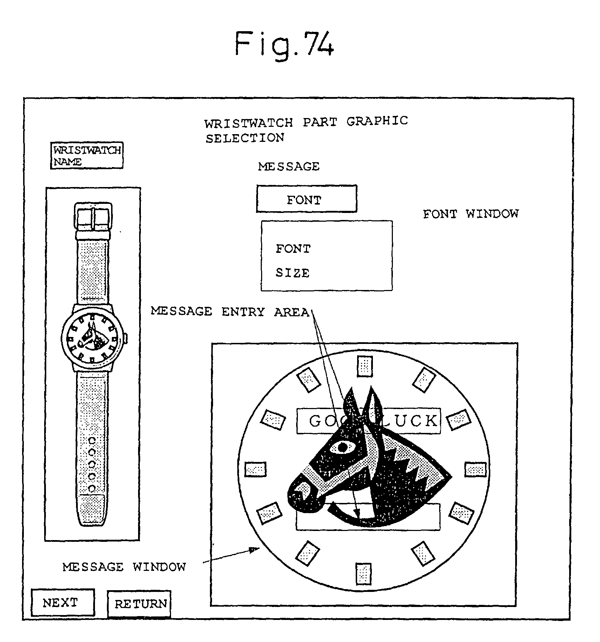

Fig. 74 shows still another practical example of a wristwatch part graphic selection screen image. This example is concerned with a case where a dial graphic, time lettering, and a message are combined. A designer clicks a Font button so as to open a font window. If the designer clicks Font, a pull-down menu appears. The designer designates a desired font. A font size may be selected from the menu items listed in a pull-down menu or entered at the keyboard. Furthermore, a message entry area is clicked in order to define an area in which a message is written. A message is then entered at the keyboard. Consequently, the message is written in the defined area with the designated font. In this case, if a plurality of message entry areas is defined, a message can be written in any number of areas. The message is displayed in combination with the dial graphic in the watchcase graphic. The message entry is controlled by the wristwatch design program.

Another part graphic, that is, a hand graphic is selected in the same manner. Selecting designs for parts is thus completed. The selected data items are recorded in association with identity data (specifying a name, an address, a telephone number, and a mail address) and virtual product identification data (wristwatch name) in the virtual product database.

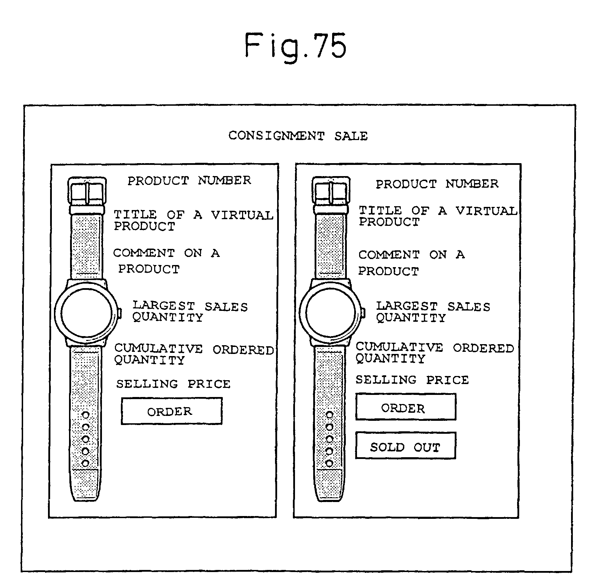

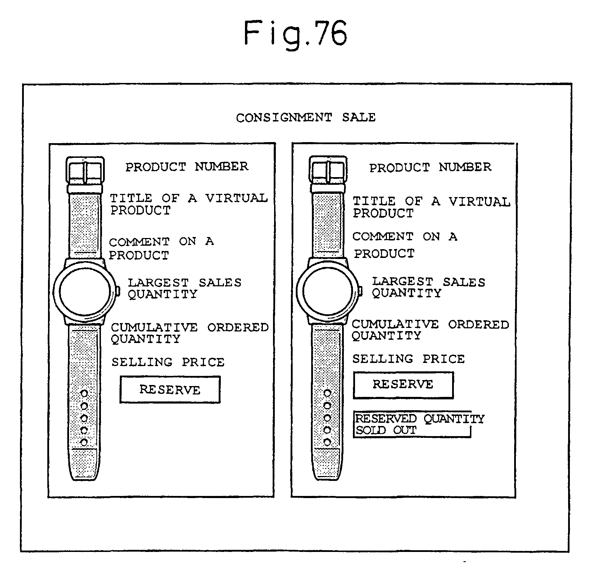

Fig. 75 and Fig. 76 show consignment sale screen images. Some of the steps described in the flowcharts of Fig. 52 to Fig. 54 are associated with the screen images. As mentioned previously, a product graphic that is a virtual product, a product number, a comment on a product, and a selling price are loaded from the consignment sale-related virtual product database, and are presented in a consignment sale screen image. Herein, the selling price is the sum of a set price and an incidental price. Incidentally, virtual products are displayed side by side in order to sell actual products on commission. Fig. 75 shows a consignment sale screen image encouraging users to order a product that is sold on commission, while Fig. 76 shows a consignment sale screen image encouraging users to reserve a product that is sold on commission.

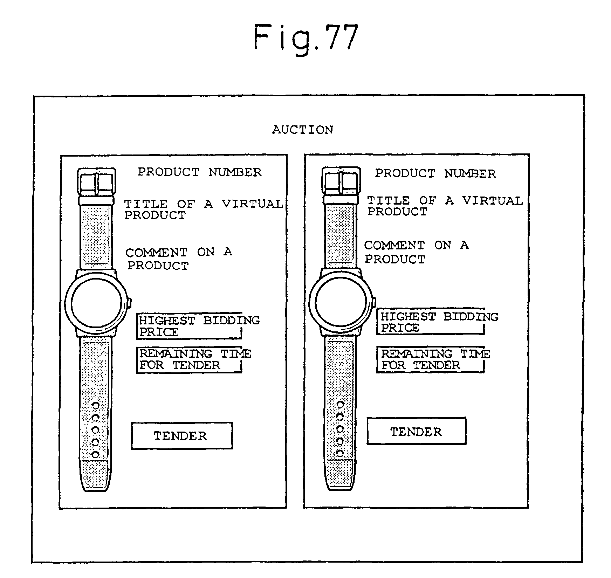

Fig. 77 shows an auction screen image. Some of the steps described in the flowcharts of Fig. 56 and Fig. 57 are associated with the screen images. A product number of a product to be sold at an auction, a title of a virtual product, and a comment on the product are presented. The highest bidding price or remaining time for tender is presented with a click of a Highest Bidding Price or Remaining Time for Tender button. A Tender button is then clicked.

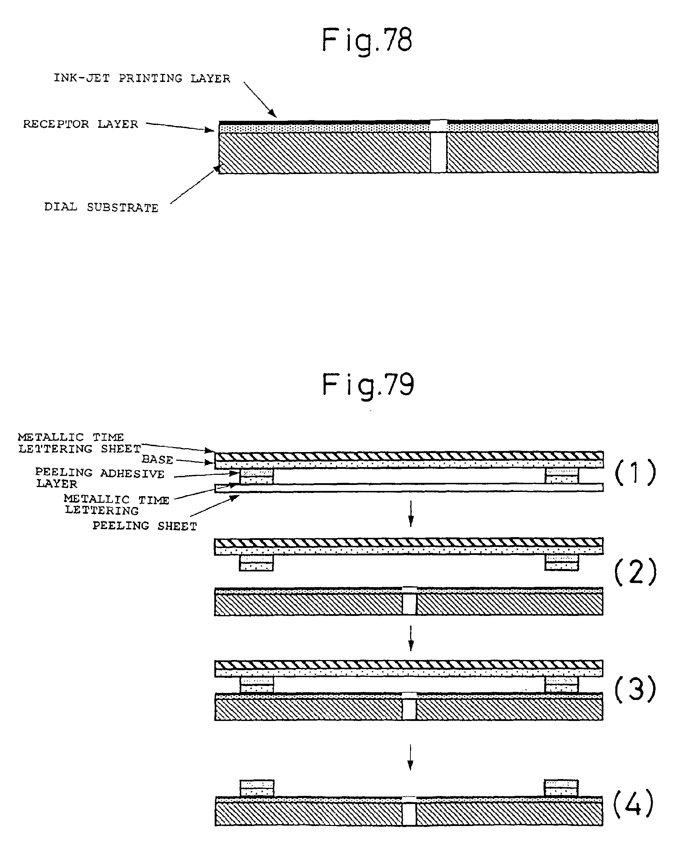

Fig. 78 is an explanatory diagram concerning a manufacturing method according to which a watch vendor prints a dial illustration and a message. In this example, a dial illustration and a message are printed on a dial substrate according to an ink-jet printing technique. A manufacturing department in a watch vendor retrieves product identification data and identity data from the server so as to specify virtual product data. An illustration and a message specified in the virtual product data are transferred to a driving device connected to an ink-jet printing machine (not shown) installed in the manufacturing department. First, a receptor layer is formed on the surface of a dial substrate, and the illustration and message are printed on the receptor layer simultaneously or separately. Printing is thus completed.

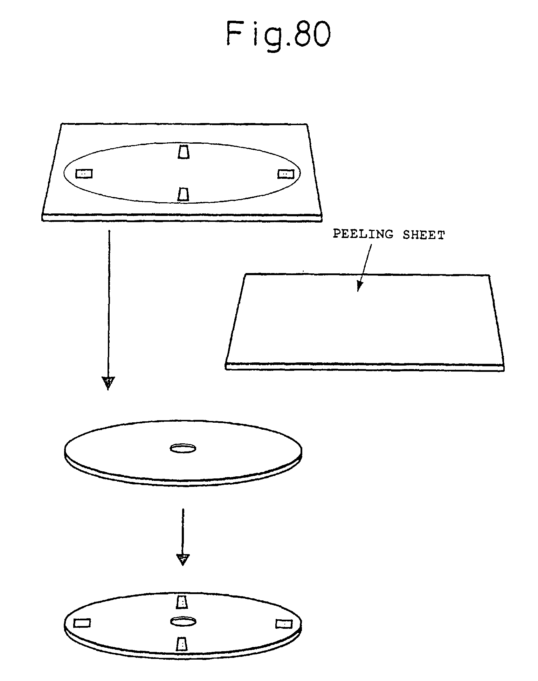

Fig. 79 and Fig. 80 are explanatory diagrams concerning a process of bonding metallic time lettering that is performed at the manufacturing department in the watch vendor. This process can be adapted to a lateral surface of a watchcase and a rear cover as described later. First, at step (1), a peeling adhesive layer is attached to a metallic time lettering sheet base, and metallic time lettering is bonded to the adhesive layer. A fixing adhesive layer is formed on the surface of the metallic time lettering, and a peeling sheet is coated over the resultant fixing adhesive layer. At step (2), the peeling sheet is removed, and the resultant metallic time lettering unit is bonded on a dial completed as shown in Fig. 78. At step (3), the resultant metallic time lettering unit stays on the dial. Finally, at step (4), the metallic time lettering sheet base and peeling adhesive layer are removed. Thus, bonding metallic time lettering is completed. Consequently, the metallic time lettering is bonded on the ink-jet printing layer shown in Fig. 78. Herein, the metallic time lettering has the merit that a desired design can be created through chemical processing or electrochemical processing.

Next, a description will be made of designing, consignment sale, and auction of parts constituting a product in accordance with another embodiment of the present invention.

The previous description is concerned with a finished product of a unique design (for example, a wristwatch). Designing, purchase, consignment sale, and auction of a part that is a component of a product of a unique design will be described below. Furthermore, a part that is already sold on commission may be selected in the course of uniquely designing a product. A part that has been sold on commission and purchased or a part that has been purchased at an auction can be selected in the course of uniquely designing a product.

A part expressed as a part graphic (virtual part) employed in a virtual product can be purchased in a consignment sale screen image that encourages users to purchase a product of a unique design (expressed as a virtual product by the server) that is sold on commission. This will be described more practically later. Moreover, part graphics (virtual products) expressing parts that are sold on commission or auctioned may be contained in a plurality of pages indexed in a home page. In this case, if a buyer operates his/her personal computer so as to view a page that introduces parts being sold on commission or auctioned, pages may be opened at random according to, for example, a table of random numbers. This technique of opening pages, that is, displaying screen images, may be adapted to opening of pages that introduce virtual products. Furthermore, virtual parts expressing parts to be sold on commission may be arranged in descending order of an ordered quantity. This technique can be adapted to virtual products. Furthermore, a period during which a part to be sold on commission is listed may be determined, and the period during which a part to be sold on commission is listed can be extended. This technique can be adapted to virtual products.

Now, designing each part of a wristwatch will be described. As described below, a unique design for each part created by a designer is printed on a designer's desired position by utilizing an ink-jet printing technique or a thermal transfer technique.

### (1) Band

A unique design a designer creates with the help of a part design program, which resides in a server and serves as a feature of the present invention, may be adopted as a pattern, a mark, a message, or an illustration to be inscribed on at least part of the surface of a band in the same manner as it can be adopted for a dial. A unique design for the band is, like that for the dial, uploaded from a designer's terminal, and adopted as an illustration to be printed on the surface of the band. In this case, the band may be manufactured by printing the adopted unique design directly on the surface of the band using an ink-jet printing technique or the like. Otherwise, the adopted unique design may be printed to a thermal transfer film, and transferred to the surface of the band. A means for applying a unique design to a band is not limited to these techniques, but any of various means may be adopted. Moreover, a designer may create a two-dimensional or three-dimensional design for a band.

### (2) Glass

A unique design a designer creates with the help of a part design program, which resides in the server and serves as a feature of the present invention, can be adopted as a pattern, a mark, a message, or an illustration to be inscribed on at least part of the surface of a glass (for windshield). A unique design for the glass is, like that for the dial, uploaded from a designer's terminal and adopted as a unique illustration to be applied to the surface of the glass. In order to manufacture the glass, for example, the adopted unique design may be printed directly on the surface of the glass according to an ink-jet printing technique or the like. Otherwise, the adopted unique design may be printed on a thermal transfer film, and then transferred to the surface of the glass. A means for applying the unique design to the glass is not limited to these techniques but any of various means may be adopted. Otherwise, a designer may create a two-dimensional or three-dimensional design for the glass. The part design program serving as a feature of the present invention enables a designer to create his/her unique design for the surface of any other part. Moreover, the designer may design the shape of any other two-dimensional or three-dimensional part.

### (3) Metallic time lettering

Owing to a part design program residing in the server and serving as a feature of the present invention, not only indicators that indicate a time, such as, time lettering but also a mark, a pattern, or a pictorial pattern that is a decorative inscription may be made of a metal. Otherwise, the indicators, mark, pattern, or pictorial pattern may be made of a resin or rubber. A bonding means other than an adhesive may be used to bond such a member to be bonded. Based on an illustration a designer has created or selected, a cutout may be produced to outline the illustration or a relief may be produced to engrave the illustration on an even base. Otherwise, an even base may be gouged in order to express the illustration.

### (4) Watchcase and rear cover

A unique design created with the help of a part design program residing in the server and serving as a feature of the present invention may be adopted and printed directly on the lateral surface of a watchcase using an ink-jet printing technique or the like. Otherwise, an adopted unique design may be printed on a thermal transfer film and then transferred to the lateral surface of the watchcase. A means for applying a unique design to the lateral surface of the watchcase is not limited to these techniques but any of various means may be adopted. Moreover, a designer can create a two-dimensional or three-dimensional design for the watchcase or rear cover. The same applies to the rear cover. An adopted design can be printed at a desired position on the rear cover according to an ink-jet printing technique or a thermal transfer technique.

As mentioned above, according to the present invention, an ink-jet printing technique or a thermal transfer technique is used to print a decorative inscription that is intended to decorate a product, or a functional inscription that conveys information. The decorative inscription includes a pattern, a photograph, an illustration, and a mark, while the functional inscription includes a message, a name, a place name, a mail address, and a password. Adoption of the ink-jet printing technique or thermal transfer technique has the merit that a plate required by another printing technique is unnecessary. If a plate must be produced for every design, not only a cost of manufacturing increases but also the manufacturing time is extended. In contrast, when the ink-jet or thermal transfer printing technique is adopted, the decorative or functional inscription can be formed inexpensively and quickly without the necessity of producing a plate.

An embodiment of the present invention for handling parts will be described in conjunction with drawings below.

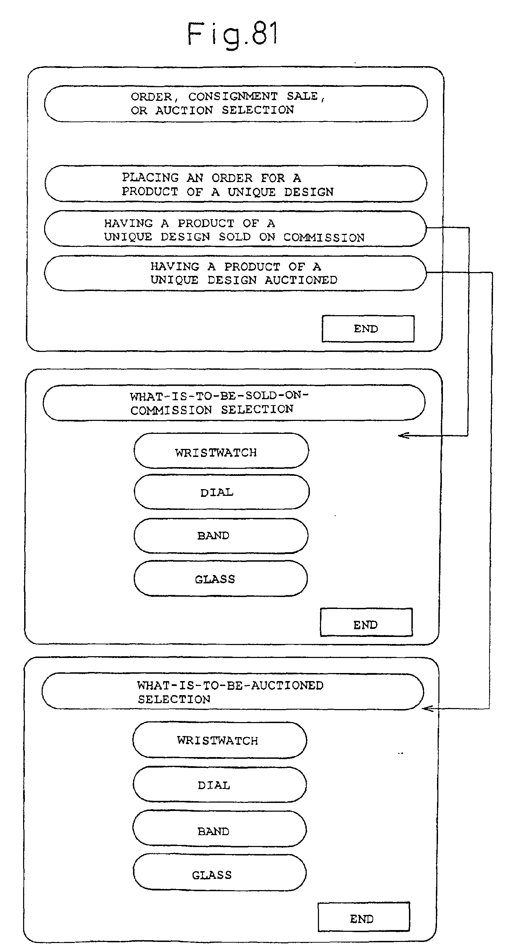

Fig. 81 shows a screen image prompting a user to designate consignment sale or auction and being displayed after creating a unique design is completed. Similarly to Fig. 64, when an order, consignment sale, or auction selection screen image is displayed, whether a product of a unique design is ordered, sold on commission, or auctioned is designated. The case where an order is placed for a product of a unique design has already been described. When a what-is-to-be-sold-on-commission selection screen image is displayed, a product (for example, a wristwatch) or a part (for example, a dial, a band, or a glass) is designated. The case where a product is designated has already been described. When a what-is-to-be-auctioned selection screen image is displayed, a product (for example, a wristwatch) or a part (for example, a dial, a band, or a glass) is designated. The case where a product is designated has already been described.

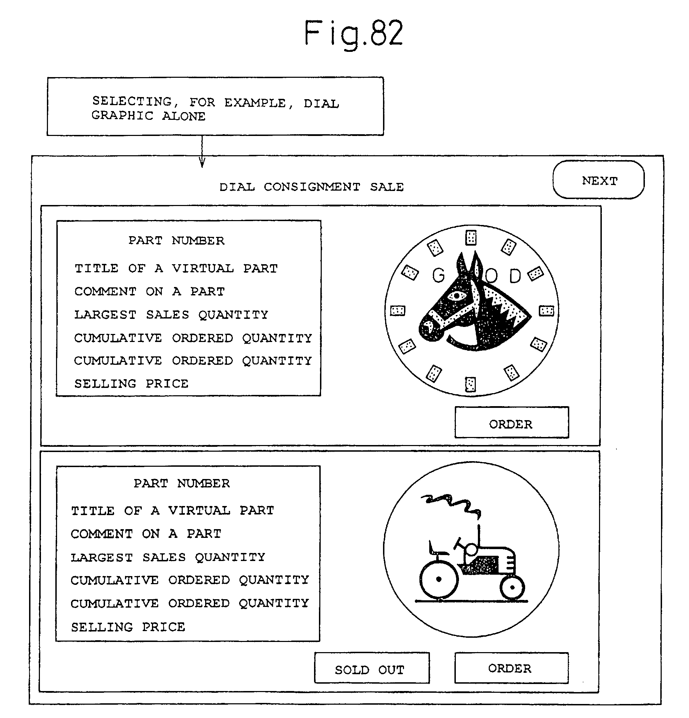

Fig. 82 shows a screen image prompting a user to select a dial alone. A dial consignment sale screen image presents a part number, a title of a virtual part, a comment on a part, the largest sales quantity, a cumulative ordered quantity, and a selling price. A user clicks a Next button that appears repeatedly. If a desired dial graphic is found, an Order button is pressed. If a dial expressed by a desired dial graphic is out of stock, a message "Sold Out" appears. The user reselects a desired one from among the other dial graphics.

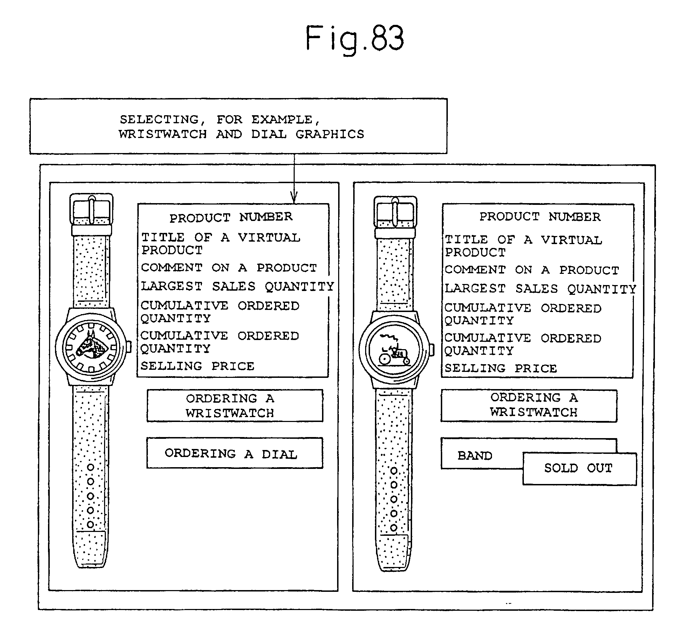

Fig. 83 shows a screen image encouraging users to select a wristwatch graphic and a dial graphic. A user selects either of options "Ordering a wristwatch" and "Ordering a dial." The screen image presents a product number, a title of a virtual product, and a comment on a product. For example, the option "Ordering a dial" is clicked, the screen image shown in Fig. 82 appears. At the same time, the user enters his/her password, and the server in turn notifies the user of an identity code. The identity code is automatically designated. Furthermore, the password and identity code are stored in association with a selected dial graphic in a memory device.

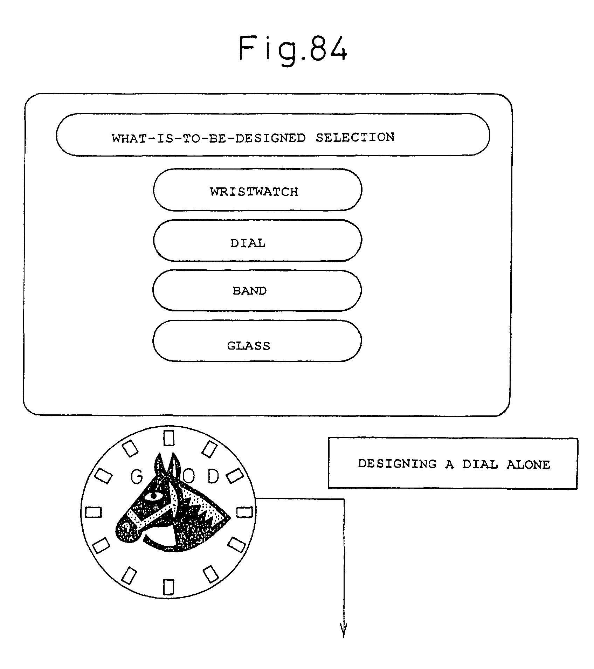

Fig. 84 shows a screen image prompting a user to select a part which the user wants to design. The screen image is entitled "What-is-to-be Designed Selection". If a design for a dial alone is created, the screen image shown in Fig. 82 is displayed.

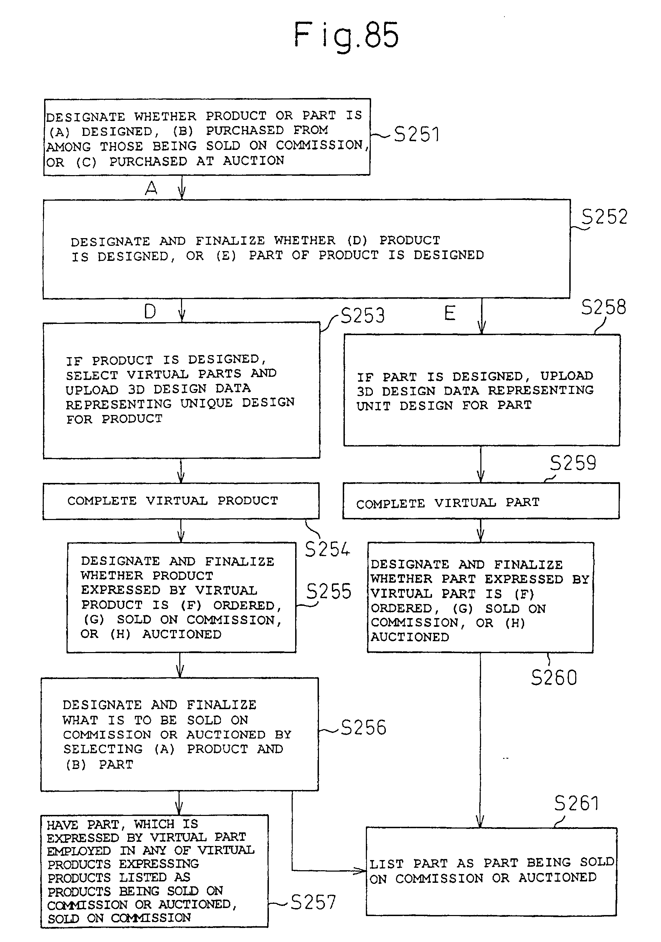

Fig. 85 is a flowchart describing actions to be performed by a user (designer). A user designates whether he/she wants to design a product or part, purchase a product or part being sold on commission, or purchase a product or part being auctioned (S251). Furthermore, the user designates and finalizes whether he/she wants to design a product or a part of the product (S252). If the user designs a product, the user selects part graphics and uploads three-dimensional design data representing unique designs for parts (S253). After the user completes a unique design for a product (S254), the user designates and finalizes whether he/she orders a product of the unique design, has the product of the unique design sold on commission, or has the product of the unique design auctioned (S255). Furthermore, the user designates and finalizes what is to be sold on commission or auctioned (S256). The user determines whether he/she has a product, which is listed as a product to be sold on commission or auctioned, sold on commission (S257).

If the user designates at step S252 that he/she designs a part, the user uploads three-dimensional design data representing a unique design for a part (S258). For example, if the user designates that he/she designs a band, the user selects a clasp graphic, a bezel graphic, and other part graphics. The user then uploads the virtual parts that are the part graphics expressing parts to be mounted on the surface of a band. After the user completes a part of a unique design exhibited by a band graphic (S259), the user designates, in the screen images shown in Fig. 81, whether he/she orders a part of the unique design, has the part of the unique design sold on commission, or has the part of the unique design auctioned (S260). If the user wants a part of a unique design, he/she clicks the Order button. The band graphic is then listed as a virtual part to be sold on commission or auctioned (S261).

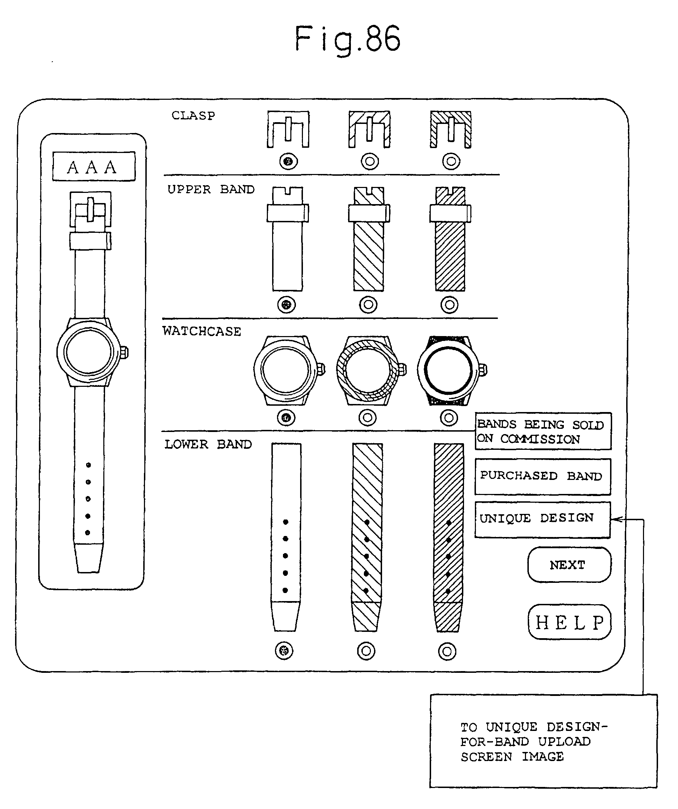

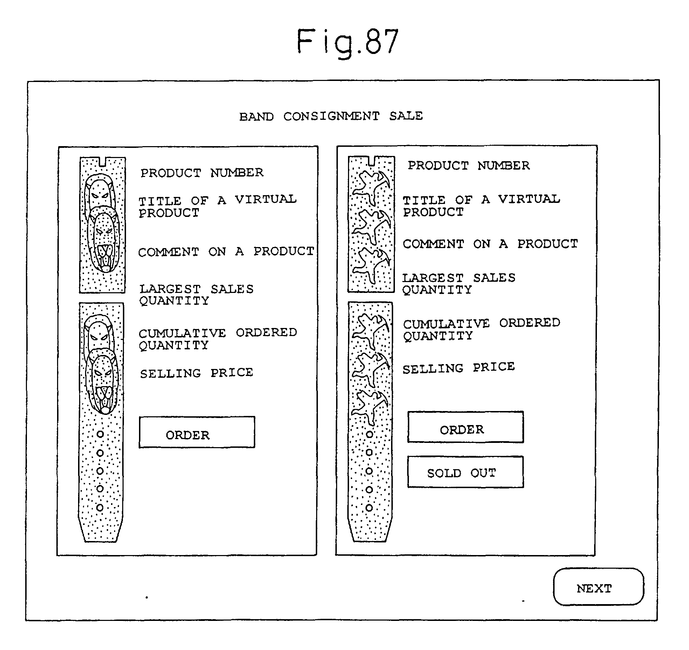

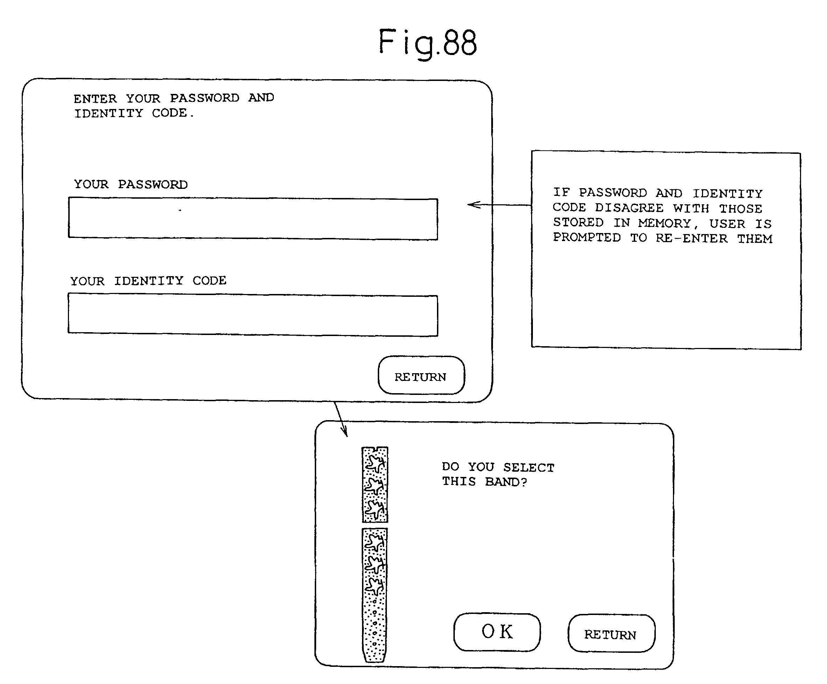

Fig. 86 shows a screen image encouraging a user to select part graphics. As illustrated, virtual parts, that is, a clasp graphic, an upper band graphic, a watchcase graphic, and a lower band graphic can be selected. Furthermore, any of virtual parts expressing parts to be sold on commission can be selected in the course of selecting part graphics. For example, if a Bands being Sold on Commission button is clicked, a virtual part-for-consignment sale screen image (Fig. 87) appears. Moreover, if a Purchased Band button is clicked, a screen image shown in Fig. 88 appears. If a Unique Design button is clicked, a unique design upload screen image enabling uploading of a unique design for a band appears.

Fig. 87 shows a part consignment sale screen image. A plurality of band graphics expressing different designs is displayed. A user clicks a Next button to select a desired design for a band. After it is finalized, the user clicks an Order button.

Fig. 88 shows a screen image permitting a user to purchase a part of a unique design. A user enters his/her password and identity code. When a selected band graphic appears, the user clicks an OK button. If the entered password and identity code disagree with the password and identity code stored in the server, the user is prompted to re-enter the password and identity code.

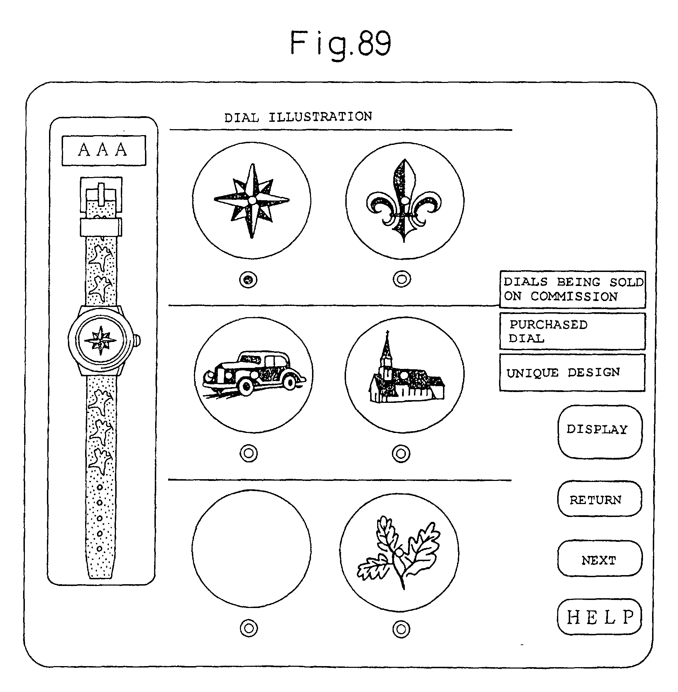

Fig. 89 is a screen image showing illustrations applicable to a design for a dial and being displayed when a dial is designated as a part which is to be designed. In order to select any dial graphic expressing a dial to be sold on commission, a Dials being Sold on Commission button is clicked. A screen image similar to the one shown in Fig. 87 and presenting dial graphics instead of band graphics is displayed. If a Purchased Dial button is clicked, a screen image similar to the one shown in Fig. 88 and presenting a dial graphic instead of a band graphic is displayed. If a Unique Design button is clicked, a screen image similar to the one shown in Fig. 86 appears.

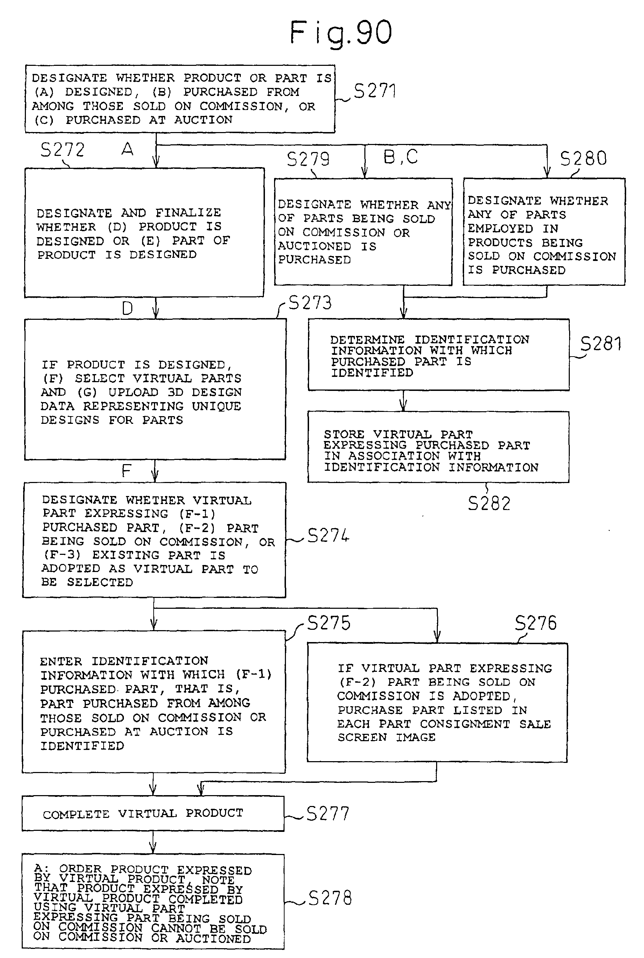

Fig. 90 is a flowchart describing actions to be performed by a buyer. Similarly to Fig. 85, a buyer designates whether he/she wants to design a product or part, purchase a product or part being sold on commission, or purchase a product or part being auctioned (S271). Furthermore, the buyer designates and finalizes whether he/she wants to design a product or a part of the product (S272). If the buyer wants to uniquely design a product, he/she selects virtual parts and uploads three-dimensional design data representing unique designs for parts (S273). Furthermore, the buyer designates whether he/she adopts a virtual part expressing a purchased part, a part being sold on commission, or an existing part (S274). Furthermore, if the buyer designates that he/she adopts a virtual part expressing a purchased part, he/she enters identification information with which a virtual part expressing a part that has been purchased from among those being sold on commission or a part that has been purchased at an auction is identified (S275). If the buyer designates that he/she adopts a virtual part expressing a part that is being sold on commission, the buyer purchases a part in each part consignment sale screen image (S276). After a virtual product is completed (S277), the screen image shown in Fig. 81 is displayed, and an order is placed (S278). At this time, the buyer cannot sell on commission or auction a product expressed by a virtual product completed by adopting a virtual part expressing a part that has been purchased from among those being sold on commission.

If the buyer designates at step S271 that he/she purchases a product or part being sold on commission or a product or part being auctioned, he/she designates whether he/she purchases a part by selecting any of virtual parts expressing parts being sold on commission or auctioned (S279). Otherwise, the buyer designates whether he/she purchases a part by selecting any of virtual parts employed in virtual products expressing products being sold on commission (S280). Identification information with which a part purchased by selecting a virtual part is identified is determined (S281). The virtual part expressing the purchased part is stored in association with the identification information (S282).

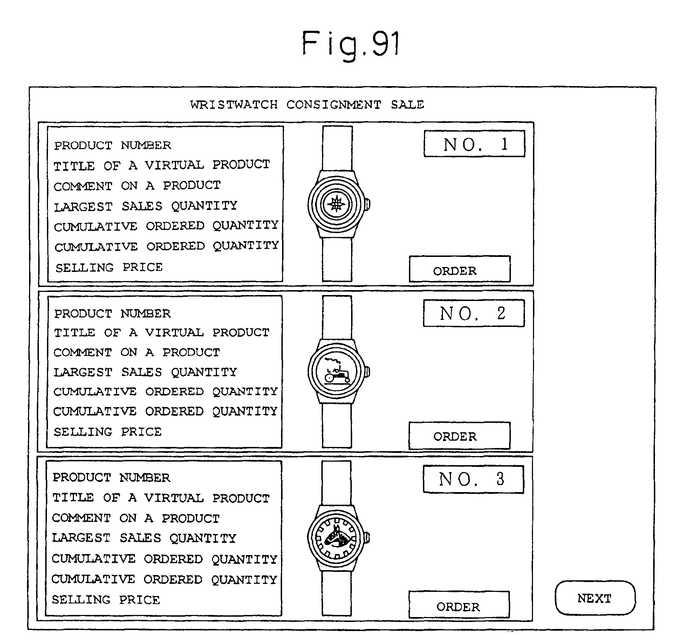

Fig. 91 shows a consignment sale screen image. Although the screen image is entitled as a wristwatch for consignment sale screen image, the screen image can apply to consignment sale of a dial or a band. If numerous virtual products or numerous virtual parts constituting a virtual product are displayed in order to sell numerous products or parts on commission, every time a Next button is clicked, another screen image (page) presenting other virtual products or virtual parts expressing products or parts being sold on commission is displayed. In this case, psychologically, users are attracted to the virtual products or parts listed in the page to be opened first. In order to cope with the partiality, a page to be opened first and a page to be opened with a click of the Next button is determined at random. Specifically, for example, a plurality of pages bears page numbers. When a designer (or a buyer) clicks a decision-making means (for example, a Dial button in a consignment sale screen image) with which his/her intention of selecting a virtual product or part that expresses a product or part being sold on commission, the server generates the same number of random numbers as the number of pages. The pages are sorted with the page numbers associated with the random numbers. The pages are opened in order as they are sorted. This method can cope with the partiality stemming from the order in which pages are arranged. This method can apply to pages carrying virtual products or parts expressing products or parts to be auctioned.

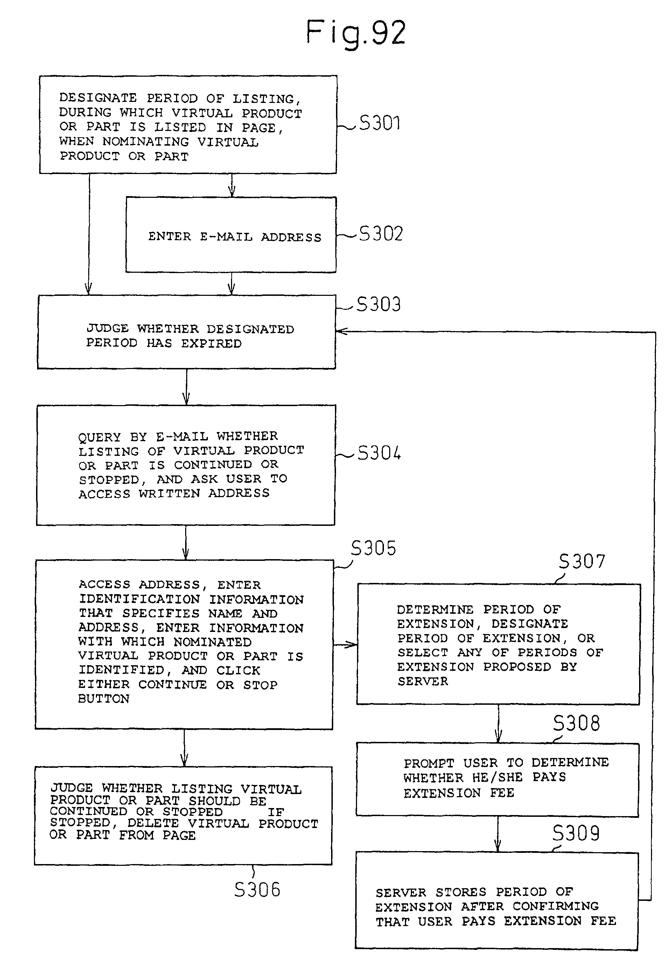

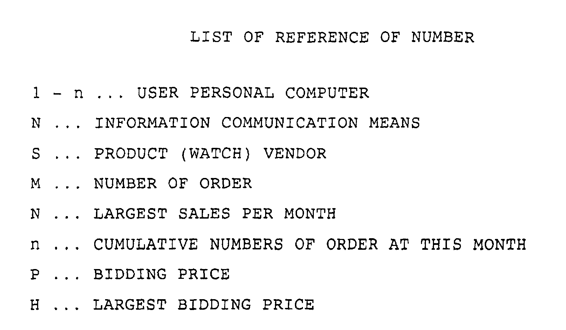

Fig. 92 is a flowchart describing actions to be performed when a period during which virtual products or parts are listed in pages is limited. When a user nominates a virtual product or part as a product or part to be sold on commission, the user enters a period during which the virtual product or part is listed in a consignment sale page (S301). The server in turn receives an e-mail address (S302) and judges that the user-designated period has expired (S303). The server sends an e-mail to the user to query whether the user wants to stop having the virtual product or part listed in a consignment sale page, and prompts the user to access a written address (S304).

When the user accesses the address, the user enters his/her name and address with which the user has nominated the virtual product or part, and also enters information with which the virtual product or part is identified. The user then clicks either of Continue and Stop buttons (S305). The server checks whichever of the Continue and Stop buttons is clicked and judges whether listing the virtual product or part should be continued or stopped (S306). If the user wants to have listing of the virtual product or part continued, it is determined how long the period during which the virtual product or part is listed in the consignment sale page should be extended. A period of extension is entered (S307). The period of extension may be selected from among periods of extension proposed by the server. The server queries whether the user pays an extension fee (S308). If the user pays the extension fee, the server stores the extension period by which the period during with the virtual product or part is listed in the consignment sale page is extended (S309).

The foregoing description has proceeded on the assumption that a product of a unique design is a wristwatch and a part of a unique design is a part of the wristwatch. The present invention can be readily adapted to the other products. For example, assuming that the present invention is adapted to a bracelet, a ring, a necklace, glasses, or any other ornament, the product vendor is an ornament vendor, and the product is, for example, glasses. A user uniquely designs glasses (or a part of the glasses) with the help of a product design program and glasses part design data received over the Internet. The product vendor manufactures glasses of the unique design (or part of glasses) on receipt of an order the user places. The product vendor sells on commission the glasses of the unique design to other users over the Internet, or auctions the glasses of the unique design. On the other hand, if a designer has neither a product design program nor a part design program that help design glasses, the product vendor may provide the designer with the program.

As described so far, the product design processing system in which the second aspect of the present invention is implemented has the advantages described below.
(1) A designer who is a user uses a personal computer to easily and uniquely design a desired product (for example, a wristwatch) or a part of the product. Moreover, the designer can have a product or part of the designer's unique design sold on commission or auctioned over the Internet. Furthermore, even if a product or part of a unique design (exhibited by a virtual product or part stored in the server) has not yet been manufactured and exists as a graphic but not as an item, the designer can have the product or part of the unique design sold on commission or auctioned. Even if a product or part expressed by a virtual product or part remains unsold, the designer can save the expense of manufacturing and need not run an economic risk.
(2) A buyer who is a user can readily purchase a product or part of a unique design, which has not been marketed, from among those being sold on commission or auctioned.
(3) A product vendor (for example, a watch vendor) can manufacture an ordered quantity of a product or a part of the product within the productive capacity. This realizes cost-efficient production. Compared with piece-by-piece sale of a product, a very large quantity can be sold on commission. Moreover, a designer's or buyer's activity is not restricted in terms of a quantity of a product or a part of the product. After an order is placed, the product vendor starts manufacturing a product or a part of the product. The product vendor will therefore not hold surplus stocks of finished articles and can avoid running an economic risk.
(4) A watch firm may hold a certain contest, invite an unspecified number of designers to disclose their virtual products or parts, and select any number of excellent virtual products or parts. The watch firm may then sell on commission or auctions a selected virtual product or part. Otherwise, any firm other than the watch firm may hold a contest, and the watch firm may sell on commission or auction a virtual product or part selected in a similar manner.

### Industrial Applicability

According to the first aspect of the present invention, a design-for-product creating system permits a user to design or modify the shape of a certain part of a product in line with the user's likes with the help of a three-dimensional part design program and digital part data that are provided by a product vendor. Consequently, a custom-made product in which the user's intention is reflected can be provided. According to the second aspect of the present invention, a design-for-product processing system permits a user to have a product or part of a user-created unique design sold on commission or auctioned over the Internet. Furthermore, a product or part of a unique design that has not yet been manufactured and exists as a graphic but not as an item can be sold on commission or auctioned. The industrial applicability of the present invention is unmeasurable in various fields.

## Claims

1. A design-for-product creating system having a plurality of users connected to a product vendor over an information communicating means, manufacturing a product according to each user-desired design for a product, and supplying the product to the user, said design-for-product creating system comprising:
a means with which said product vendor provides a user with a product design program that enables the user to view a virtual product that corresponds to a product graphic created by a computer, and digital part data representing part graphics that constitute the product graphic;
a means with which said product vendor prompts the user to fetch said product design program and said digital part data, to create a desired design for a product, and to ask said product vendor over said information communicating means to manufacture a product of the user-desired design, and
a means with which said product vendor manufactures a product according to the user-desired design for a product, and supplies the product to the user, wherein:
said product design program includes a three-dimensional part design program permitting a user to three-dimensionally change the shape of a part to a user-desired shape;
said digital part data includes at least one digital part data that represents a user-changeable shape of a part; and
said product vendor prompts a user to three-dimensionally change at least part of a shape of a part into a desired shape with the help of said three-dimensional part design program and said digital part data representing the changeable shape of the part.

2. A design-for-product creating system according to Claim 1, wherein:
said product design program includes a parts selection and combination program that permits a user to sample at least two digital part data items from said digital part data; and
a user uses said parts selection and combination program to sample desired digital part data from said digital part data, and combines the digital part data with the digital part data representing a changeable shape of a part.

3. A design-for-product creating system according to Claim 1, wherein:
said product design program includes a three-dimensional human-body modeling program that models part of a user's body;
a user uses said three-dimensional human-body modeling program to make digital part data, which represents a specific part graphic and is sampled from said digital part data, changeable in conformity with part of the user's body.

4. A design-for-product creating system according to Claim 1, wherein:
said product design program includes a product size adjustment program that enables adjustment of a product size; and
a user uses said product size adjustment program to make digital part data, which represents a specific part graphic and is sampled from said digital part data, changeable in conformity with a user's size.

5. A design-for-product creating system according to Claim 1, wherein:
said product design program includes a product weight calculation program that enables calculation of a product weight; and
a user uses said product weight calculation program to calculate a product weight using said digital part data.

6. A design-for-product creating system according to Claim 1, wherein:
said digital part data representing a changeable shape specifies a drawing enabled area in which a user can change the shape and a drawing disabled area in which the user cannot change the shape; and
said drawing disabled area is defined by said product vendor.

7. A design-for-product creating system according to Claim 6, wherein said drawing disabled area can be combined with an unchangeable shape represented by digital part data.

8. A design-for-product creating system according to Claim 6, wherein said drawing disabled area is defined based on a part size that determines the performance of a product.

9. A design-for-product creating system according to Claim 6, wherein said drawing disabled area is defined based on the material of a part that determines the property of a product.

10. A design-for-product creating system according to Claim 6, wherein said drawing enabled area is defined within a range covering said drawing disabled area.

11. A design-for-product creating system according to Claim 1 or 2, wherein a user can select one three-dimensional part design program, which is suitable for designing a desired product, from among a plurality of three-dimensional part design programs.

12. A design-for-product creating system according to Claim 1 or 2, wherein said plurality of three-dimensional part design programs each produces digital part data.

13. A design-for-product creating system according to Claim 1 or 2, wherein three-dimensional digital part data representing a user-changed shape is converted into numerical control data, and a numerical control machining tool installed at said product vendor is driven based on said numerical control data in order to manufacture a part on which the changed shape represented by the three-dimensional digital part data is reflected.

14. A design-for-product creating system according to Claim 1 or 2, wherein a user can create an inscription such as characters, a pictorial pattern, or a mark.

15. A design-for-product creating system according to Claim 1 or 2, wherein a user converts two-dimensional data, which represents a user-created inscription, into numerical control data, and a numerical control laser inscription machine installed at said product vendor is driven based on the numerical control data in order to inscribe a product using a laser.

16. A design-for-product creating system according to Claim 3, wherein a model representative of part of a human body is determined by a user's sex and weight.

17. A design-for-product creating system according to Claim 3, wherein a user can view a combination of a body model and a part graphic represented by digital part data.

18. A design-for-product creating system according to Claim 4, wherein the number of concatenated part pieces specified in digital part data items can be increased or decreased in conformity with a user's body size.

19. A design-for-product creating system according to Claim 4, wherein a user can change the positions of part pieces to be coupled to each other which are specified in digital part data.

20. A design-for-product creating system according to Claim 4, wherein a part graphic represented by one digital part data has a plurality of positions at which the part graphic is combined with the other part graphic represented by the other digital part data, and a user selects one of the plurality of positions.

21. A design-for-product creating system according to Claim 4, wherein a user can view a combination of combined part graphics represented by a plurality of digital part data items and a model.

22. A design-for-product creating system according to Claim 5, wherein a user can select a material, which is made into a part, according to digital part data.

23. A design-for-product creating system according to Claim 5, wherein a product weight can be calculated from a volume calculated using digital part data and a specific gravity determined from the material of a part specified in digital part data.

24. A design-for-wristwatch creating system having a plurality of users connected to a watch vendor over an information communicating means, manufacturing a wristwatch according to each user-desired design for a wristwatch, and supplying the wristwatch to the user, said design-for-wristwatch creating system comprising:
a means with which said watch vendor provides a user with a product design program that enables the user to view a virtual wristwatch created by a computer, and digital part data representing virtual parts that constitute the virtual wristwatch;
a means with which said watch vendor prompts the user to fetch said product design program and said digital part data, to create a desired design for a wristwatch, and to ask said watch vendor over said information communicating means to manufacture a wristwatch of the desired design over said information communicating means; and
a means with which said watch vendor manufactures a wristwatch according to the user-desired design for a wristwatch, and supplies the wristwatch to the user, wherein:
said product design program includes a three-dimensional part design program that enables a user to three-dimensionally change a shape of a part into a desired shape;
said digital part data includes at least one digital part data that represents a user-changeable shape of a part;
said watch vendor prompts a user to three-dimensionally change at least part of a shape of a part into a desired shape with the help of said three-dimensional part design program and said digital part data representing a changeable shape.

25. A design-for-wristwatch creating system according to Claim 24, wherein said digital part data representing a changeable shape is basic watchcase data that specifies the dimensions of a watchcase.

26. A design-for-wristwatch creating system according to Claim 24, wherein:
said product design program includes a three-dimensional wrist modeling program that models a user's wrist; and
a user can change a watchcase graphic represented by digital part data, which is sampled from said digital part data, in conformity with the user's wrist with the help of said three-dimensional wrist modeling program and three-dimensional wrist data.

27. A design-for-wristwatch creating system according to Claim 24, wherein:
said wristwatch design program includes a band length adjustment program that enables a user to adjust a wristwatch band length; and
a user uses said band length adjustment program to adjust a wristwatch band graphic represented by digital part data, which is sampled from said digital part data, in conformity with the user himself/herself.

28. A design-for-wristwatch creating system according to Claim 26, wherein said three-dimensional wrist data specifies individual identification data assigned to each user.

29. A design-for-wristwatch creating system according to Claim 26, wherein: two-dimensional data representing a quasi section of a user's wrist is calculated based on a user's sex and weight; three-dimensional data representing a cylindrical shape of which sections have the same size as the quasi section and which has a predetermined length is produced; the cylindrical shape represented by the three-dimensional data is displayed as a three-dimensional model; and the three-dimensional data is registered as three-dimensional data representing the user's wrist.

30. A design-for-wristwatch creating system according to Claim 29, wherein said three-dimensional wrist model is displayed as if to be an actual wrist.

31. A design-for-wristwatch creating system according to Claim 25, wherein said basic watchcase data specifies a drawing disabled area of a watchcase shape and a drawing enabled area thereof, and said drawing disabled area is defined based on a movement type, a degree of waterproofness, a band length, and a material.

32. A design-for-wristwatch creating system according to Claim 31, wherein said drawing enabled area includes a minimum drawing interface that expresses a certain range on the outer surface of a watchcase, and a maximum drawing interface that expresses a range defined under the restrictions determined in terms of the cost of manufacturing.

33. A design-for-wristwatch creating system according to Claim 32, wherein said minimum drawing interface is defined based on the dimensions of an internal space of a watchcase in which a movement is placed, the minimum dimensions of the internal space of the watchcase required for hands to rotate, minimum dimensions required to keep a windshield watertight, minimum dimensions required to keep a rear cover watertight, the minimum dimension of a thickness required to keep a watchcase strong enough, dimensions determined with a selected band width, and dimensions required to keep the attachment legs strong enough.

34. A design-for-wristwatch creating system according to Claim 32, wherein said drawing enabled area covers only a portion of a watchcase graphic expressing watchcase legs.

35. A design-for-wristwatch creating system according to Claim 32, wherein said drawing enabled area covers a portion of a watchcase graphic expressing a rotational bezel of a watchcase.

36. A design-for-wristwatch creating system according to Claim 24, wherein a user can select one three-dimensional part design program, which is suitable for a user-desired design, from among a plurality of three-dimensional part design programs.

37. A design-for-wristwatch creating system according to Claim 24, wherein said plurality of three-dimensional part design programs each produces digital part data.

38. A design-for-wristwatch creating system according to Claim 26, wherein said wrist model is determined with a user's sex and weight.

39. A design-for-wristwatch creating system according to Claim 24, wherein a user can view a combination of a body model and a part graphic represented by digital part data.

40. A design-for-wristwatch creating system according to Claim 26, wherein the number of concatenated band pieces specified in digital part data can be increased or decreased based on a user's wrist size.

41. A design-for-wristwatch creating system according to Claim 26, wherein the positions of band pieces to be coupled to each other, which is specified in digital part data, can be changed.

42. A design-for-wristwatch creating system according to Claim 26, wherein a latch graphic represented by digital part data has a plurality of positions at which the latch graphic is combined with the latch graphic represented by the other digital part data, and a user can select any of the plurality of positions.

43. A design-for-wristwatch creating system according to Claim 26, wherein a user can view a combination of combined part graphics represented by a plurality of digital part data items and a model.

44. A design-for-product creating method according to which a plurality of users is connected to a product vendor over an information communicating means, and a product is manufactured based on each user-desired design for a product, and supplied to the user, said design-for-product creating method comprising:
a step at which said product vendor provides a user with a product design program, which includes a three-dimensional part design program that enables the user to three-dimensionally change a shape of a part into a desired shape, and digital part data which includes at least one digital part data that represents a user-changeable shape of a part;
a step at which said product vendor prompts the user to fetch said product design program and said digital part data, to create a desired design for a product, and to ask said product vendor over said information communicating means to manufacture a product of the desired design;
a step at which said product vendor manufactures a product according to the user-desired design for a product and supplies the product to the user; and
a step at which said product vendor prompts the user to three-dimensionally change at least part of a shape of a part into a desired shape with the help of said three-dimensional part design program and said digital part data representing a changeable shape of a part.

45. A design-for-wristwatch creating method according to which a plurality of users is connected to a watch vendor over an information communicating means, and a wristwatch is manufactured based on a user-desired design for a wristwatch and supplied to the user, said design-for-wristwatch creating method comprising:
a step at which said watch vendor provides a user with a product design program including a three-dimensional part design program that enables the user to three-dimensionally change a shape of a part into a desired shape, and digital part data including at least one digital part data that represents a user-changeable shape of a part;
a step at which said watch vendor prompts the user to fetch said product design program and said digital part data, to create a desired design for a wristwatch, and to ask said watch vendor over said information communicating means to manufacture a wristwatch of the desired design;
a step at which said watch vendor manufactures a wristwatch according to the user-desired design for a wristwatch and supplies the wristwatch to the user; and
a step at which said watch vendor prompts the user to three-dimensionally change at least part of a shape of a part into a desired shape with the help of said three-dimensional part design program and said digital part data representing a changeable shape of a part.

46. A storage medium containing a program according to which a computer implements a design-for-product creating method according to which a plurality of users is connected to a product vendor over an information communicating means, a product is manufactured based on each user-desired design for a product and supplied to the user, said design-for-product creating method comprising:
a step at which said product vendor provides a user with a product design program including a three-dimensional part design program that enables the user to three-dimensionally change a shape of a part into a desired shape, and digital part data including at least one digital part data that represents a user-changeable shape of a part;
a step at which said product vendor prompts the user to fetch said product design program and said digital part data, to create a desired design for a product, and to ask said product vendor over said information communicating means to manufacture a product of the desired design;
a step at which said product vendor manufactures a product according to the user-desired design for a product and supplies the product to the user; and
a step at which said product vendor prompts the user to three-dimensionally change at least part of a shape of a part into a desired shape with the help of said three-dimensional part design program and said digital part data representing a user-changeable shape of a part.

47. A design-for-product processing system having a plurality of users connected to a product vendor over an information communicating means, permitting a user who wants to design and is one of a plurality of users to uniquely design a product with the help of a predetermined product design program and part design data which are provided by said product vendor, allowing said product vendor to manufacture a product of the unique design and supply the product to said user who wants to design, said design-for-product processing system comprising:
a determining means with which said product vendor prompts said user who wants to design to determine whether said user will place an order with said produce vendor for a product of the unique design;
a determining means with which said product vendor prompts said user who wants to design to determine whether said user will have a product of the unique design sold on commission by said product vendor; and
a means with which said product vendor prompts said user who wants to design to select at least one of said determining means.

48. A design-for-product processing system having a plurality of users connected to a product vendor over an information communicating means, permitting a user who wants to design and who is one of a plurality of users to uniquely design a product, and allowing said product vendor to manufacture a product of the unique design and supply the product to said user who wants to design, said design-for-product processing system comprising:
a determining means with which said product vendor prompts said user who wants to design to determine whether said user will place an order with said product vendor for a product of the unique design;
a determining means with which said product vendor prompts said user who wants to design to determine whether said user will have a product of the unique design auctioned by said product vendor; and
a means with which said product vendor prompts said user who wants to design to select at least one of said determining means.

49. A design-for-product processing method according to which a plurality of users is connected to a product vendor over an information communicating means, a user who wants to design, and who is one of a plurality of users, uniquely designs a product with the help of a predetermined product design program and part design data which are provided by said product vendor, and said product vendor manufactures a product of the unique design and supplies the product to said user who wants to design, said design-for-product processing method comprising:
a determining step at which said product vendor prompts said user who wants to design to determine whether said user will place an order with said product vendor for a product of the unique design;
a determining step at which said product vendor prompts said user who wants to design to determine whether said user will have a product of the unique design sold on commission by said product vender;
a step at which said product vendor prompts said user who wants to design to select at least one of said determining steps.

50. A design-for-product processing method according to which a plurality of users is connected to a product vendor over an information communicating means, a user who wants to design and who is one of a plurality of users uniquely designs a product with the help of a predetermined product design program and part design data which are provided by said product vendor, and said product vendor manufactures a product of the unique design and supplies the product to said user who wants to design, said design-for-product processing method comprising:
a determining step at which said product vendor prompts said user who wants to design to determine whether said user will place an order with said product vendor for a product of the unique design;
a determining step at which said product vendor prompts said user who wants to design to determine whether said user will have a product of the unique design auctioned by said product vendor;
a step at which said product vendor prompts said user who wants to design to select at least one of said determining steps.

51. A design-for-product processing method according to Claim 49, further comprising an ordering step at which said product vendor encourages any of said plurality of users other than said user who wants to design to place an order with said product vendor for a product of the unique design, which is sold on commission, over said information communicating means.

52. A design-for-product processing method according to Claim 50, further comprising a tendering step at which said product vendor encourages any of said plurality of users other than said user who wants to design to bid for a product of the unique design, which is auctioned by said product vendor, over said information communicating means.

53. A design-for-product processing method according to Claim 49, further comprising a rejecting step at which, if said user who wants to design fails to satisfy predetermined conditions, said product vendor rejects a consignment sale requested by said user who wants to design.

54. A design-for-product processing method according to Claim 50, further comprising a rejecting step at which if said user who wants to design fails to satisfy predetermined conditions, said product vendor rejects an auction requested by said user who wants to design.

55. A design-for-product processing method according to Claim 49, further comprising a rejecting step at which if any user other than said user who wants to design fails to satisfy predetermined conditions, said product vendor rejects a consignment sale to any other user.

56. A design-for-product processing method according to Claim 50, further comprising a rejecting step at which if any user other than said user who wants to design fails to satisfy predetermined conditions, said product vendor rejects a tender made at an auction by any other user.

57. A design-for-product processing method according to Claim 49, further comprising a rejecting step at which if any user other than said user who wants to design fails to satisfy predetermined conditions, said product vendor rejects a consignment sale of an ordered quantity to any other user.

58. A design-for-product processing method according to Claim 50, further comprising a rejecting step at which if any user other than said user who wants to design fails to satisfy predetermined conditions, said product vendor rejects a sale at an auction of an ordered quantity to any other user.

59. A design-for-wristwatch processing method according to which a plurality of users is connected to a watch vendor over an information communicating means, a user who wants to design and who is one of a plurality of users uniquely designs a wristwatch with the help of a predetermined wristwatch design program and part design data that are provided by said watch vendor, and said watch vendor manufactures a wristwatch of the unique design and supplies the wristwatch to said user who wants to design, said design-for-wristwatch processing method comprising:
a determining step at which said watch vendor prompts said user who wants to design to determine whether said user will place an order with said watch vendor for a product of the unique design;
a determining step at which said watch vendor prompts said user who wants to design to determine whether said user will have a product of the unique design sold on commission by said watch vendor; and
a step at which said watch vendor prompts said user who wants to design to select at least one of said determining steps.

60. A design-for-wristwatch processing method according to which a plurality of users is connected to a watch vendor over an information communicating means, a user who wants to design and who is one of a plurality of users uniquely designs a wristwatch with the help of a predetermined wristwatch design program and part design data that are provided by said watch vendor, and said watch vendor manufactures a wristwatch of the unique design and supplies the wristwatch to said user who wants to design, said design-for-wristwatch processing method comprising:
a determining step at which said watch vendor prompts said user who wants to design to determine whether said user will place an order with said watch vendor for a wristwatch of the unique design;
a determining step at which said watch vendor prompts said user who wants to design to determine whether said user will have a wristwatch of the unique design auctioned by said watch vendor; and
a step at which said watch vendor prompts said user who wants to design to select at least one of said determining steps.

61. A design-for-wristwatch processing method according to Claim 59, further comprising an ordering step at which said watch vendor encourages any of said plurality of users, other than said user who wants to design, to place an order with said watch vendor for a wristwatch of the unique design, which is sold on commission, over said information communicating means.

62. A design-for-wristwatch processing method according to Claim 60, further comprising a tendering step at which said watch vendor encourages any of said plurality of users, other than said user who wants to design, to bid for a wristwatch of the unique design, which is auctioned by said watch vendor, over said information communicating means.

63. A design-for-wristwatch processing method according to Claim 59, further comprising a rejecting step at which, if said user who wants to design fails to satisfy predetermined conditions, said watch vendor rejects a consignment sale requested by said user who wants to design.

64. A design-for-wristwatch processing method according to Claim 60, further comprising a rejecting step at which, if said user who wants to design fails to satisfy predetermined conditions, said watch vendor rejects an auction requested by said user who wants to design.

65. A design-for-wristwatch processing method according to Claim 59, further comprising a rejecting step at which if any user, other than said user who wants to design, fails to satisfy predetermined conditions, said watch vendor rejects a consignment sale to any other user.

66. A design-for-wristwatch processing method according to Claim 60, further comprising a rejecting step at which if any user, other than said user who wants to design, fails to satisfy predetermined conditions, said watch vendor rejects a tender made at an auction by any other user.

67. A design-for-wristwatch processing method according to Claim 59, further comprising a rejecting step at which if any user, other than said user who wants to design, fails to satisfy predetermined conditions, said watch vendor rejects a consignment sale of an ordered quantity to any other user.

68. A design-for-wristwatch processing method according to Claim 60, further comprising a rejecting step at which if any user, other than said user who wants to design, fails to satisfy predetermined conditions, said watch vendor rejects a sale at an auction of an ordered quantity to any other user.

69. A design-for-wristwatch processing method according to Claim 59 or 60, wherein:
said watch vendor has a server accessible to said plurality of users over said information communicating means;
said server has a plurality of design programs and a data storage device;
said design program includes at least a product design program, an ordered quantity calculation program, a sellout setting program, a reservation change program, and a successful bid determination program;
said data storage device contains a virtual part database, a virtual product database, an order database, a virtual product-for-consignment sale database, a consignment sale-related order database, a virtual product-for-auction database, a bidding price database, and a successful bid database.

70. A design-for-wristwatch processing method according to Claim 59 or 60, wherein:
consignment sale and auction-related data specifies, as common data, identity data, virtual product identification data, a product number of a virtual product, a title of a virtual product, and a comment on a virtual product;
said consignment sale and auction-related data specifies, as data limited to consignment sale, an incidental price of a virtual product and a sales quantity thereof; and
said consignment sale and auction-related data specifies, as data limited to auction, the lowest possible selling price of a virtual product, a period of auction for a virtual product, conditions for price entry for a virtual produce, and the largest sales quantity for a virtual product.

71. A design-for-wristwatch processing method according to Claim 59 or 60, wherein when said watch vendor manufactures a wristwatch on receipt of an order placed by said user who wants to design, said watch vendor forms a receptor layer on the surface of a dial substrate, and prints at least an illustration and a message, which said user who wants to design has selected and finalized, according to an ink-jet printing technique.

72. A design-for-wristwatch processing method according to Claim 71, wherein a process of bonding metallic time lettering onto a dial comprises:
a first step at which a peeling adhesive layer is formed on the surface of a metallic time lettering sheet base, one side of metallic time lettering is bonded to the surface of the peeling adhesive layer, a fixing adhesive layer is formed on the other side of the metallic time lettering, and a peeling sheet is bonded to the surface of the fixing adhesive layer;
a second step at which the peeling sheet applied at the first step is removed, and the resultant metallic time lettering unit is disposed at a predetermined position on the dial that has been subjected to ink-jet printing, and bonded with predetermined pressure; and
a third step at which said metallic time lettering sheet base and peeling adhesive layer are removed from the resultant metallic time lettering unit so that the metallic time lettering will be exposed on the surface of the dial.

73. A recording medium containing a program that instructs a computer to implement a design-for-product processing method according to which a plurality of users is connected to a product vendor over an information communicating means, a user who wants to design and who is one of a plurality of users uniquely designs a product with the help of a predetermined product design program and part design data that are provided by said product vendor, and said product vendor manufactures a product of the unique design and supplies the product to said user who wants to design, said design-for-product processing method comprising:
a determining step at which said product vendor prompts said user who wants to design to determine whether said user will place an order with said product vendor for a product of the unique design;
a determining step at which said product vendor prompts said user who wants to design to determine whether said user will have a product of the unique design sold on commission by said product vendor; and
a determining step at which said product vendor prompts said user who wants to design to determine whether said user will have a product of the unique design auctioned by said product vendor.

74. A design-for-product processing system having a plurality of users connected to a product vendor over an information communicating means, permitting a user who wants to design and who is one of a plurality of users to uniquely design a part of a product with the help of a predetermined product design program and part design data that are provided by said product vendor, and allowing said product vendor to manufacture a part of the unique design and supply the part to said user who wants to design, said design-for-product processing system comprising:
a determining means with which said product vendor prompts said user who wants to design to determine whether said user will place an order with said product vendor for a part of the unique design;
a determining means with which said product vendor prompts said user who wants to design to determine whether said user will have a part of the unique design sold on commission by said product vendor; and
a means with which said product vendor prompts said user who wants to design to select at least one of said determining means.

75. A design-for-product processing system having a plurality of users connected to a product vendor over an information communicating means, permitting a user who wants to design and who is one of a plurality of users to uniquely design a part of a product with the help of a predetermined product design program and part design data that are provided by said product vendor, and allowing said product vendor to manufacture a part of the unique design and supply the part to said user who wants to design, said design-for-product processing system comprising:
a determining means with which said product vendor prompts said user who wants to design to determine whether said user will place an order with said product vendor for a part of the unique design;
a determining means with which said product vendor prompts said user who wants to design to determine whether said user will have a part of the unique design auctioned by said product vendor; and
a means with which said product vendor prompts said user who wants to design to select at least one of said determining means.

76. A design-for-product processing method according to which a plurality of users is connected to a product vendor over an information communicating means, a user who wants to design and who is one of a plurality of users uniquely designs a part of a product with the help of a predetermined product design program and part design data that are provided by said product vendor, and said product vendor manufactures a part of the unique design and supplies the part to said user who wants to design, said design-for-product processing method comprising:
a determining step at which said product vendor prompts said user who wants to design to determine whether said user will place an order with said product vendor for a part of the unique design;
a determining step at which said product vendor prompts said user who wants to design to determine whether said user will have a part of the unique design sold on commission by said product vendor; and
a step at which said product vendor prompts said user who wants to design to select at least one of said determining steps.

77. A design-for-product processing method according to which a plurality of users is connected to a product vendor over an information communicating means, a user who wants to design and who is one of a plurality of users uniquely designs a part of a product with the help of a predetermined product design program and part design data that are provided by said product vendor, and said product vendor manufactures a part of the unique design and supplies the part to said user who wants to design, said design-for-product processing method comprising:
a determining step at which said product vendor prompts said user who wants to design to determine whether said user will place an order with said product vendor for a part of the unique design;
a determining step at which said product vendor prompts said user who wants to design to determine whether said user will have a part of the unique design auctioned by said product vendor; and
a step at which said product vendor prompts said user who wants to design to select at least one of said determining steps.

78. A design-for-wristwatch processing method according to which a plurality of users is connected to a watch vendor over an information communicating means, a user who wants to design and who is one of a plurality of users uniquely designs a part of a wristwatch with the help of a predetermined wristwatch design program and part design data that are provided by said watch vendor, and said watch vendor manufactures a part of the unique design and supplies the part to said user who wants to design, said design-for-wristwatch processing method comprising:
a determining step at which said watch vendor prompts said user who wants to design to determine whether said user will place an order with said watch vendor for a part of the unique design;
a determining step at which said watch vendor prompts said user who wants to design to determine whether said user will have a part of the unique design sold on commission by said watch vendor; and
a step at which said watch vendor prompts said user who wants to design to select at least one of said determining steps.

79. A design-for-wristwatch processing method according to which a plurality of users is connected to a watch vendor over an information communicating means, a user who wants to design and who is one of a plurality of users uniquely designs a part of a wristwatch with the help of a predetermined wristwatch design program and part design data that are provided by said watch vendor, and said watch vendor manufactures a part of the unique design and supplies the part to said user who wants to design, said design-for-wristwatch processing method comprising:
a determining step at which said watch vendor prompts said user who wants to design to determine whether said user will place an order with said watch vendor for a part of the unique design;
a determining step at which said watch vendor prompts said user who wants to design to determine whether said user will have a part of the unique design auctioned by said watch vendor; and
a step at which said watch vendor prompts said user who wants to design to select at least one of said determining steps.

80. A design-for-wristwatch processing method according to Claim 78, further comprising an ordering step at which said watch vendor encourages any of said plurality of users, other than said user who wants to design, to place an order with said watch vendor for a part of the unique design, which is sold on commission, over said information communicating means.

81. A design-for-wristwatch processing method according to Claim 79, further comprising a tendering step at which said watch vendor encourages any of said plurality of users, other than said user who wants to design, to bid for a part of the unique design, which is auctioned by said watch vendor, over said information communicating means.

82. A design-for-wristwatch processing method according to Claim 78, further comprising a rejecting step at which, if said user who wants to design fails to satisfy predetermined conditions, said watch vendor rejects a consignment sale requested by said user who wants to design.

83. A design-for-wristwatch processing method according to Claim 79, further comprising a rejecting step at which, if said user who wants to design fails to satisfy predetermined conditions, said watch vendor rejects an auction requested by said user who wants to design.

84. A design-for-wristwatch processing method according to Claim 78, further comprising a rejecting step at which if any user, other than said user who wants to design, fails to satisfy predetermined conditions, said watch vendor rejects a consignment sale to any other user.

85. A design-for-wristwatch processing method according to Claim 79, further comprising a rejecting step at which if any user, other than said user who wants to design, fails to satisfy predetermined conditions, said watch vendor rejects a tender to be made at an auction by any other user.

86. A design-for-wristwatch processing method according to Claim 79, further comprising a rejecting step at which, if any user other than said user who wants to design fails to satisfy predetermined conditions, said watch vendor rejects a consignment sale of an ordered quantity to any other user.

87. A design-for-wristwatch processing method according to Claim 79, further comprising a rejecting step at which, if any user other than said user who wants to design fails to satisfy predetermined conditions, said watch vendor rejects a sale at an auction of an ordered quantity to any other user.

88. A recording medium containing a program that instructs a computer to implement a design-for-product processing method according to which a plurality of users is connected to a product vendor over an information communicating means, a user who wants to design, and who is one of a plurality of users, uniquely designs a part of a product with the help of a predetermined product design program and part design data that are provided by said product vendor, and said product vendor manufactures a part of the unique design and supplies the part to said user who wants to design, said design-for-product processing method comprising:
a determining step at which said product vendor prompts said user who wants to design to determine whether said user will place an order with said product vendor for a part of the unique design;
a determining step at which said product vendor prompts said user who wants to design to determine whether said user will have a part of the unique design sold on commission by said product vendor; and
a determining step at which said product vendor prompts said user who wants to design to determine whether said user will have a part of the unique design auctioned by said product vendor.

89. A design-for-wristwatch processing method according to Claim 78 or 79, further comprising a step at which said watch vendor prompts said user who wants to design to select a virtual part, which expresses a part being sold on commission, in the course of uniquely designing a wristwatch.

90. A design-for-wristwatch processing method according to Claim 78 or 79, further comprising a step at which said watch vendor prompts said user who wants to design to select a virtual part, which expresses a part sold on commission and purchased by said user who wants to design, in the course of uniquely designing a wristwatch.

91. A design-for-wristwatch processing method according to Claim 78 or 79, further comprising a step at which said watch vendor prompts said user to select a virtual part, which expresses a part purchased at an auction, in the course of uniquely designing a wristwatch.

92. A design-for-wristwatch processing method according to Claim 78 or 79, further comprising a step at which said watch vendor encourages any user, other than said user who wants to design, to purchase a virtual part, which said user has employed in designing a wristwatch, in a wristwatch-of-unique design consignment sale screen image.

93. A design-for-wristwatch processing method according to Claim 78 or 79, further comprising a step at which, if virtual parts expressing parts being sold on commission or auctioned are contained in a plurality of pages that are indexed in a home page, when a user views the pages, the pages are opened at random according to a table of random numbers.

94. A design-for-wristwatch processing method according to Claim 78 or 79, further comprising a step at which said watch vendor sorts virtual wristwatches or virtual parts, which express wristwatches or parts being sold on commission, in descending order of an ordered quantity.

95. A design-for-wristwatch processing method according to Claim 78 or 79, further comprising a step at which said watch vendor determines or extends a period during which virtual wristwatches or virtual parts expressing wristwatches or parts being sold on commission are listed in pages on the Internet.

96. A design-for-product processing method comprising:
a step at which a user is prompted to provide a product vendor with a product of a unique design, which said user has created using a computer, over an information communicating means; and
a step at which the product of the unique design provided by said user is listed in a consignment sale screen image which a server at said product vendor distributes to other users over said information communicating means, and the other users are encouraged to place an order for the product of the unique design.

97. A design-for-product processing method comprising:
a step at which a user is prompted to provide a product vendor with a product of a unique design, which said user has created using a computer, over an information communicating means; and
a step at which the product of the unique design provided by said user is listed in an auction screen image which a server installed at said product vendor distributes to the other users over said information communicating means, and the other users are encouraged to bid for a product of the unique design.

98. A design-for-product processing method according to Claim 96 or 97, further comprising a step at which said product vendor provides a user with a program, which assists in uniquely designing a product, over said information communicating means.

99. A design-for-product processing method according to Claim 96 or 97, further comprising a step at which said product vendor provides a user with data required for uniquely designing a product over said information communicating means.

100. A design-for-product processing method according to Claim 96, further comprising:
a step at which when any other user places an order for a product of the unique design, said product vendor actually manufactures the product of the unique design; and
a step at which said product vendor sells the actually manufactured product to any other user.

101. A design-for-product processing method according to Claim 97, further comprising:
a step at which when any other user successfully bids for a product of the unique design, said product vendor actually manufactures the product of the unique design; and
a step at which said product vendor sells the actually manufactured product to any other user.

102. A design-for-product processing method according to any of Claims 96 to 101, wherein the product of the user-created unique design is a part of a unique design that serves as a part of the product.

103. A design-for-product processing method according to any of Claims 96 to 101, wherein the product of the unique design is a wristwatch of a unique design.

104. A design-for-product processing method according to Claim 102 or 103, wherein the product of the unique design is a part of a unique design serving as a part of a wristwatch of a unique design.

105. A design-for-product processing method according to which a plurality of users is connected to a product vendor over an information communicating means, a user who wants to design and who is one of a plurality of users uniquely designs a product with the help of a predetermined product design program and part design data that are provided by said product vendor, and said product vendor manufactures a product of the unique design and supplies the product to said user who wants to design, said design-for-product processing method comprising:
a step at which at least one of a decorative inscription and a function inscription that are disposed on the surface of a product manufactured at said manufacturing step is formed according to an ink-jet printing technique.

106. A design-for-product processing method according to which a plurality of users is connected to a product vendor over an information communicating means, a user who wants to design and who is one of a plurality of users uniquely designs a product with the help of a predetermined product design program and part design data that are provided by said product vendor, and said product vendor manufactures a product of the unique design and supplies the product to said user who wants to design, said design-for-product processing method comprising:
a step at which at least one of a decorative inscription and a functional inscription that are disposed on the surface of a product manufactured at said manufacturing step is formed on a separate member, and the separate member is fixed to the surface of the manufactured product.
